(19) Europäisches Patentamt
European Patent Office
Office européen des brevets

(11) EP 1 911 721 A1

(12) EUROPEAN PATENT APPLICATION
published in accordance with Art. 153(4) EPC

(43) Date of publication:
**16.04.2008 Bulletin 2008/16**

(21) Application number: **06780853.5**

(22) Date of filing: **30.06.2006**

(51) Int Cl.:
***C01B 3/22*** *(2006.01)* ***H01M 8/06*** *(2006.01)*

(86) International application number:
**PCT/JP2006/313528**

(87) International publication number:
**WO 2007/004714 (11.01.2007 Gazette 2007/02)**

(84) Designated Contracting States:
**DE FR GB**

(30) Priority: **30.06.2005 JP 2005192175**
**13.12.2005 JP 2005359437**

(71) Applicant: **GS Yuasa Corporation**
**Kyoto-shi, Kyoto 601-8520 (JP)**

(72) Inventors:
- **OKUYAMA, Ryoichi**
**c/o GS Yuasa Corporation**
**Kyoto-shi, Kyoto; 6018520 (JP)**
- **YAMAMOTO, Yoshihiro**
**c/o GS Yuasa Corporation**
**Kyoto-shi, Kyoto; 6018520 (JP)**
- **ASHIDA, Katsuji**
**Takatsuki-shi**
**Osaka 5690036 (JP)**

(74) Representative: **Vossius & Partner**
**Siebertstrasse 4**
**81675 München (DE)**

# (54) HYDROGEN PRODUCTION APPARATUS

(57) A hydrogen generating device can decompose fuel containing an organic compound at low temperature to generate hydrogen-containing gas that scarcely contains nitrogen and carbon monoxide without providing electric energy from outside or by providing only a small amount of electric energy from outside.

The hydrogen generating device for generating hydrogen-containing gas by decomposing fuel containing an organic compound is **characterized by** comprising a hydrogen generating cell (10) formed by sandwiching a bonded assembly including a partition membrane (11), a fuel electrode (12) arranged on one of the surfaces of the partition membrane (11) and an oxidizing electrode (14) arranged on the other surface of the partition membrane (11) between a fuel electrode separator provided with a channel groove (13) for flowing fuel containing an organic compound and water to the fuel electrode (12) and an oxidizing electrode separator provided with a channel groove (15) for flowing an oxidizing agent to the oxidizing electrode (14), a means (16) for supplying fuel containing the organic compound and water to the fuel electrode (12), a means (17) for supplying an oxidizing agent to the oxidizing electrode (14) and a means (23) for generating and collecting the gas containing hydrogen from the fuel electrode (12). The hydrogen generating device may be (a) an open circuit that does not withdraw electric energy to outside from the hydrogen generating cell (10) of the hydrogen generating device and does not provide electric energy from outside to the hydrogen generating cell, (b) a device adapted to withdraw electric energy to outside with the fuel electrode (12) and the oxidizing electrode (14) respectively as negative electrode and positive electrode or (c) a device adapted to provide electric energy from outside with the fuel electrode (12) and the oxidizing electrode (14) respectively as cathode and anode.

Fig. 1

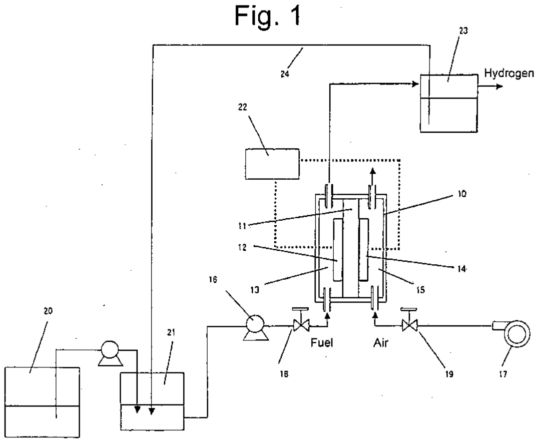


EP 1 911 721 A1

## Description

### Technical Field

The present invention relates to a hydrogen generating device for decomposing fuel that contains an organic compound and generating gas that contains hydrogen.

### Background Art

The importance of measures to be taken for solving environment problems and resource problems has been increasing in recent years. Efforts have actively been paid to develop fuel cells as one of such measures. Among fuel cells, phosphoric acid fuel cells (PAFCs) and proton exchange membrane fuel cells (PEFCs) require a reforming system for converting the raw material such as hydrocarbon or methanol into hydrogen in order to utilize hydrogen as fuel. Therefore, development of such reforming systems is an important technological challenge from the viewpoint of developing fuel cells.

Methanol, dimethyl ether (DME), ethanol, natural gas, propane and gasoline have been looked into from the viewpoint of reforming fuel of PEFCs for automobiles. Development of reforming systems for methanol has been advanced most because methanol provides the lowest reforming temperature among the above listed. Currently, three reforming methods including steam reforming, partial oxidation reforming and a combination of them are adopted (see Non-Patent Document 1).

Non-Patent Document 1: "Development and Practical Applications of Proton Exchange Membrane Fuel cells", pp. 141-166, May 28, 1999, Technical Information Institute Co. Ltd.

steam reforming is expressed by the reaction formula of $CH_3OH + X_2O \rightarrow CO_2 + 3H_2$, which is an endothermic reaction, and the reforming temperature thereof is 200 to 300°C.

Partial oxidation reforming is expressed by the reaction formula of $CH_3OH + 1/2O_2 + 2N_2 \rightarrow CO_2 + 2H_2 + 2N_2$, which is an exothermic reaction, and the reforming temperature thereof is 200 to 600°C when air is used as oxidation gas.

Combination reforming (typical example) is expressed by the reaction formula of $CH_3OH + 1/3O_2 + 4/3N_2 + 1/3H_2O \rightarrow CO_2 + 7/3H_2 + 4/3N_2$ when air is used as oxidation gas and the emitted heat is about one third of partial oxidation. The reforming temperature of combination reforming is 400 to 600°C.

There is known an invention providing a hydrogen generating device showing a high thermal efficiency that is adapted to generate hydrogen to be supplied to hydrogen utilizing equipment such as fuel cells, using hydrocarbon fuel such as natural gas, LPG, gasoline, naphtha or kerosene and water as starting materials (see Patent Document 1). A hydrogen generating device according to the above-cited Document "has at least a supply section that supplies hydrocarbon fuel, a combustion section that combusts the supplied fuel, a water supply section, a gas mixing section that mixes the supplied fuel and water or steam to generate gas to be reformed and a reforming section filled with a reforming catalyst, and generates reformed gas containing hydrogen from the gas to be reformed under the catalyzing effect of the reforming catalyst, the device being adapted to directly heat at least the gas mixing section and the reforming section by way of a partition wall by a means of combustion exhaust gas generated by the combusting section". Thus, the reforming temperature of the above-cited device is as high as about 700°C.

Patent Document 1: JP-B-3473900 (Claim 1, paragraphs [0001], [0017], [0022])

Thus, with any of the above reforming methods, the reforming process has to be conducted at high temperature that is 200°C or higher for the purpose of generating hydrogen. Therefore, these methods are accompanied by problems including poisoning of the reforming catalyst, elimination of CO contained in the reformed gas (containing hydrogen) and intrusion of nitrogen from air into the reformed gas when the partial oxidation reforming method or the combined method is employed.

Meanwhile, methods and apparatus for generating hydrogen by way of an electrochemical reaction are known for decomposing fuel that contains an organic compound and generating hydrogen-containing gas. Fuel cells realized by using hydrogen generated by way of such an electrochemical reaction are also known (see Patent Documents 2 through 5).

Patent Document 2: JP-B-3328993

Patent Document 3: JP-B-3360349

Patent Document 4: U. S. Patent No. 6,299,744 specification, U. S. Patent No. 6,368,492 Specification, U. S Patent No. 6,432,284 Specification, U. S. Patent No. 6,533,919 Specification, U. S.

Patent Publication No. 2003/0226763

Patent Document 5: JP-A-2001-297779

Patent Document 2 describes an invention of "a hydrogen generating method characterized by arranging a pair of electrodes on the opposite surfaces of a cation exchange membrane, bringing fuel containing at least methanol and water into contact with the electrode containing a catalyst and arranged on one of the opposite surfaces, progressing

a reaction of generating hydrogen ions from the methanol and water on the electrode by applying a voltage to the pair of electrodes and taking out electrons from the electrode and transforming the generated hydrogen ions into hydrogen molecules by supplying electrons at the electrode arranged on the other one of the opposite surfaces of the cation exchange membrane" (Claim 1) and also indicates that a reaction of $CH_3OH + 2H_2O \rightarrow CO_2 + 6e^- + 6H^+$ is progressed at the fuel electrode by supplying water or steam with methanol that is fuel to the fuel electrode and applying a voltage by way of an external circuit so as to pull out electrons from the fuel electrode and the generated hydrogen ions are made to pass through the cation exchange membrane so that hydrogen is selectively generated by $6H^+ + 6e^- \rightarrow 3H_2$ at the opposite electrode side (paragraphs [0033] through [0038]). Patent Document 3 describes a fuel cell that utilizes hydrogen generated by such a method (paragraphs [0052] through [0056]).

While hydrogen can be generated at low temperature according to the inventions described in Patent Documents 2 and 3 (paragraph [0042] of Patent Document 2, paragraph [0080] of Patent Document 3), a voltage needs to be applied in order to generate hydrogen, and hydrogen is generated at the opposite electrode relative to the fuel electrode but no oxidizing agent is supplied to the opposite electrode. Therefore, these inventions clearly differ from a hydrogen generating device according to the present invention.

According to the invention described in Patent Document 4, protons generated at anode 112 that operates as fuel electrode are driven to penetrate through a partition membrane 110 and generate hydrogen at a cathode 114 that is the opposite electrode. Thus, a voltage is applied from a DC power source 120 to the fuel electrode that operates as anode and the opposite electrode that operates as cathode in order to electrolyze fuel of an organic compound such as methanol. Hydrogen is generated at the opposite electrode relative to the fuel electrode and no oxidizing agent is supplied to the opposite electrode. Therefore, the invention of Patent Document 4 clearly differs from a hydrogen generating device according to the present invention.

Patent Document 5 describes a fuel cell system in which a hydrogen generating electrode for generating hydrogen is arranged (Claim 1). Patent Document 5 describes that "as liquid fuel containing alcohol and water is supplied to a porous electrode (fuel electrode) 1 while air is supplied to a gas diffusion electrode (oxidizing agent-applied electrode) at the opposite side and a load is connected between the terminal of the porous electrode 1 and the gas diffusion electrode 2, an electric connection is established to apply a positive potential from the gas diffusion electrode 2 that is the positive electrode of MEA2 having the function of an ordinary fuel cell to the porous electrode 1 by way the load. Then, as a result, alcohol reacts with water to generate carbon dioxide gas and hydrogen ions and the generated hydrogen ions move to the central gas diffusion electrode 6 by way of an electrolyte layer 5 to generate hydrogen gas. An electrode reaction takes place along the interface of the gas diffusion electrode 6 and another electrolyte layer 7 and the generated hydrogen gas becomes hydrogen ion once again and moves through the electrolyte layer 7 to get to the gas diffusion electrode 2. Then, the hydrogen ions react with oxygen in air at the gas diffusion electrode 2 to generate water" (paragraph [0007]). Therefore, the invention of Patent Document 5 is similar to the inventions of Patent Documents 2 through 5 in that hydrogen is generated at a hydrogen generation electrode (gas diffusion electrode 6) by using electric energy generated by a fuel cell and supplied to the fuel cell and the hydrogen is generated at the opposite electrode side relative to the fuel electrode.

There are also known inventions of methods of using a reaction apparatus that is provided with a partition membrane where an anode (electrode A) and a cathode (electrode B) are formed by way of a proton conducting membrane (ion conductor) and oxidizing alcohol (methanol) while applying or not applying a voltage to the electrodes or withdrawing electric energy (see Patent Documents 6 and 7). Both of these inventions relate to a process of oxidizing alcohol by a means of an electrochemical cell (to generate carbonic acid diester, formalin, methyl formate, dimethoxymethane, etc.) and not to a process of generating hydrogen that is a reduction product as viewed from alcohol.

Patent Document 6: JP-A-06-73582 (Claims 1 through 3, paragraph [0050])

Patent Document 7: JP-A-06-73583 (Claims 1, 8, paragraphs [0006], [0019])

Furthermore, Non-Patent Documents 2 and 3 relate to a direct methanol fuel cell (DMFC) and shows that a cell reaction and an electrolytic reaction, coexist in a single cell under a condition of an open circuit and being devoid of oxygen and a reaction of $CH_3OH + H_2O \rightarrow CO_2 + 6H^+ + 6e^-$ takes place at the oxidizing electrode, while a reaction of $6H^+ + 6e^- \rightarrow 3H_2$ takes place at the fuel electrode so that hydrogen is generated at the fuel electrode side. The paper of Non-Patent Document 2 concludes that "generation of hydrogen not only reduces the power output of a cell in operation but also continuously consumes fuel under a condition of an open circuit so that it is important to sufficiently and continuously supply oxygen to the cathode on a stable basis regardless if the DMFC is in operation or in a standby status." The paper of Non-Patent Document 3 concludes that "it is necessary to pay attention to the accumulation of hydrogen that is caused to take place by shut downs and start ups of the system of a DMFC having a large MEA area". Therefore, both of the documents do not intend to generate hydrogen.

Non-Patent Document 2: Electrochemical and solid-state Letters, 8 (1) A52-A54 (2005)

Non-Patent Document 3: Electrochemical and Solid-State Letters, 8 (4) A211-A214 (2005)

## Disclosure of the Invention

### Problem to be Solved by the invention

In view of the above-identified problems, it is there the object of the present invention to provide a hydrogen generating device that can decompose fuel containing an organic compound at low temperature to generate hydrogen-containing gas that scarcely contains nitrogen and carbon monoxide (CO) without externally supplying electric energy or by externally supplying only a small amount of electric energy.

### Means for Solving the Problem

According to the present invention, the above-identified problem can be solved by providing the following.

(1) A hydrogen generating device for generating gas containing hydrogen by decomposing fuel containing an organic compound, characterized by comprising: a hydrogen generating cell formed by sandwiching a bonded assembly including a partition membrane, a fuel electrode arranged on one of the surfaces of the partition membrane and an oxidizing electrode arranged on the other surface of the partition membrane between a fuel electrode separator provided with a channel groove for flowing fuel containing an organic compound and water to the fuel electrode and an oxidizing electrode separator provided with a channel groove for flowing an oxidizing agent to the oxidizing electrode; a means for supplying fuel containing the organic compound and water to the fuel electrode; a means for supplying an oxidizing agent to the oxidizing electrode; and a means for generating and collecting the gas containing hydrogen from the fuel electrode.

(2) The hydrogen generating device as defined in (1) above, characterized in that the channel groove of the fuel electrode separator and the channel groove of oxidizing electrode separator are provided with displacement such that the channel groove of the fuel electrode separator is opposed to a ridge portion other than the channel groove of the oxidizing electrode separator at least partially.

(3) The hydrogen generating device as defined in (1) above, characterized in that a flow channel is provided to the fuel electrode for flowing fuel containing the organic compound and water without using the fuel electrode separator instead of the fuel electrode separator provided with the channel groove for flowing fuel containing the organic compound and water to the fuel electrode.

(4) The hydrogen generating device as defined in any one of (1) through (3) above, characterized in that the device is an open circuit that has neither means for withdrawing electric energy to outside from the hydrogen generating cell of the hydrogen generating device, nor means for providing electric energy from outside to the hydrogen generating cell.

(5) The hydrogen generating device as defined in any one of (1) through (3) above, characterized by comprising a means for withdrawing electric energy to outside with the fuel electrode and the oxidizing electrode as negative electrode and positive electrode respectively.

(6) The hydrogen generating device as defined in any one of (1) through (3) above, characterized by comprising a means for providing electric energy from outside with the fuel electrode and the oxidizing electrode as cathode and anode respectively.

(7) The hydrogen generating device as defined in any one of (1) through (3) above, characterized in that the voltage between the fuel electrode and the oxidizing electrode is 200 to 1,000 mV.

(8) The hydrogen generating device as defined in (4) above, characterized in that the voltage between the fuel electrode and the oxidizing electrode is 300 to 800 mV.

(9) The hydrogen generating device as defined in (5) above, characterized in that the voltage between the fuel electrode and the oxidizing electrode is 200 to 600 mV.

(10) The hydrogen generating device as defined in (5) or (9) above, characterized in that the voltage between the fuel electrode and the oxidizing electrode and/or the evolution volume of hydrogen-containing gas are/is adjusted by varying the volume of electric energy that is withdrawn.

(11) The hydrogen generating device as defined in (6) above, characterized in that the voltage between the fuel electrode and the oxidizing electrode is 300 to 1,000 mV.

(12) The hydrogen generating device as defined in (6) or (11) above, characterized in that the voltage between the fuel electrode and the oxidizing electrode and/or the evolution volume of hydrogen-containing gas are/is adjusted by varying the volume of electric energy that is provided.

(13) The hydrogen generating device as defined in any one of (1) through (12) above, characterized in that the evolution volume of hydrogen-containing gas is adjusted by varying the voltage between the fuel electrode and the oxidizing electrode.

(14) The hydrogen generating device as defined in any one of (1) through (13) above, characterized in that the

voltage between the fuel electrode and the oxidizing electrode and/or the evolution volume of hydrogen-containing gas are/is adjusted by varying the supply volume of the oxidizing agent.

(15) The hydrogen generating device as defined in any one of (1) through (14) above, characterized in that the voltage between the fuel electrode and the oxidizing electrode and/or the evolution volume of hydrogen-containing gas are/is adjusted by varying the concentration of the oxidizing agent.

(16) The hydrogen generating device as defined in any one of (1) through (15) above, characterized in that the voltage between the fuel electrode and the oxidizing electrode and/or the evolution volume of hydrogen-containing gas are/is adjusted by varying the supply volume of fuel containing an organic compound and water.

(17) The hydrogen generating device as defined in any one of (1) through (16) above, characterized in that the voltage between the fuel electrode and the oxidizing electrode and/or the evolution volume of hydrogen-containing gas are/is adjusted by varying the concentration of fuel containing an organic compound and water.

(18) The hydrogen generating device as defined in any one of (1) through (17) above, characterized in that the operation temperature of the hydrogen generating device is not higher than 100°C.

(19) The hydrogen generating device as defined in (18) above, characterized in that the operation temperature is between 30 to 90°C.

(20) The hydrogen generating device as defined in any one of (1) through (19) above, characterized in that the organic compound supplied to the fuel electrode is one or two or more organic compounds selected from a group consisting of alcohol, aldehyde, carboxyl acid and ether.

(21) The hydrogen generating device as defined in (20) above, characterized in that the alcohol is methanol.

(22) The hydrogen generating device as defined in any one of (1) through (21) above, characterized in that the oxidizing agent is oxygen-containing gas or oxygen.

(23) The hydrogen generating device as defined in any one of (1) through (21) above, characterized in that the oxidizing agent is liquid containing hydrogen peroxide.

(24) The hydrogen generating device as defined in any one of (1) through (23) above, characterized in that the partition membrane is a proton conducting solid electrolyte membrane.

(25) The hydrogen generating device as defined in (24) above, characterized in that the proton conducting solid electrolyte membrane is perfluorocarbon sulfonata-based solid electrolyte membrane.

(26) The hydrogen generating device as defined in any one of (1) through (25) above, characterized in that a catalyst of the fuel electrode is made of platinum-ruthenium alloy supported by carbon powder.

(27) The hydrogen generating device as defined in any one of (1) through (26) above, characterized in that a catalyst of the oxidizing electrode is made of platinum supported by carbon powder.

(28) The hydrogen generating device as defined in any one of (1) through (27) above, characterized by further comprising a means for circulating fuel containing an organic compound and water.

(29) The hydrogen generating device as defined in any one of (1) through (28) above, characterized by further comprising a carbon dioxide absorbing portion for absorbing carbon dioxide contained in the hydrogen-containing gas.

Note that a hydrogen generating device as defined in any of (4) through (6) above has a means for supplying fuel and an oxidizing agent to the hydrogen generating cell constituting the hydrogen generating device and the means may be a pump or a blower. Additionally, the hydrogen generating device as defined in (5) above has a discharge control means for withdrawing electric energy from the hydrogen generating cell and the hydrogen generating device as defined in (6) has an electrolytic means for providing electric energy to the hydrogen generating cell. On the other hand, the hydrogen generating device as defined in (4) above is an open circuit that has neither discharge control means for withdrawing electric energy from the hydrogen generating cell nor electrolytic means for providing electric energy to the hydrogen generating cell. The hydrogen generating device as defined in any of (1) through (3) above includes a hydrogen generating device as defined in any of (4) through (6) above. Such a hydrogen generating device may have a functional feature of monitoring the voltage of the hydrogen generating cell (the open circuit voltage or the operating voltage) and/or the evolution volume of of hydrogen-containing gas and controlling the supply volume or the concentration of fuel, the supply volume or the concentration of the oxidizing agent and the electric energy to be withdrawn (in the case of (5) above) or to be provided (in the case of (6) above).

## Advantages of the Invention

When the hydrogen generating device according to the present invention is adopted, fuel can be reformed at a temperature not higher than 100°C, that is by far lower than the conventional reforming temperature so that the energy required for reforming can be reduced and the rate at which nitrogen in air intrudes into the generated hydrogen-containing gas can be nil or minimized. Additionally, since the generated hydragen-containing gas does not contain CO at all, the produced gas shows a relatively high hydrogen concentration and provides an advantage that a CO eliminating step is

not necessary.

Additionally, the hydrogen generating device according to the present invention can generate hydrogen without externally supplying electric energy to the hydrogen generating cell. However, the hydrogen generating device can generate hydrogen if the apparatus has a means for withdrawing electric energy or a means for providing electric energy from outside.

When the hydrogen generating device according to the present invention has a means for withdrawing electric energy, the withdrawn electric energy can be utilized to drive a pump or a blower and/or some other auxiliary machine or machines to provide a remarkable advantage from the viewpoint of effective utilisation of energy.

Similarly, when the hydrogen generating device according to the present invention has a means for providing electric energy from outside, the apparatus provides an advantage that the apparatus can generate hydrogen more than the provided electric energy if electric energy is externally supplied to the hydrogen generating cell at a small rate.

In either case, the present invention enables process control by monitoring the voltage of the hydrogen generating cell and/or the rate of generation of hydrogen-containing gas and hence can down-size the hydrogen generating device to reduce the cost of the apparatus.

**Brief Description, of the Drawings**

FIG. 1 is a schematic illustration of an example of hydrogen generating device according to the present invention;

FIG. 2 is a schematic diagram of a hydrogen generating cell (requiring no supply of electric energy from outside) described in Example 1;

FIG. 3 shows a graph for indicating relationship between the flow rate of air and the rate of hydrogen evolution when temperature is varied (30 to 70°C) (hydrogen generating example 1-1);

FIG. 4 shows a graph for indicating relationship between the open-circuit voltage and the rate of hydrogen evolution when temperature is varied (30 to 70°C) (hydrogen generating example 1-1);

FIG. 5 shows a graph for indicating relations of the rate of hydrogen evolution and open-circuit voltage with the flow rate of air when the flow rate of fuel is varied (temperature being kept at 70°C) (hydrogen generating example 1-2);

FIG. 6 shows a graph for indicating relation of the rate of hydrogen evolution with the open-circuit voltage when the flow rate of fuel is varied (temperature being kept at 70°C) (hydrogen generating example 1-2);

FIG. 7 shows a graph for indicating relations of the rate of hydrogen evolution and open-circuit voltage with the flow rate of air when the concentration of fuel is varied (temperature being kept at 70°C) (hydrogen generating example 1-3);

FIG. 8 shows a graph for indicating relation of the rate of hydrogen evolution with the open-circuit voltage when the concentration of fuel is varied (temperature being kept at 70°C) (hydrogen generating example 1-3);

FIG. 9 shows a graph for indicating relations of the rate of hydrogen evolution and open-circuit voltage with the flow rate of air when the thickness of electrolyte membrane is varied (hydrogen generating example 1-4);

FIG. 10 shows a graph for indicating relation of the rate of hydrogen evolution with the open-circuit voltage when the thickness of electrolyte membrane is varied (hydrogen, generating example 1-4);

FIG. 11 shows a graph for indicating relations of the rate of hydrogen evolution and open-circuit voltage with the flow rate of air when the temperature is varied (30 to 90°C) (hydrogen generating example 1-5);

FIG. 12 shows a graph for indicating relation of the rate of hydrogen evolution with the open-circuit voltage when the temperature is varied (30 to 90°C) (hydrogen generating example 1-5);

FIG. 13 shows a graph for indicating relations of the rate of hydrogen evolution and open-circuit voltage with the flow rate of air when the flow rate of fuel is varied (temperature: 50°C) (hydrogen generating example 1-6);

FIG. 14 shows a graph for indicating relation of the rate of hydrogen evolution with the open-circuit voltage when the flow rate of fuel is varied (temperature: 50°C) (hydrogen generating example 1-6);

FIG. 15 shows a graph for indicating relations of the rate of hydrogen evolution and open-circuit voltage with the flow rate of air when the concentration of fuel is varied (temperature: 50°C) (hydrogen generating example 1-7);

FIG. 16 shows a graph for indicating relation of the rate of hydrogen evolution with the open-circuit voltage when the concentration of fuel is varied (temperature: 50°C)(hydrogen generating example 1-7);

FIG. 17 shows a graph for indicating relations of the rate of hydrogen evolution and open-circuit voltage with the flow rate of oxidizing gas when the concentration of oxygen is varied (temperature: 50°C) (hydrogen generating example 1-8);

FIG. 18 shows a graph for indicating relation of the rate of hydrogen evolution with the open-circuit voltage when the concentration of oxygen is varied (temperature: 50°C) (hydrogen generating example 1-8);

FIG. 19 shows a graph for indicating relations of the rate of hydrogen evolution and open-circuit voltage with the flow rate of $H_2O_2$ when the temperature is varied (30 to 90°C) (hydrogen generating example 1-10);

FIG. 20 shows a graph for indicating relation of the rate of hydrogen evolution (oxidizing agent: $H_2O_2$) with the open-circuit voltage when the temperature is varied (30 to 90°C) (hydrogen generating example 1-10);
FIG. 21 is a schematic diagram of a hydrogen generating cell (with a means for withdrawing electric energy) described in Example 2;
FIG. 22 shows a graph for indicating relation of the operation voltage (discharging: temperature at 50°C) with the current density withdrawn when the flow rate of air is varied (hydrogen generating example 2-1);
FIG. 23 shows a graph for indicating relation of the rate of hydrogen evolution (discharging: temperature at 50°C) with the operation voltage when the flow rate of air is varied (hydrogen generating example 2-1);
FIG. 24 shows a graph for indicating relation of the operation voltage (discharging: temperature at 30°C) with the current density withdrawn when the flow rate of air is varied (hydrogen generating example 2-2);
FIG. 25 shows a graph for indicating relation of the rate of hydrogen evolution (discharging: temperature at 30°C) with the operation voltage when the flow rate of air is varied (hydrogen generating example 2-2);
FIG. 26 shows a graph for indicating relation of the operation voltage (discharging: temperature at 70°C) with the current density withdrawn when the flow rate of air is varied (hydrogen generating example 2-3);
FIG. 27 shows a graph for indicating relation of the rate of hydrogen evolution (discharging: temperature at 70°C) with the operation voltage when the flow rate of air is varied (hydrogen generating example 2-3);
FIG. 28 shows a graph for indicating relation of the operation voltage (discharging: temperature at 90°C) with the current density withdrawn when the flow rate of air is varied (hydrogen generating example 2-4);
FIG. 29 shows a graph for indicating relation of the rate of hydrogen evolution (discharging: temperature at 90°C) with the operation voltage when the flow rate of air is varied (hydrogen generating example 2-4);
FIG. 30 shows a graph for indicating relation of the operation voltage (discharging: flow rate of air at 50 ml/min) with the current density withdrawn when the temperature is varied;
FIG. 31 shows a graph for indicating relation of the rate of hydrogen evolution (discharging: flow rate of air at 50 ml/min) with the operation voltage when the temperature is varied;
FIG. 32 shows a graph for indicating relation of the operation voltage (discharging: flow rate of air at 100 ml/min) with the current density withdrawn when the temperature is varied;
FIG. 33 shows a graph for indicating relation of the rate of hydrogen evolution (discharging: flow rate of air at 100 ml/min) with the operation voltage when the temperature is varied;
FIG. 34 shows a graph for indicating relation of the operation voltage (discharging: temperature at 50°C) with the current density withdrawn when the flow rate of fuel is varied (hydrogen generating example 2-5);
FIG. 35 shows a graph for indicating relation of the rate of hydrogen evolution (discharging: temperature at 50°C) with the operation voltage when the flow rate of fuel is varied (hydrogen generating example 2-5);
FIG. 36 shows a graph for indicating relation of the operation voltage (discharging: temperature at 50°C) with the current density withdrawn when the concentration of fuel is varied (hydrogen generating example 2-6);
FIG.37 shows a graph for indicating relation of the rate of hydrogen evolution (discharging: temperature at 50°C) with the operation voltage when the concentration of fuel is varied (hydrogen generating example 2-6);
FIG. 38 shows a graph for indicating relation of the operation voltage (discharging: temperature at 50°C) with the current density withdrawn when the concentration of oxygen is varied (hydrogen generating example 2-7);
FIG. 39 shows a graph for indicating relation of the rate of hydrogen evolution (discharging: temperature at 50°C) with the operation voltage when the concentration of oxygen is varied (hydrogen generating example 2-7);
FIG. 40 shows a graph for indicating relation of the operation voltage (discharging: oxidizing agent of $H_2O_2$) with the current density withdrawn when the temperature is varied (hydrogen generating example 2-8);
FIG. 41 shows a graph for indicating relation of the rate of hydrogen evolution (discharging: oxidizing agent of $H_2O_2$) with the operation voltage when the temperature is varied (hydrogen generating example 2-8);
FIG. 42 is a schematic diagram of a hydrogen generating cell (with a means for providing external electric energy) described in Example 3;
FIG. 43 shows a graph for indicating relation of the rate of hydrogen evolution (charging: temperature at 50°C) with the current density applied when the flow rate of air is varied (hydrogen generating example 3-1);
FIG. 44 shows a graph for indicating relation of the rate of hydrogen evolution (charging: temperature at 50°C) with the operation voltage when the flow rate of air is varied (hydrogen generating example 3-1);
FIG. 45 shows a graph for indicating relation of the operation voltage (charging: temperature at 50°C) with the current density applied when the flow rate of air is varied (hydrogen generating example 3-1);
FIG. 46 shows a graph for indicating relation of the energy efficiency (charging: temperature at 50°C) with the operation voltage when the flow rate of air is varied (hydrogen generating example 3-1);
FIG. 47 shows a graph for indicating relation of the rate of hydrogen evolution (charging: temperature at 30°C) with the current density applied when the flow rate of air is varied (hydrogen generating example 3-2);
FIG. 48 shows a graph for indicating relation of the rate of hydrogen evolution (charging: temperature at 30°C) with the operation voltage when the flow rate of air is varied (hydrogen generating example 3-2);

FIG. 49 shows a graph for indicating relation of the energy efficiency (charging: temperature at 30°C) with the operation voltage when the flow rate of air is varied (hydrogen generating example 3-2);

FIG. 50 shows a graph for indicating relation of the rate of hydrogen evolution (charging: temperature at 70°C) with the current density applied when the flow rate of air is varied (hydrogen generating example 3-3);

FIG. 51 shows a graph for indicating relation of the rate of hydrogen evolution (charging: temperature at 70°C) with the operation voltage when the flow rate of air is varied (hydrogen generating example 3-3);

FIG. 52 shows a graph for indicating relation of the energy efficiency (charging: temperature at 70°C) with the operation voltage when the flow rate of air is varied (hydrogen generating example 3-3);

FIG. 53 shows a graph for indicating relation of the rate of hydrogen evolution (charging: temperature at 90°C) with the current density applied when the flow rate of air is varied (hydrogen generating example 3-4);

FIG. 54 shows a graph for indicating relation of the rate of hydrogen evolution (charging: temperature at 90°C) with the operation voltage when the flow rate of air is varied (hydrogen generating example 3-4);

FIG. 55 shows a graph for indicating relation of the energy efficiency (charging: temperature at 90°C) with the operation voltage when the flow rate of air is varied (hydrogen generating example 3-4);

FIG. 56 shows a graph for indicating relation of the rate of hydrogen evolution (charging: flow rate of air at 50 ml/min) with the current density applied when the temperature is varied;

FIG. 57 shows a graph for indicating relation of the rate of hydrogen evolution (charging: flow rate of air at 50 ml/min) with the operation voltage when the temperature is varied;

FIG. 58 shows a graph for indicating relation of the energy efficiency (charging: flow rate of air at 50 ml/min) with the operation voltage when the temperature is varied;

FIG. 59 shows a graph for indicating relation of the rate of hydrogen evolution (charging: temperature at 50°C) with the current density applied when the flow rate of fuel is varied (hydrogen generating example 3-5);

FIG. 60 shows a graph for indicating relation of the rate of hydrogen evolution (charging: temperature at 50°C) with the operation voltage when the flow rate of fuel is varied (hydrogen generating example 3-5);

FIG. 61 shows a graph for indicating relation of the energy efficiency (charging: temperature at 50°C) with the operation voltage when the flow rate of fuel is varied (hydrogen generating example 3-5);

FIG. 62 shows a graph for indicating relation of the rate of hydrogen evolution (charging: temperature at 50°C) with the current density applied when the concentration of fuel is varied (hydrogen generating example 3-6);

FIG. 63 shows a graph for indicating relation of the rate of hydrogen evolution (charging: temperature at 50°C) with the operation voltage when the concentration of fuel is varied (hydrogen generating example 3-6);

FIG. 64 shows a graph for indicating relation of the energy efficiency (charging: temperature at 50°C) with the operation voltage when the concentration of fuel is varied (hydrogen generating example 3-6);

FIG. 65 shows a graph for indicating relation of the rate of hydrogen evolution (charging: temperature at 50°C) with the current density applied when the concentration of oxygen is varied (hydrogen generating example 3-7);

FIG. 66 shows a graph for indicating relation of the rate of hydrogen evolution (charging: temperature at 50°C) with the operation voltage when the concentration of oxygen is varied (hydrogen generating example 3-7);

FIG. 67 shows a graph for indicating relation of the energy efficiency (charging: temperature at 50°C) with the operation voltage when the concentration of oxygen is varied (hydrogen generating example 3-7);

FIG. 68 shows a graph for indicating relation of the rate of hydrogen evolution (charging: oxidizing agent of $H_2O_2$) with the current density applied when the temperature is varied (hydrogen generating example 3-8);

FIG. 69 shows a graph for indicating relation of the rate of hydrogen evolution (charging: oxidizing agent of $H_2O_2$) with the operation voltage when the temperature is varied (hydrogen generating example 3-8);

FIG. 70 shows a graph for indicating relation of the energy efficiency (charging: oxidizing agent of $H_2O_2$) with the operation voltage when the temperature is varied (hydrogen generating example 3-8);

FIG. 71 is a graph for indicating relation of the air flow rate and the rate of hydrogen evolution (open circuit: temperature at 50°C) (Example 8);

FIG. 72 is a graph for indicating relation of the open voltage and the rate of hydrogen evolution (open circuit: temperature at 50°C) (Example 8);

FIG. 73 is a graph for indicating relation of the air flow rate and the rate of hydrogen evolution (open circuit: no fuel electrode separator) (Example 9); and

FIG. 74 is a graph for indicating relation of the open voltage and the rate of hydrogen evolution (open circuit: no fuel electrode separator) (Example 9).

**(Explanation of Reference Symbols)**

10: hydrogen generating cell

11: partition membrane
12: fuel electrode
13: channel groove for flowing fuel containing an organic compound and water (aqueous solution of methanol)
14: oxidizing electrode (air electrode)
15: channel groove for flowing an oxidizing agent (air)
16: fuel pump
17: air blower
18: fuel flow control valve
19: air flow control valve
20: fuel tank
21: fuel control vessel
22: voltage controller
23: gas/liquid separator
24: conduit

**Best Mode for Carrying out the Invention**

Now, the present invention will be described further by way of the best modes for carrying out the invention.
Note that the hydrogen generating device according to the present invention is basically novel and the embodiments that will be described hereinafter represent only some of the best modes of carrying out the invention and hence do not limit the present invention.
FIG. 1 is a schematic illustration of an example of the hydrogen generating device according to the present invention. The illustrated hydrogen generating device has a hydrogen generating cell (10) and one or more than one auxiliary machines for driving the hydrogen generating device.
As for the structure of the hydrogen generating cell (10), the cell has a partition membrane (11), a fuel electrode (12) arranged on one of the surfaces of the partition membrane (11) and an oxidizing electrode (14) arranged on the other surface of the partition membrane (11) and is provided with a channel groove (13) for flowing fuel containing an organic compound and water (aqueous solution of methanol) to the fuel electrode (12) and a channel groove (15) for flowing an oxidizing agent (air) to the oxidizing electrode (14).
Additionally, a fuel pump (16) for supplying aqueous solution of methanol to the fuel electrode (12) and an air blower (17) for supplying air to the oxidizing electrode (14) are provided as auxiliary machines for driving the hydrogen generating device.
The channel groove (13) for the fuel electrode is connected to the fuel pump (16) by way of a conduit with a fuel flow control valve (18) interposed between them, while the channel groove (15) for the oxidizing electrode is connected to the air blower (17) by way of a conduit with an air flow control valve (19) interposed between them.
Fuel (100% methanol) is stored in a fuel tank (20) and moved from the fuel tank to a fuel control vessel (21). Then, fuel is mixed with water in the fuel control vessel (21) and typically adjusted to a 3% aqueous solution of methanol before the fuel is supplied to the fuel electrode (12).
In the hydrogen generating device having the above-described configuration, as electric energy is supplied to the fuel pump (16) and the air blower (17) to drive them, aqueous solution of methanol is supplied by the fuel pump (16) from the fuel control vessel (21) to the fuel electrode (12) by way of the channel groove (13) when the fuel flow control valve (18) is opened, while air is supplied by the air blower (17) to the oxidizing electrode (14) by way of the channel groove (15) when the air flow control valve (19) is opened.
Then, as a result, reactions as will be described hereinafter take place respectively at the fuel electrode and the oxidizing electrode (air electrode) and hydrogen-containing gas is generated from the fuel electrode (12) side.
The rate of generation of hydrogen-containing gas can be adjusted by arranging a voltage controller (22) for monitoring the voltage (open circuit voltage or operation voltage) of the hydrogen generating cell (10) and controlling the rate of supply or the concentration of fuel, the rate of supply or the concentration of air and the electric energy to be withdrawn or to be provided.
The generated hydrogen-containing gas is sorted and separated into hydrogen-containing gas and unreacted aqueous solution of methanol by a gas/liquid separator and part or all of the unreacted aqueous solution of methanol is circulated by a circulation means having a conduit (24) for returning the part or all of the unreacted aqueous solution of methanol to the fuel control vessel (21) Water may be supplied from the outside of the system depending on the situation.
The hydrogen generating cell (10) in the hydrogen generating device of the present invention is basically composed of a partition membrane (11), a fuel electrode (12) provided on one surface of partition membrane (11) and an oxidizing electrode (14) provided on the other surface of partition membrane (11) as described above. The element configured as described above may be represented by an MEA (membrane/electrode assembly) used in a direct methanol fuel cell.

The method for fabricating an MEA is not limited to any specific one, but a method similar to a conventional one may be employed wherein a fuel electrode and an oxidizing electrode (air electrode) with a partition membrane inserted therebetween are compressed at a high temperature to be assembled.

The MEA fabricated as above is held between the fuel electrode separator provided with the channel groove (13) for flowing the fuel containing an organic compound and water to the fuel electrode and an oxidizing electrode separator provided with the channel groove (15) for flowing the oxidizing agent to the oxidising electrode so as to constitute the hydrogen generating cell.

In order that hydrogen can be generated easily, it is preferable that the channel grooves of the both are displaced from each other in provision so that the channel groove of the fuel electrode separator is opposed to the ridge portion other than the channel groove of the oxidizing electrode separator at least partially.

Also, the hydrogen generating cell may be constituted by providing a channel for flowing the fuel containing the organic compound and water to the fuel electrode without using the fuel electrode separator and combining only the oxidizing electrode separator with the MEA.

Suitable partition membranes may include a proton conducting solid electrolyte membrane which has been used as a polymer electrolyte membrane of a fuel cell. The proton conducting solid electrolyte membrane preferably includes a membrane based on perfluorocarbon sulfonate having sulfonic acid group such as Nation provided by Dupont.

The fuel electrode or oxidizing (air) electrode is preferably an electrode which is conductive and has a catalytic activity. Production of such an electrode may be achieved by providing a catalyst paste onto a gas diffusion layer and drying the paste, wherein the paste is comprised of a catalyst obtained by blending a precious metal with carbon powder serving as a base, a binding agent such as a PTFE resin, and an ion conductivity conferring substance such as Nafion solution.

The gas diffusion layer is preferably made of a carbon paper treated to be water-repellent.

The catalyst to be applied to fuel electrode is not limited to any specific one, but is preferably a platinum-ruthenium alloy supported by carbon powder serving as a base.

The catalyst applied to air electrode is not limited to any specific one, but is preferably platinum supported by carbon powder serving as a base.

For a hydrogen generating device configured as described above, when fuel containing an organic compound such as an aqueous solution of methanol is supplied to the fuel electrode, and an oxidizing agent such as air, oxygen or hydrogen peroxide is supplied to the oxidizing (air) electrode, gas containing hydrogen evolves on the fuel electrode under specified conditions.

The hydrogen generating method of the hydrogen generating device of the present invention are quite different from conventional hydrogen generating methods, and it is still difficult at present to explain the mechanism. The hypothesis which is currently thought most likely to be true will be described below, but it can not be denied that the hypothesis would be upset by new reactions which will shed new light to the phenomenon.

According to the hydrogen generating device of the present invention, hydrogen-containing gas evolves, at a temperature as low as 30 to 90°C, from the fuel electrode which receives the supply of methanol and water as will be described below. When no electric energy is supplied from outside to the hydrogen generating cell, gas containing hydrogen at 70 to 80% evolves, while when electric energy is supplied from outside to the cell, gas containing hydrogen at 80% or higher evolves. The evolution of gas depends on the open circuit voltage or operation voltage between the two electrodes. Base on these results, the most likely explanation of the mechanism underlying the evolution of hydrogen is as follows. For brevity, description will be given below on the premise that the cell is kept under circuit-open condition.

Let's assume for example that methanol is applied, as fuel, to a hydrogen generating device of the present invention. Firstly proton is likely to be generated on the fuel electrode by virtue of a catalyst, as is the case with a DMFC.

$$CH_3OH + H_2O \text{ --> } CO_2 + 6H^+ + 6e^- \qquad (1)$$

When Pt-Ru is used as a catalyst, methanol is adsorbed to the surface of Pt, and undergoes a series of electrochemical oxidization reactions as described below, resulting in the production of chemical species firmly adhered to the surface of the catalyst ultimately leading to reaction (1) described above, so it is contended ("Handbook of Electric Cell," Feb 20, 2001, p. 406, Maruzen, 3rd edition).

$$CH_3OH + Pt \text{ --> } Pt\text{-}(CH_3OH)ads$$

$$\text{--> } Pt\text{-}(CH_2OH)ads + H^+ + e^-$$

$$Pt\text{-}(CH_2OH)ads \text{ -->} Pt\text{-}(CHOH)ads + H^+ + e^-$$

Pt-(CHOH) ads --> Pt-(COH)ads + $H^+$ + $e^-$

Pt-(COH)ads --> Pt-(CO)ads + $H^+$ + $e^-$

To further oxidize Pt- (CO) ads, it is necessary to prepare (OH)ads from water.

Ru + $H_2O$ --> Ru-($H_2O$)ads

--> Ru-(OH)ads + $H^+$ + $e^-$

Ru-(OH) ads + Pt-(CO)ads --> Ru + Pt + $CO_2$ + $H^+$ + $e^-$

For a DMFC, $H^+$ (proton) generated on the fuel electrode as a result of the reaction represented by formula (1) migrates through a proton conducting solid electrolyte membrane to reach the oxidizing electrode where it reacts with oxygen-containing gas or oxygen supplied to the oxidizing electrode as represented by the following reaction formula.

$3/2O_2$ + $6H^+$ + $6e^-$ --> $3H_2O$ (2)

Since the hydrogen generating device of the present invention works under open-circuit condition, $e^-$ generated as a result of the reaction represented by formula (1) can not be supplied through an external-circuit to the oxidizing electrode. Therefore, for the reaction represented by formula (2) to occur, it is necessary to supply $e^-$ to the oxidizing electrode from a different reaction.

By the way, with regard to a DMFC using a proton conducting solid electrolyte membrane such as Nafion, there has been known a phenomenon called methanol crossover, that is, the crossover of methanol from the fuel electrode to the oxidizing electrode. Thus, it is possible that crossed methanol undergoes electrolytic oxidization represented by the following formula on the oxidizing electrode.

$CH_3OH$ + $H_2O$ --> $CO_2$ + $6H^+$ + $6e^-$ (3)

If the reaction represented by formula (3) occurs, $e^-$ produced as a result of the reaction is supplied to allow the reaction represented by formula (2) to occur there.

The $H^+$ (proton) produced as a result of the reaction represented by formula (3) migrates through the proton conducting solid electrolyte membrane to reach the fuel electrode to undergo there a reaction represented by the following formula to produce hydrogen.

$6H^+$ + $6e^-$ --> $3H_2$ (4)

In this sequence of reactions, the transfer of $H^+$ and $e^-$ produced as a result of the reaction represented by formula (1) on the fuel electrode to the oxidizing electrode and the transfer of $H^+$ and e- produced as a result of the reaction represented by formula (3) on the oxidizing electrode to the fuel electrode are likely to be apparently canceled out by each other.

Then, on the oxidizing electrode there arises reaction as represented by formula (2) based on $H^+$ and $e^-$ produced as a result of the reaction represented by formula (3), while on the fuel electrode there arises reaction as represented by formula (4) based on $H^+$ and $e^-$ produced as a result of the reaction represented by formula (1).

Assumed that reactions represented by formulas (1) and (4) occur on the fuel electrode while reactions represented by formulas (2) and (3) occur on the oxidizing electrode, the net balance of chemical reactions is likely to be expressed by the following formula (5).

$2CH_3OH$ + $2H_2O$ + $3/2O_2$ --> $2CO_2$ + $3H_2O$ + $3H_2$ (5)

The theoretical efficiency of this reaction is 59% (calorific value of 3 mol. hydrogen/calorific value of 2 mol. methanol) .

The standard electrode potential E0 of the reaction represented by formula (1) is E0 = 0.046 V, while the standard electrode potential E0 of the reaction represented by formula (4) is E0 = 0.0 V. Thus, if the two reactions are combined to form a cell, the electrode where the reaction of formula (1) will occur will serve as a positive electrode while the electrode where the reaction of formula (4) will occur will serve as a negative electrode. The reaction of formula (1)

will proceed in the direction opposite to the arrow represented direction. Similarly, the reaction of formula (4) will also proceed in the direction opposite to the arrow represented direction. Thus, the cell will not generate hydrogen.

For the cell to generate hydrogen, it is necessary to make both the reactions of formulas (1) and (4) proceed in the direction represented by the arrow. For this purpose, it is absolutely necessary to make the reaction of formula (1) occur on a negative electrode and the reaction of formula (4) on a positive electrode. If it is assumed that the entire area of fuel electrode is uniformly at a constant level, it is necessary to shift the methanol oxidizing potential to a lower level or to shift the hydrogen generating potential to a higher level.

However, if the entire area of fuel electrode is not at a constant potential level, reaction on the fuel electrode where methanol and water react to produce $H^+$ according to formula (1) and reaction on the oxidizing electrode where $H^+$ and $e^-$ react to produce hydrogen according to formula (4) are likely to proceed simultaneously.

As will be described later in relation to Example, a reaction system exposed to a higher temperature is more apt to generate hydrogen, and thus endothermic reactions (1) and (3) are likely to proceed in the arrow-indicated direction, being supplied heat from outside via other exothermic reactions.

Methanol not only undergoes reactions as represented by formulas (1) and (3), but is also subject, as a result of crossover, to the subsidiary reaction where methanol permeating from the fuel electrode is oxidized by oxygen on the surface of catalyst coated on the air electrode as represented by the following formula.

$$CH_3OH + 3/2O_2 \dashrightarrow CO_2 + 2H_2O \qquad (6)$$

Since the reaction of formula (6) is an exothermic reaction, heat generated by this reaction is most likely to be used to allow reactions represented by formulas (1) and (3) to occur.

With regard to a hydrogen generating device as described in Claim 4 of the present invention (open-circuit condition hereinafter), as apparent in relation to Example described later, supply of oxygen (air) is decreased, and when the open-circuit voltage is 300 to 800 mV, hydrogen evolves. However, this is probably because the oxidation of methanol permeated to air electrode as represented by formula (6) is suppressed, evolution reaction of $H^+$ as represented by formula (3) becomes dominant, and the $H^+$ undergoes reaction represented by formula (4) to produce hydrogen.

Also, in the embodiment which will be described later, the same structure as a typical direct methanol type fuel cell is used, and a channel groove for flowing an oxidizing agent (air) is provided at the oxidizing electrode (air electrode) separator. Thus, a large volume of air flows at the portion of the channel groove and the reactions in (2) and (6) are dominant. However, when the supply of air is reduced, air (oxygen) lacks at the portion other than the channel groove and the $H^+$ evolution reaction in the formula (3) is considered to be dominant.

With regard to a hydrogen generating device as described in Claim 5 of the present invention (discharging condition hereinafter), hydrogen is likely to be generated depending on the same mechanism as in the open-circuit condition. However, in contrast with the open-circuit condition, it is necessary with this system for $H^+$ corresponding in volume to discharge current to migrate from the fuel electrode to the oxidizing electrode in order to establish the neutralized electrical condition of the cell. Therefore, it is likely that reaction of formula (1) rather than reaction of formula (4) will occur on the fuel electrode while reaction of formula (2) rather than reaction of formula (3) will occur on the oxidizing electrode.

If discharge current becomes large (because of a large volume of $e^-$ being supplied to the oxidizing electrode), and if discharge voltage is lower than 200 mV, hydrogen will not evolve as will be described later in relation to Example. This is probably because the voltage is not so high as to permit the aqueous solution of methanol to be electrolyzed.

If a large volume of oxygen (air) is supplied or discharge voltage is higher than 600 mV, hydrogen will not evolve either. This is probably because methanol permeated to the air electrode is oxidized there according to the reaction shown in formula (6), instead of the $H^+$ evolution reaction shown in formula (3).

On the contrary, if supply of oxygen (air) is marginal, the discharge current will be reduced, and if discharge voltage (operation voltage) becomes 200 to 600 mV, hydrogen will still evolve. However, this is probably because the oxidation of methanol permeated to the air electrode as represented by formula (6) is suppressed, evolution reaction of $H^+$ as represented by formula (3) becomes dominant, and the $H^+$ undergoes reaction represented by formula (4) to produce hydrogen.

Even in the discharging condition, similarly to the open-circuit condition case, a large volume of air flows at the portion of the channel groove of the air electrode separator and the reactions in (2) and (6) becomes dominant, but when the supply of air is reduced, air (oxygen) lacks at the portion other than the channel groove and the $H^+$ evolution reaction in the formula (3) is considered to be dominant.

With regard to a hydrogen generating device as described in Claim 6 of the present invention (charging condition hereinafter), hydrogen is likely to be generated depending on the same mechanism as in the open-circuit condition. However, in contrast with the open-circuit condition, it is necessary with this system for $H^+$ corresponding in volume to electrolysis current to migrate from the oxidizing electrode to the fuel electrode in order to establish the neutralized electrical condition of the cell. Therefore, it is likely that reaction of formula (4) rather than reaction of formula (1) will

occur on the fuel electrode while reaction of formula (3) rather than reaction of formula (2) will occur on the oxidizing electrode.

To put it more specifically, with regard to the charging condition where the fuel electrode serves as cathode while the oxidizing electrode serves as anode, electric energy is supplied from outside ($e^-$ is supplied from outside to the fuel electrode) . Then, basically electrolysis occurs in the system. As electric energy supplied (voltage applied) is increased, more hydrogen will be produced. This is probably because as more $e^-$ is supplied from outside to the fuel electrode, oxidization of methanol represented by formula (3) and reaction represented by formula (4) ($6H^+ + 6e^-$ --> $3H_2$) will be more enhanced as will become apparent from the description given below in relation to Example.

However, as will be described later, if supply of oxygen (air) is marginal, the energy efficiency of the system becomes high when applied voltage (operation voltage) is at a low range of 400 to 600 mV. This is probably because the oxidation of methanol permeated to air electrode as represented by formula (6) is suppressed, air (oxygen) lacks at the portion other than the channel groove of the air electrode separator board, evolution reaction of $H^+$ as represented by formula (3) becomes dominant, and the $H^+$ undergoes reaction represented by formula (4) to produce hydrogen at the fuel electrode on the opposite side as described above even in the case of open-circuit condition or discharging condition where electric energy is not provided from outside. Evolution of hydrogen in the charging condition is likely to be generated depending on the same mechanism as in the open-circuit condition and discharging condition as well as on the electric energy supplied from outside.

The meaning of the potential of the cell will be described here. Generally, the voltage of a cell having two electrodes with an electrolyte membrane inserted therebetween is determined by the difference between the two electrodes of chemical potentials of ions which serve as conductors in electrolyte.

If polarizations at the two electrodes are ignored, the voltage in question indicates the difference between the two electrodes of chemical potentials of hydrogen, in other words, partial pressures of hydrogen, since this cell uses a proton (hydrogen ion) conducting solid electrolyte membrane.

According to the invention, as will be described later in relation to Example, if there is voltage between the fuel and oxidizing electrodes that is in a certain range, this indicates the evolution of hydrogen on the fuel electrode. Thus, if the difference of chemical potentials of hydrogen between the two electrodes falls within a certain range, reactions as represented by formulas (1) to (6) cited above will proceed which will result in the production of hydrogen.

According to the hydrogen generating device of the present invention, it is possible to adjust the evolution volume of hydrogen-containing gas by varying the voltage (open-circuit voltage or operation voltage) between the fuel electrode and oxidizing (air) electrode, regardless of whether electric energy is withdrawn to outside from the hydrogen generating cell of the device or whether electric energy is supplied from outside to the hydrogen generating cell of that.

As will be described below in relation of Example, the open-circuit condition evolves hydrogen at the open-circuit voltage of 300 to 800 mV; the discharging condition evolves hydrogen at the discharge voltage (operation voltage) of 200 to 600 mV; and the charging condition evolves hydrogen at the applied voltage (operation voltage) of 300 to 1000 mV (energy efficiency is high at 400 to 600 mV) . Thus, it is possible to adjust the evolution volume of hydrogen-containing gas by varying open-circuit voltage or operation voltage in accordance with the voltage range cited above.

As will be described below in relation of Example, it is possible to adjust the open-circuit voltage or operation voltage and/or the evolution volume (rate of hydrogen evolution) of hydrogen-containing gas by varying the supply volume of an oxidizing agent (oxygen-containing gas or oxygen, or hydrogen peroxide-containing liquid), or the concentration of an oxidizing agent (oxygen concentration of oxygen-containing gas), or the supply volume of organic compound-containing fuel, or the concentration of organic compound-containing fuel.

It is also possible to adjust the operation voltage and/or the evolution volume of hydrogen-containing gas by varying, for the discharging condition, electric energy withdrawn to outside, (varying current withdrawn to outside, or varying the voltage withdrawn to outside using a constant-voltage controllable power source, for example, so-called potentiostat), or, for the charging condition, electric energy supplied to the system (or current supplied to the system, or by varying the voltage of the system using a constant-voltage power source, for example, so-called potentiostat).

Since according to the hydrogen generating device of the present invention, it is possible to decompose organic compound-containing fuel at 100°C or lower, the temperature at which the device can be operated is made 100°C or lower. The operation temperature is preferably 30 to 90°C. This is because, when the operation temperature is adjusted to be between 30 and 90°C, it will become possible to adjust the open-circuit voltage or operation voltage, and/or the evolution volume of hydrogen-containing gas as will be described later in relation to Example.

Incidentally, for a hydrogen generating cell based on conventional fuel conversion technology, the operation temperature should be kept at 100°C or higher. At this temperature range, water will become vapor and organic compound-containing fuel become gas, and even when hydrogen evolves under this condition, it is necessary to provide means specifically adapted for separating hydrogen. The device of the present invention is also advantageous in this point.

Indeed, there will arise a problem as described above, when organic compound-containing fuel is decomposed at 100°C or higher. But a hydrogen generating device of the invention may be operated at a temperature slightly above 100°C if there be need to do so.

As long as based on the putative principle, the organic compound-containing fuel may be liquid or gaseous fuel capable of producing proton as a result of electrochemical oxidization that can pass through a proton conductive partition membrane, and liquid fuel containing alcohol such as methanol, ethanol, ethylene glycol, 2-propanol, aldehyde such as formaldehyde, carboxyl acid such as formic acid, or ether such as diethyl ether is preferred. Since the organic compound-containing fuel is supplied with water, an aqueous solution of these liquid fuels or aqueous solution of alcohol and particularly methanol and water is preferred. The aqueous solution of methanol cited above as a preferred example of fuel is an aqueous solution containing at least methanol, and its concentration of methanol at a region where hydrogen-containing gas evolves may be arbitrarily determined as needed.

Suitable oxidizing agents may include gaseous or liquid oxidizing agents. Suitable gaseous oxidizing agents may include oxygen-containing gas or oxygen. The concentration of oxygen in oxygen-containing gas is preferably chosen to be 10% or higher particularly. Suitable liquid oxidizing agents may include hydrogen peroxide-containing liquid.

For a hydrogen generating device of the invention, since the fraction of fuel converted into hydrogen is rather small, it is desirable to provide fuel circulating means to improve thereby the fraction of fuel to be converted into hydrogen.

The hydrogen generating device of the present invention has a means for collecting hydrogen-containing gas provided from the fuel electrode. The means is preferably so constructed as to be able to collect carbon dioxide as well as hydrogen. Since the device operates at a temperature as low as 100°C or lower, it is possible to attach a carbon dioxide absorbing portion for absorbing carbon dioxide contained in hydrogen-containing gas to the system by simple means.

Next, illustrative examples (examples of hydrogen generation) of the present invention will be presented. However, the fractions of catalysts, PTFE, Nafion, etc., and the thickness of catalyst layer, gas diffusion layer and electrolyte membrane are not limited to the values cited in the examples, but may take any appropriate values.

EXAMPLE 1

Illustrative examples of generating hydrogen based on the hydrogen generating device of the present invention as described in Claim 4 of the invention (open-circuit condition) will be presented below.

[Hydrogen generating example 1-1]

Hydrogen generating cells described in Example 1 (generating examples 1-1 to 1-10) have the same structure as that of representative DMFCs.

The structure of the hydrogen generating cell is outlined in FIG. 2.

The electrolyte membrane consists of a proton conducting electrolyte membrane provided by Dupont (Nafion 115); and the air electrode is obtained by immersing carbon paper (Toray) in a solution where polytetrafluoroethylene is dispersed at 5%, and baking the paper at 360°c to make it water-repellent, and coating, on one surface of the paper, air electrode catalyst paste comprised of air electrode catalyst (carbon-supported platinum, Tanaka Precious Metal), fine powder of PTFE, and 5% Nation solution (Aldrich). Thus, the air electrode exists as a gas diffusion layer with air electrode catalyst. In the preparation of the air electrode catalyst paste, the percent contents by weight of air electrode catalyst, PTFE, and Nafion were made 65%, 15% and 20%, respectively. The loading level of catalyst of the air electrode prepared as above was 1 $mg/cm^2$ in terms of the weight of platinum per unit area.

Another carbon paper was similarly treated to be made water-repellent. One surface of the paper was coated with fuel electrode catalyst paste comprised of fuel electrode catalyst (carbon-supported platinum-ruthenium, Tanaka Precious Metal), fine powder of PTFE, and 5% Nafion solution. Thus, the fuel electrode exists as a gas diffusion layer with fuel electrode catalyst. In the preparation of the fuel electrode catalyst paste, the percent contents by weight of fuel electrode catalyst, PTFE, and Nafion were made 55%, 15% and 30%, respectively. The loading level of catalyst of the fuel electrode prepared as above was 1 $mg/cm^2$ in terms of the weight of platinum-ruthenium per unit area.

The electrolyte membrane, gas diffusion layer with air electrode catalyst and gas diffusion layer with fuel electrode catalyst were laid one over another to be hot-pressed at 140°C under a pressure of 100 $kg/cm^2$ so that they were assembled to form an MEA. The MEA prepared as above had an active electrode area of 60.8 $cm^2$. The thicknesses of air and fuel electrode catalyst layers were practically the same about 30 μm, and the thicknesses of air and fuel electrode gas diffusion layers were similarly the same about 170 μm.

The MEA was further provided on its both surfaces with flow passages through which air can flow and fuel can flow, and was enclosed from outside with an air electrode separator and a fuel electrode separator respectively both made of graphite into which phenol resin is impregnated, in order to prevent the leak of gas from the MEA. At that time, similarly to the case of a conventional typical direct methanol type fuel cell, a groove is machined in the air electrode separator board to be a flow passage to flow air and the fuel electrode separator board to be a flow passage to flow fuel. The air electrode separator board and the fuel electrode separator board both have the thickness of 2 mm, and the flow passage for flowing air on the air electrode separator board is formed by making three parallel grooves (groove width:

2 mm, ridge width: 1 mm, groove depth: 0.6 mm) meander in the diagonal direction from the upper part to the lower part of the separator board (the number of turns: 8), while the flow passage for flowing fuel on the fuel electrode separator board is formed by making three parallel grooves (groove width: 1.46 mm, ridge width: 0.97 mm, groove depth: 0.6 mm) meander in the diagonal direction from the lower part to the upper part of the separator board (the number of turns: 10). To further ensure the seal of MEA against the leak of fuel and air, MEA was surrounded with silicon-rubber made packing.

In this case, the evolution volume of hydrogen is changed with the position relation of the grooves and ridges on the air electrode separator board and the fuel electrode separator board. That is, as mentioned above, it is presumed that methanol is diffused to the portion other than the channel groove (ridge portion) of the air electrode separator and $H^+$ generation reaction represented by the formula (3) occurs. Thus, if the ridge portion of the air electrode separator is at the same position opposed to the ridge portion of the fuel electrode separator, methanol diffusion from the fuel electrode is prevented and hydrogen is hardly generated. Therefore, the groove (ridge) of the air electrode separator and that of the fuel electrode separator are arranged at respective positions that are staggered relative to each other such that such part of the channel groove of the fuel electrode separator is disposed opposite to the ridge part other than the channel groove of the air electrode separator.

The hydrogen generating cell prepared as above was placed in an electric furnace where hot air was circulated. The temperature (operation temperature) of the cell was kept at 30 to 70°C, air was flowed at a rate of 0 to 400 ml/min to the air electrode, and 0.5 to 2M aqueous solution of methanol (fuel) was flowed at a rate of 2 to 15 ml/min to the fuel electrode. Then, the voltage difference between the fuel electrode and the air electrode (open voltage), the volume of gas evolved on the fuel electrode and the composition of the gas were monitored and analyzed.

First, the flow rate of aqueous solution of methanol (fuel) to the cell was kept 8 ml/min, and the temperature of air was kept at 30, 50, or 70°C, thereby altering the flow rate of air, and the volume of gas evolving from the fuel electrode was measured. The evolution volume of gas was determined by underwater conversion. The concentration of hydrogen in the evolved gas was determined by gas chromatography, and the rate of hydrogen evolution was determined based on the result.

The results are shown in FIG. 3. Evolution of hydrogen from the fuel electrode of the cell was confirmed with reduction of the flow rate of air for all the temperatures tested. The rate of hydrogen evolution becomes high as the temperature is raised. Studies of relation of the open-circuit voltage (open voltage) with the flow rate of air indicate that as the flow rate of air becomes low, the open-circuit voltage of the cell tends to decline.

FIG. 4 shows a graph for indicating relationship between the open-circuit voltage and the rate of hydrogen evolution, both adapted from the results of FIG. 3.

From this, it was found that the rate of hydrogen evolution (volume of hydrogen evolution) tends to depend on the open-circuit voltage, and that hydrogen evolves when the open-circuit voltage is in the range of 400 to 600 mV. The rate of hydrogen evolution is the highest around 450 mV for all the temperatures tested.

Next, fuel was flowed at 8 ml/min and air at 120 ml/min at 70°C to allow gas to evolve, and the concentration of hydrogen in the gas was determined by gas chromatography.

As a result, it was found that the gas contains hydrogen at about 70%, and carbon dioxide at about 15%. CO was not detected.

[Hydrogen generating example 1-2]

The same hydrogen generating cell as that of hydrogen generating example 1-1 was used. The temperature of the cell was kept at 70°C, and 1M aqueous solution of methanol (fuel) was applied at the flow rate of 2, 8, or 15 ml/min. Then, relations of the flow rate of fuel, the flow rate of air, the rate of hydrogen evolution and open-circuit voltage with the flow rate of air were shown in FIG. 5.

From the graph it was found that as the flow rate of fuel decreases, the rate of hydrogen evolution becomes larger.

FIG. 6 shows a graph for indicating relationship between the open-circuit voltage and the rate of hydrogen evolution, both adapted from the results of FIG. 5.

From this, it was found that the rate of hydrogen evolution depends on the open-circuit voltage, and is the highest around 450 mV for all the fuel flows tested as in hydrogen generating example 1-1.

In this generating example, the highest rate of hydrogen evolution 14.48 ml/min was obtained at the open-circuit voltage of 442 mV (operation temperature: 70°C; concentration of fuel: 1M; flow rate of fuel: 2 ml/min; and flow rate of air: 100 ml/min). The concentration of hydrogen in the evolved gas was determined by gas chromatography as in example 1-1, and found to be about 70%.

[Hydrogen generating example 1-3]

The same hydrogen generating cell as that of hydrogen generating example 1-1 was used. The temperature of the cell was kept at 70°C, and aqueous solution of methanol (fuel) at a fuel concentration of 0.5, 1 or 2M was applied

at a constant flow rate of 8 ml/min. Then, relations of the flow rate of fuel, the flow rate of air, the rate of hydrogen evolution and open-circuit voltage with the flow rate of air were shown in FIG. 7.

From the graph it was found that as the concentration of fuel decreases, the rate of hydrogen evolution becomes larger.

FIG. 8 shows a graph for indicating relationship between the open-circuit voltage and the rate of hydrogen evolution, both adapted from the results of FIG. 7.

From this, it was found that the rate of hydrogen evolution depends on the open-circuit voltage, and that hydrogen evolves when the open-circuit voltage is in the range of 300 to 600 mV. The rate of hydrogen evolution is the highest around 450 mV for all the fuel concentrations tested as in hydrogen generating example 1-1.

[Hydrogen generating example 1-4]

Next, effect of the thickness of electrolyte membrane on the evolution volume of gas was studied.

The hydrogen generating cell was constructed similarly to the above examples, using a Nafion 112 (Dupont) having a thickness of 50 μm, instead of Nafion 115 (Dupont) having a thickness of 130 μm as used in the above examples 1-1 to 1-3. The cell was operated: temperature at 70°C; concentration of fuel at 1M; and flow rate of fuel at 8 ml/min, and relations of the flow rate of fuel, the flow rate of air and the rate of hydrogen evolution with the flow rate of air were studied.

Both Nafion 115 and 112 membranes are made of the same material as a single difference in their thickness. Thus, only the thickness of electrolyte membranes serves as a parameter to be studied in the experiment. The study results are summarized in FIG. 9.

FIG. 10 shows a graph for indicating relationship between the open-circuit voltage and the rate of hydrogen evolution, both adapted from the results of FIG. 9.

From this, it was found that the rate of hydrogen evolution was similar regardless of the thickness of electrolyte membrane. As seen from the figure, the rate of hydrogen evolution depends on the open-circuit voltage, and is the highest around 450 mV.

[Hydrogen generating example 1-5]

A hydrogen generating cell constructed as in hydrogen generating example 1-1 was placed in an electric furnace where hot air was circulated. The temperature of the cell was kept at 30, 50, 70, or 90°C, air was flowed at a rate of 0 to 250 ml/min to the air electrode, and 1M aqueous solution of methanol was flowed at a rate of 5 ml/min to the fuel electrode. Then, the open-circuit voltage, and the rate of hydrogen evolution from the fuel electrode were monitored and analyzed.

Relation of the rate of hydrogen evolution with the flow rate of air is represented in FIG. 11.

Similarly to example 1-1, the evolution of hydrogen from the fuel electrode was confirmed with reduction of the flow rate of air for all the temperatures tested. The rate of hydrogen evolution becomes high as the temperature is raised. Studies of relation of the open-circuit voltage (open voltage) with the flow rate of air indicate that as the flow rate of air becomes low, the open-circuit voltage of the cell tends to decline.

FIG. 12 shows a graph for indicating relationship between the open-circuit voltage and the rate of hydrogen evolution, both adapted from the results of FIG. 11.

From this, it was found that the rate of hydrogen evolution depends on the open-circuit voltage, and hydrogen evolves when the open-circuit voltage is in the range of 300 to 7 00 mV. The rate of hydrogen evolution is the highest around 470 to 480 mV when the temperature is kept at 30 to 70°C, while the peak is shifted to 440 mV when the temperature is raised to 90°C.

[Hydrogen generating example 1-6]

The same hydrogen generating cell as that of hydrogen generating example 1-1 was used. The temperature of cell was kept at 50°C, and fuel was applied at the flow rate of 1.5, 2.5, 5.0, 7.5, or 10.0 ml/min. Then, relations of the flow rate of fuel, the flow rate of air and the rate of hydrogen evolution, with the flow rate of air were shown in FIG. 13.

From this, it was found that in contrast with example 1-2 where the temperature was kept at 70°C as the flow rate of fuel increases, the rate of hydrogen evolution becomes larger.

FIG. 14 shows a graph for indicating relationship between the open-circuit voltage and the rate of hydrogen evolution, both adapted from the results of FIG. 13.

From this, it was found that the rate of hydrogen evolution depends on the open-circuit voltage, and hydrogen evolves when the open-circuit voltage is in the range of 300 to 700 mV. The rate of hydrogen evolution is the highest around 450 to 500 mV.

After determining the consumption of methanol in fuel and the rate of hydrogen evolution when the flow rate of fuel is varied, the energy efficiency under open-circuit condition was determined by calculation in accordance with the equation described below (which is different from the equation used for determining the energy efficiency of a charging condition). As a result it was found that, under open-circuit condition, the energy efficiency was 17% when fuel flows at 5.0 ml/min, and 22% when fuel flows at 2.5 ml/min.

Efficiency (%) of a hydrogen generating system under open-circuit condition = (change of the standardized enthalpy of hydrogen evolved/change of enthalpy of methanol consumed) x 100

[Hydrogen generating example 1-7]

The same hydrogen generating cell as that of hydrogen generating example 1-1 was used. The temperature of cell was kept at 50°C, and aqueous solution of methanol (fuel) was applied at a constant flow rate of 5 ml/min while the concentration of fuel was varied to 0.5, 1, 2, 3M. Then, relations of the flow rate of air and the rate of hydrogen evolution with the flow rate of air were shown in FIG. 15.

From this, it was found that as the concentration of fuel decreases, the peak of the rate of hydrogen evolution is observed with reduction of the flow rate of air.

FIG. 16 shows a graph for indicating relationship between the open-circuit voltage and the rate of hydrogen evolution, both adapted from the results of FIG. 15.

From this, it was found that the rate of hydrogen evolution depends on the open-circuit voltage, and hydrogen evolves when the open-circuit voltage is in the range of 300 to 700 mV. The rate of hydrogen evolution is the highest around 470 mV for all the concentrations of fuel tested.

[Hydrogen generating example 1-8]

The same hydrogen generating cell as that of hydrogen generating example 1-1 was used (except that the air electrode consisted of an oxidizing electrode to which oxidizing gas was flowed) . The cell was operated: temperature at 50°C; concentration of fuel at 1M; and flow rate of fuel at 5 ml/min, while the concentration of oxygen being varied to 10, 21, 40, or 100% and relations of the open-circuit voltage and the rate of hydrogen evolution with the flow rate of oxidizing gas were studied. The results are shown in FIG, 17. The oxidizing gas containing 21% oxygen was represented by air, and the oxidizing gas containing 10% oxygen was obtained by mixing air with nitrogen. The oxidizing gas containing 40% oxygen was obtained by adding oxygen (100% oxygen) to air.

From this, it was found that as the concentration of oxygen increases, the flow rate of oxidizing gas becomes smaller.

FIG. 18 shows a graph for indicating relationship between the open-circuit voltage and the rate of hydrogen evolution, both adapted from the results of FIG. 17.

From this, it was found that the rate of hydrogen evolution depends on the open-circuit voltage, and hydrogen evolves when the open-circuit voltage is in the range of 400 to 800 mV. The rate of hydrogen evolution is the highest at 490 to 530 mV.

[Hydrogen generating example 1-9]

The same hydrogen generating cell as that of hydrogen generating example 1-1 was used. The cell was operated at 50°C with the flow of air to the air electrode kept at 60 ml/min and the flow of aqueous solution of methanol (fuel) to the fuel electrode kept at 2.6 ml/min to cause gas to evolve. A 200 cc of sample was collected from the gas, and the concentration of CO of the gas was determined by gas chromatography. No CO was detected in the gas (1 ppm or lower) . Under the measurement condition the open-circuit voltage of the cell wan 477 mV and the rate of hydrogen evolution was 10 ml/min.

[Hydrogen generating example 1-10]

The same hydrogen generating cell with that of Example 1-1 was used (except that the air electrode consisted of an oxidizing electrode to which liquid hydrogen peroxide was flowed). The cell was placed in an electric furnace where hot air was circulated. The cell was operated while the temperature being kept at 30, 50, 70, or 90°C with the flow of 1M $H_2O_2$ (hydrogen peroxide) to the oxidizing electrode kept at 1 - 8 ml/min and the flow of 1M aqueous solution of methanol (fuel) to the fuel electrode kept at 5 ml/min. Relations of the open-circuit voltage and the rate of hydrogen evolution with the flow rate of hydrogen peroxide were studied.

Relation of the rate of hydrogen evolution with the flow rate of $H_2O_2$ is represented in FIG. 19.

Similarly to hydrogen generating example 1-1, the evolution of hydrogen from the fuel electrode of the cell was

confirmed with reduction of the flow rate of $H_2O_2$ for all the temperatures tested. The rate of hydrogen evolution becomes high as the temperature is raised. Studies of relation of the open-circuit voltage with the flow rate of $H_2O_2$ indicate that as the flow rate of $H_2O_2$ becomes low, the open-circuit voltage of the cell tends to decline.

FIG. 20 shows a graph for indicating relationship between the open-circuit voltage and the rate of hydrogen evolution, both adapted from the results of FIG. 19.

From this, it was found that the rate of hydrogen evolution depends on the open-circuit voltage, and hydrogen evolves when the open-circuit voltage is in the range of 300 to 600 mV. The rate of hydrogen evolution is the highest around 500 mV when the temperature is kept at 30 to 50 °C, while the peak is shifted to 450 mV when the temperature is raised to 70 to 90°C.

What is important here is that no current or voltage was applied from outside to the hydrogen generating cells of Example 1. The cell was only connected to an electrometer for monitoring the open-circuit voltage which has an internal impedance of 1 GΩ or higher, while the cell was supplied with fuel and oxidizing agent.

In other words, the hydrogen generating cell of Example 1 converted part of fuel into hydrogen receiving no external energy except for fuel and oxidizing agent.

In addition, reforming occurred at a surprisingly low temperature of 30 to 90°C. In view of these facts, the hydrogen generating device of the invention is likely to be novel and the effect to use this package-type fuel cell power generating device incorporating the control device requiring protection from high heat is profound.

EXAMPLE 2

Illustrative examples of the hydrogen generating device as defined by Claim 5 of the present invention (discharging condition) will be presented below.

[Hydrogen generating example 2-1]

The structure of hydrogen generating cells described in Example 2 (illustrative examples 2-1 to 2-8) with a means for withdrawing electric energy is outlined in FIG. 21.

The hydrogen generating cells of Example 2 are the same in structure as those of hydrogen generating example 1-1 except that the cell comprises a fuel electrode as a negative electrode and an air electrode as a positive electrode-with a means for withdrawing electric energy.

The hydrogen generating cell was placed in an electric furnace where hot air was circulated. The cell was operated while the temperature (operation temperature) being kept at 50°C with the flow rate of air to the air electrode kept at 10 to 100 ml/min and the flow of 1M aqueous solution of methanol (fuel) to the fuel electrode kept at 5 ml/min to cause gas to evolve. Then, while the external current flowing between the air electrode and the fuel electrode being varied, the operation voltage between the fuel electrode and the air electrode, the volume of gas evolved from the fuel electrode and gas composition were monitored and analyzed. The concentration of hydrogen in the generated gas was determined by gas chromatography.

Relation of the operation voltage with the current density withdrawn revealed in the test is shown in FIG. 22.

It was found that as the flow rate of air is reduced, the dischargeable limit current density becomes smaller with the reduction of the operation voltage.

FIG. 23 shows a graph for indicating relationship between the rate of hydrogen evolution, and the operation voltage, both adapted from the results of FIG. 22.

From this, it was found that the rate of hydrogen evolution (volume of hydrogen evolution) depends on the operation voltage, and gas evolves when the operation voltage is in the range of 300 to 600 mV. Moreover, when the flow rate of air is in the range of 50 to 60 ml/min, hydrogen evolves most readily: when the flow rate of air is excessively large as 100 ml/min, no evolution of hydrogen is detected.

Next, the cell was operated: temperature at 50°C; flow rate of fuel at 5 ml/min; flow rate of air at 60 ml/min; and current density at 8.4 $mA/cm^2$ to cause gas to evolve. The concentration of hydrogen in the gas was determined by gas chromatography.

As a result, it was found that the gas contained hydrogen at about 74%, and hydrogen evolved at a rate of 5.1 ml/min. No CO was detected.

[Hydrogen generating example 2-2]

The same hydrogen generating cell as that of hydrogen generating example 2-1 was used. The cell was operated while the temperature being kept at 30°C with the flow rate of air to the air electrode kept at 30 through 100 ml/min and the flow of 1M aqueous solution of methanol (fuel) to the fuel electrode kept at 5 ml/min. Then, while the current flowing between the air electrode and the fuel electrode being varied, the operation voltage between the fuel

electrode and the air electrode, and the rate of hydrogen evolution occurring from the fuel electrode were monitored and analyzed.

Relation of the operation voltage with the current density withdrawn revealed in the test is shown in FIG. 24.

It was found that as the flow rate of air is reduced, the dischargeable limit current density becomes smaller with the reduction of operation voltage.

FIG. 25 shows a graph for indicating relationship between the rate of hydrogen evolution and the operation voltage, both adapted from the results of FIG. 24.

From this, it was found that the rate of hydrogen evolution depends on the operation voltage, and hydrogen evolves when the operation voltage is in the range of 200 to 540 mV. Hydrogen evolves when the flow rate of air is in the range of 30 to 70 ml/min. When the flow rate of air is 100 ml/min, scarcely any evolution of hydrogen is detected.

[Hydrogen generating example 2-3]

The same hydrogen generating cell as that of hydrogen generating example 2-1 was used. The cell was operated while the temperature being kept at 70°C with the flow rate of air to the air electrode kept at 50 - 200 ml/min and the flow of 1M aqueous solution of methanol (fuel) to the fuel electrode kept at 5 ml/min. Then, while the current flowing between the air electrode and the fuel electrode being varied, the operation voltage between the fuel electrode and the air electrode, and the rate of hydrogen evolution occurring from the fuel electrode were monitored and analyzed.

Relation of the operation voltage with the current density withdrawn revealed in the test is shown in FIG. 26.

It was found that as the flow rate of air is reduced, the dischargeable limit current density becomes smaller with the reduction of the operation voltage.

FIG. 27 shows a graph for indicating relationship between the rate of hydrogen evolution and the operation voltage, both adapted from the results of FIG. 26.

From this, it was found that the rate of hydrogen evolution depends on the operation voltage, and hydrogen evolves when the operation voltage is in the range of 200 to 500 mV. Hydrogen is ready to evolve when the flow rate of air is in the range of 50 to 100 ml/min. When the flow rate of air is excessively large as 150 to 200 ml/min, scarcely any evolution of hydrogen is detected.

[Hydrogen generating example 2-4]

The same hydrogen generating cell as that of hydrogen generating example 2-1 was used. The cell was operated while the temperature being kept at 90°C with the flow of air to the air electrode kept at 50 through 250 ml/min and the flow of 1M aqueous solution of methanol (fuel) to the fuel electrode kept at 5 ml/min. Then, while the current flowing between the air electrode and the fuel electrode being varied, the operation voltage between the fuel electrode and the air electrode, and the rate of hydrogen evolution occurring from the fuel electrode were monitored and analyzed.

Relation of the operation voltage with the current density withdrawn revealed in the test is shown in FIG. 28.

It was found that as the flow rate of air is reduced, the dischargeable limit current density becomes smaller with the reduction of the operation voltage.

FIG. 29 shows a graph for indicating relationship between the rate of hydrogen evolution and the operation voltage, both adapted from the results of FIG. 28.

From this, it was found that the rate of hydrogen evolution tends to depend on the operation voltage, and hydrogen evolves when the operation voltage is in the range of 200 to 500 mV. Hydrogen is ready to evolve when the flow rate of air is in the range of 50 to 100 ml/min. When the flow rate of air is at 250 ml/min, scarcely any evolution of hydrogen is detected.

Next, when the cell is operated with the flow of air being kept at 50 ml/min while respective temperatures are varied as in hydrogen generating examples 2-1 to 2-4, FIG. 30 shows relation of the current density withdrawn with the operation voltage while FIG. 31 shows relation of the rate of hydrogen evolution with the operation voltage.

From this, it was found that the rate of hydrogen evolution tends to depend on the operation voltage, and as the temperature becomes higher, hydrogen evolves at a lower operation voltage and the evolution volume becomes larger.

Further, when the cell is operated with the flow of air being kept at 100 ml/min while respective temperatures are varied as in hydrogen generating examples 2-1 to 2-4, FIG. 32 shows relation of the current density withdrawn with the operation voltage while FIG. 33 shows relation of the rate of hydrogen evolution with the operation voltage.

From this, it was found that the rate of hydrogen evolution tends to depend on the operation voltage, and as the temperature becomes higher, hydrogen evolves at a lower operation voltage and the evolution volume becomes larger. It was also found that when the flow rate of air is excessively large as 100 ml/min, scarcely any evolution of hydrogen is detected when the temperature is kept as low as 30 or 50°C.

[Hydrogen generating example 2-5]

The same hydrogen generating cell as that of hydrogen generating example 2-1 was used. The cell was operated while the temperature being kept at 50°C with the flow of air to the air electrode kept at 50 ml/min and the flow rate of fuel to the fuel electrode varied to 1.5, 2.5, 5.0, 7.5, or 10.0 0 ml/min. Then, while the current flowing between the air electrode and the fuel electrode being varied, the operation voltage between the fuel electrode and the air electrode, and the rate of hydrogen evolution occurring from the fuel electrode were monitored and analyzed.
Relation of the operation voltage with the current density withdrawn revealed in the test is shown in FIG. 34.
It was found that the dischargeable limit current density hardly changes even when the flow of fuel is varied.
FIG. 35 shows a graph for indicating relationship between the rate of hydrogen evolution and the operation voltage, both adapted from the results of FIG. 34.
From this, it was found that the rate of hydrogen evolution depends on the operation voltage, and hydrogen evolves when the operation voltage is in the range of 300 to 500 mV. The rate of hydrogen evolution is high when the operation voltage is in the range of 450 to 500 ml/min.
It was found that the rate of hydrogen evolution is hardly affected by the flow rate of fuel.

[Hydrogen generating example 2-6]

The same hydrogen generating cell as that of hydrogen generating example 2-1 was used. The cell was operated while the temperature being kept at 50°C with the flow of air to the air electrode kept at 50 ml/min and the constant flow of fuel to the fuel electrode kept at 5 ml/min while fuel concentration being varied to 0. 5, 1, 2, or 3M. Then, while the current flowing between the air electrode and the fuel electrode being varied, the operation voltage between the fuel electrode and the air electrode, and the rate of hydrogen evolution occurring from the fuel electrode were monitored and analyzed.
Relation of the operation voltage with the current density withdrawn revealed in the test is shown in FIG. 36.
It was found that the dischargeable limit current density declines as the concentration of fuel becomes higher with the reduction of operation voltage.
FIG. 37 shows a graph for indicating relationship between the rate of hydrogen evolution and the operation voltage, both adapted from the results of FIG. 36.
From this, it was found that the rate of hydrogen evolution depends on the operation voltage, and hydrogen evolves when the operation voltage is in the range of 300 to 600 mV.
Hydrogen evolves most vigorously when the concentration of fuel is 1M.

[Hydrogen generating example 2-7]

The same hydrogen generating cell as that of hydrogen generating example 2-1 was used (except that the air electrode consisted of an oxidizing electrode to which oxygen was flowed). The cell was operated while the temperature being kept at 50°C with the flow of oxidizing gas to the oxidizing electrode kept at 14.0 ml/min and the constant flow of 1M fuel concentration to the fuel electrode kept at 5 ml/min, while the concentration of oxygen being varied to 10, 21, 40, or 100%. Then, while the current flowing between the oxidizing electrode and the fuel electrode being varied, the operation voltage between the fuel electrode and the oxidizing electrode, and the rate of hydrogen evolution occurring from the fuel electrode were monitored and analyzed. The oxidizing gas containing 21% oxygen was represented by air, and the oxidizing gas containing 10% oxygen was obtained by mixing air with nitrogen. The oxidizing gas containing 40% oxygen was obtained by adding oxygen (100% oxygen concentration) to air.
Relation of the operation voltage with the current density withdrawn revealed in the test is shown in FIG. 38.
It was found that the operation voltage declines as the concentration of oxygen becomes smaller with the reduction of dischargeable limit current density.
FIG. 39 shows a graph for indicating relationship between the rate of hydrogen evolution and the operation voltage, both adapted from the results of FIG. 38.
From this, it was found that the rate of hydrogen evolution depends on the operation voltage, and hydrogen evolves when the operation voltage is in the range of 300 to 600 mV.
The rate of hydrogen evolution tends to be high as the concentration of oxygen becomes higher.

[Hydrogen generating example 2-8]

The same hydrogen generating cell as that of hydrogen generating example 2-1 was used (except that the air electrode consisted of an oxidizing electrode to which liquid hydrogen peroxide was flowed). The hydrogen generating cell was placed in an electric furnace where hot air was circulated. The cell was operated while the temperature being

varied to 30, 50, 70, or 90°C with the flow of 1M aqueous solution of $H_2O_2$ (hydrogen peroxide) to the oxidizing electrode varied from 2.6 to 5.5 ml/min, and the flow of 1M aqueous solution of methanol (fuel) to the fuel electrode kept at 5 ml/min. Then, while the current flowing between the oxidizing electrode and the fuel electrode being varied, the operation voltage between the fuel electrode and the oxidizing electrode, and the rate of hydrogen evolution occurring from the fuel electrode were monitored and analyzed. The flow rate of hydrogen peroxide was adjusted such that the open-circuit voltage was approximately equal to 500 mV for all the temperatures tested.

Relation of the operation voltage with the current density withdrawn revealed in the test is shown in FIG. 40.

It was found that the decline of operation voltage with the increase of current density takes a similar course when the temperature is kept at 70 to 90°C, while operation voltage undergoes a sharp fall when the temperature is decreased to 30°C with the reduction of dischargeable limit current density.

FIG. 41 shows a graph for indicating relationship between the rate of hydrogen evolution and the operation voltage, both adapted from the results of FIG. 40.

From this, it was found that the rate of hydrogen evolution tends to depend on the operation voltage, and hydrogen evolves when the operation voltage is in the range of 300 to 500 mV. Hydrogen is most ready to evolve when the temperature is 90°C. Hydrogen does not evolve unless the operation voltage is raised sufficiently high, when the temperature is at the low level tested.

What is important here is that current was withdrawn outside from the hydrogen generating cells of Example 2. In other words, the hydrogen generating cell of Example 2 converted part of fuel into hydrogen while withdrawing electric energy to outside. In addition, reforming occurred at a surprisingly low temperature of 30 to 90°C. In view of these facts, the hydrogen generating device of the invention is likely to be novel and the effect to use this hydrogen generating device in the package-type fuel cell power generating device incorporating the control device requiring protection from high heat is profound.

EXAMPLE 3

Illustrative examples of the hydrogen generating device as defined by Claim 6 of the invention (charging condition) will be presented below.

[Hydrogen generating example 3-1]

The structure of hydrogen generating cells described in Example 3 (hydrogen generating examples 3-1 to 3-8) with a means for providing electric energy from outside is outlined in FIG. 42.

The hydrogen generating cells are the same in structure as those of hydrogen generating example 1-1 except that the cell comprises a fuel electrode as cathode and an oxidizing electrode as anode with a means for providing electric energy from outside.

The hydrogen generating cell was placed in an electric furnace where hot air was circulated. The cell was operated while the temperature (operation temperature) being kept at 50°C with the flow of air to the air electrode kept at 10 to 80 ml/min and the flow of 1M aqueous solution of methanol (fuel) to the fuel electrode kept at 5 ml/min. Then, while the current flowing between the air electrode and the fuel electrode being varied by means of a DC power source from outside, the operation voltage between the fuel electrode and the air electrode, the volume of gas evolved from the fuel electrode and gas composition were monitored and analyzed. The energy efficiency of charging condition was defined as a ratio of the chemical energy of hydrogen evolved to the electric energy supplied from outside. The concentration of hydrogen in the generated gas was determined by gas chromatography, and rate of hydrogen evolution also determined.

The energy efficiency of a charging condition was calculated based on the following equation:

$$\text{Energy efficiency (\%)} = (\text{combustion heat of } H_2/\text{electric energy provided}) \times 100$$

Combustion heat (kJ) of $H_2$ per minute = (rate of $H_2$ evolution ml/min/24.47/1000)×286 kJ/mol [HHV]
Electric energy (kJ) per minute = (voltage mV/1000 × current A x 60 sec)Wsec/1000

To avoid undue misunderstanding, a few comments are added here. The object of this invention lies in obtaining hydrogen gas having a higher energy content than the electric energy supplied from outside, and the invention does not aim to gain more energy than the sum of paid energy without taking any heed to the law of conservation of energy taught by thermodynamics. When the energy balance of the entire system is taken into view, since part of organic compound-based fuel is oxidized, the energy expenditure includes, in addition to the electric energy supplied from outside, the chemical energy consumed for the oxidization of the fuel, which will amount to a value equal to or less than 100%. To distinguish more clearly the inventive method from conventional methods for obtaining hydrogen via the electrolysis of water, the energy efficiency of a system defined by the ratio of the chemical energy of evolved hydrogen to the electric energy supplied from outside will be used here.

Relation of the rate of hydrogen evolution with the current density applied in the test is shown in FIG. 43.

It was found that the efficiency of hydrogen evolution (efficiency of hydrogen evolution relative to electric energy supplied) becomes equal to or more than 100% (100% efficiency of hydrogen evolution is represented by the dashed line in FIG. 43) in certain areas when the current density is kept not more than 40 mA/cm$^2$. This suggests that it is possible to obtain hydrogen whose energy content is larger than the electric energy supplied from outside by operating the cell in those areas.

FIG. 44 shows a graph for indicating relationship between the rate of hydrogen evolution and the operation voltage, both adapted from the results of FIG. 43.

From this, it was found that the rate of hydrogen evolution (volume of hydrogen evolution) tends to depend on the operation voltage, and hydrogen evolves when the operation voltage is equal to or larger than 400 mV, and the rate of hydrogen evolution becomes virtually constant when the operation voltage becomes equal to or larger than 600 mV, and the rate of hydrogen evolution becomes larger (hydrogen is readier to evolve) with reduction of the flow rate of air.

Relation of the operation voltage with the current density applied is shown in FIG. 45.

The areas in FIG. 43 where the efficiency of hydrogen evolution is 100% or more fall below the line defined by the operation voltage being equal to or lower than 600 mV in FIG. 45.

Relation of the energy efficiency with the operation voltage is shown in FIG. 46.

From this, it was found that the energy efficiency is equal to or larger than 100% even when the operation voltage is around 1000 mV, and the energy efficiency is particularly high when the operation voltage is kept equal to or smaller than 600 mV, and the flow of air is kept at 30 to 50 ml/min.

Next, the cell was operated under a condition of high energy efficiency (1050%): temperature at 50°C; flow rate of fuel at 5 ml/min; flow rate of air at 50 ml/min; and current density at 4.8 mA/cm$^2$ to cause gas to evolve. The concentration of hydrogen in the gas was determined by gas chromatography. As a result it was found that the gas contained hydrogen at about 86%, and hydrogen evolved at a rate of 7.8 ml/min. No CO was detected.

[Hydrogen generating example 3-2]

The same hydrogen generating cell as that of hydrogen generating example 3-1 was used. The cell was operated while the temperature being kept at 30°C with the flow of air to the air electrode varied from 10 to 70 ml/min and the flow of 1M aqueous solution of methanol (fuel) to the fuel electrode kept at 5 ml/min. Then, while the current flowing between the air electrode and the fuel electrode being varied by means of a DC power source from outside, the operation voltage between the fuel electrode and the air electrode, the rate of hydrogen evolution occurring from the fuel electrode, and the energy efficiency were monitored and analyzed.

In this test, relation of the rate of hydrogen evolution with the current density applied is shown in FIG. 47, and relation of the rate of hydrogen evolution with the operation voltage is shown in FIG. 48.

From this, it was found that the rate of hydrogen evolution tends to depend on the operation voltage, and hydrogen evolves when the operation voltage is equal to or larger than 400 mV; hydrogen is readier to evolve with reduction of the flow rate of air; and the rate of hydrogen evolution becomes virtually constant with the air flow of 10 ml/min, when the operation voltage becomes equal to or larger than 600 mV, while the rate of hydrogen evolution tends to grow with the air flow of 30 ml/min, when the operation voltage becomes equal to or larger than 800 mV, and thus no hydrogen will evolve when air flows at a higher rate unless the operation voltage is raised sufficiently high.

Relation of the energy efficiency with the operation voltage is shown in FIG. 49.

From this, it was found that the energy efficiency is equal to or larger than 100% even when the operation voltage is around 1000 mV, and the energy efficiency is particularly high with the air flow of 30 ml/min when the operation voltage is kept equal to or smaller than 600 mV.

[Hydrogen generating example 3-3]

The test was performed under the same condition as in hydrogen generating example 3-2 except that the temperature of the cell was kept at 70°C. The operation voltage between the fuel electrode and the air electrode, and rate of hydrogen evolution on the fuel electrode and energy efficiency were monitored and analyzed.

Relation of the rate of hydrogen evolution with the current density applied during the test is shown in FIG. 50, and relation of the rate of hydrogen evolution with the operation voltage is shown in FIG. 51.

From this, it was found that the rate of hydrogen evolution tends to depend on the operation voltage, and

hydrogen evolves when the operation voltage is equal to or larger than 400 mV; hydrogen is readier to evolve with reduction of the flow rate of air; and the rate of hydrogen evolution becomes virtually constant with the air flow of 10 ml/min, when the operation voltage becomes equal to or larger than 600 mV, while the rate of hydrogen evolution tends to grow with the air flow of 30 ml/min, when the operation voltage becomes equal to or larger than 800 mV, and thus no hydrogen will evolve when air flows at a higher rate unless the operation voltage is raised sufficiently high.

Relation of the energy efficiency with the operation voltage is shown in FIG. 52.

It was found that the energy efficiency is equal to or larger than 100% even when the operation voltage is around 1000 mV, and the energy efficiency is particularly high with the flow rate of air of 10 to 30 ml/min when the operation voltage is kept equal to or smaller than 600 mv.

[Hydrogen generating example 3-4]

The same hydrogen generating cell as that of hydrogen generating example 3-1 was used. The cell was operated while the temperature being kept at 90°C with the flow rate of air to the air electrode varied from 10 to 200 ml/min and the flow of 1M aqueous solution of methanol (fuel) to the fuel electrode kept at 5 ml/min. Then, while the current flowing between the air electrode and the fuel electrode being varied by means of a DC power source from outside, the operation voltage between the fuel electrode and the air electrode, the rate of hydrogen evolution occurring from the fuel electrode, and the energy efficiency were monitored and analyzed.

Relation of the rate of hydrogen evolution with the current density applied is shown in FIG. 53, and relation of the rate of hydrogen evolution with the operation voltage is shown in FIG. 54.

From this, it was found that the rate of hydrogen evolution tends to depend on the operation voltage, and hydrogen evolves when the operation voltage is equal to or larger than 300 mV; hydrogen is readier to evolve with reduction of the flow rate of air; and the rate of hydrogen evolution becomes virtually constant with the air flow of 10 ml/min, when the operation voltage becomes equal to or larger than 500 mV, while the rate of hydrogen evolution tends to grow with the air flow of 50 to 100 ml/min, when the operation voltage becomes equal to or larger than 800 mV, and thus no hydrogen will evolve when air flows at 200 ml/min unless the operation voltage is raised higher than 800 mV.

Relation of the energy efficiency with the operation voltage is shown in FIG. 55.

From this, it was found that the energy efficiency is equal to or larger than 100% even when the operation voltage is around 1000 mV, and the energy efficiency is particularly high with the flow of air of 50 ml/min when the operation voltage is kept equal to or smaller than 500 mV.

Next, for hydrogen generating examples 3-1 to 3-4 where operation temperature was varied with the flow of air kept at 50 ml/min, relation of the rate of hydrogen evolution with the current density applied is shown in FIG. 56, while relation of the rate of hydrogen evolution with the operation voltage is shown in FIG. 57.

From this, it was found that the rate of hydrogen evolution tends to depend on the temperature: hydrogen evolves at a low operation voltage and the rate of hydrogen evolution becomes higher as the temperature is raised.

Relation of the energy efficiency with the operation voltage is shown in FIG. 58.

It was found that the energy efficiency is equal to or larger than 100% even when the operation voltage is around 1000 mV, and the energy efficiency is particularly high when the operation voltage is kept equal to or smaller than 600 mV.

[Hydrogen generating example 3-5]

The same hydrogen generating cell with that of hydrogen generating example 3-1 was used. The cell was operated while the temperature being kept at 50°C with the flow of air to the air electrode kept at 50 ml/min and the flow of fuel to the fuel electrode varied to 1.5, 2.5, 5.0, 7.5, or 10.0 ml/min. Then, while the current flowing between the air electrode and the fuel electrode being varied by means of a DC power source from outside, the operation voltage between the fuel electrode and the air electrode, the rate of hydrogen evolution occurring from the fuel electrode, and the energy efficiency were monitored and analyzed.

Relation of the rate of hydrogen evolution with the current density applied is shown in FIG. 59, and relation of the rate of hydrogen evolution with the operation voltage is shown in FIG. 60.

It was found that the rate of hydrogen evolution tends to depend on the operation voltage, and hydrogen evolves when the operation voltage is equal to or larger than 400 mV; hydrogen is readier to evolve with increase of the flow rate of fuel; and the rate of hydrogen evolution tends to grow when the operation voltage is equal to or larger than 800 mV for all the flow rates of fuel tested.

Relation of the energy efficiency with the operation voltage is shown in FIG. 61.

It was found that the energy efficiency is equal to or larger than 100% even when the operation voltage is around 1000 mV, and the energy efficiency is particularly high when the operation voltage is kept equal to or smaller than 600 mV.

[Hydrogen generating example 3-6]

The same hydrogen generating cell as that of hydrogen generating example 3-1 was used. The cell was operated while the temperature being kept at 50°C with the flow of air to the air electrode kept at 50 ml/znin and the constant flow of fuel to the fuel electrode kept at 5ml/min while fuel concentration being varied to 0.5, 1, 2, or 3M. Then, while the external current flowing between the air electrode and the fuel electrode being varied by means of a DC power source from outside, the operation voltage between the fuel electrode and the air electrode, the rate of hydrogen evolution occurring from the fuel electrode, and the energy efficiency were monitored and analyzed.
Relation of the rate of hydrogen evolution with the current density applied is shown in FIG. 62, and relation of the rate of hydrogen evolution with the operation voltage is shown in FIG. 63.
From this, it was found that the rate of hydrogen evolution grows almost linearly with the increase of current density provided that the current density is equal to or higher than 0.02/cm$^2$.
It was also found that the rate of hydrogen evolution tends to depend on the operation voltage, and hydrogen evolves when the operation voltage is equal to or larger than 400 mV; hydrogen is readier to evolve with increase of the concentration of fuel, and the rate of hydrogen evolution grows sharply under the fuel concentration of 2M or 3M, when the operation voltage approaches 400 to 500 mV; and the rate of hydrogen evolution becomes virtually constant under the fuel concentration of 1M when the operation voltage is in the range of 400 to 800 mV, while the rate of hydrogen evolution tends to grow when the operation voltage becomes equal to or larger than 800 mV, and no hydrogen will evolve when the fuel concentration is lower than this level (1M) unless the operation voltage is raised sufficiently high.
Relation of the energy efficiency with the operation voltage is shown in FIG. 64.
It was found that the energy efficiency is equal to or larger than 100% even when the operation voltage is around 1000 mV except for a case where the fuel concentration is kept at 0.5M, and the energy efficiency is particularly high with the concentration of the fuel being 1, 2 or 3M when the operation voltage is kept equal to or smaller than 600 mV. When the concentration of fuel was 0.5M, no hydrogen evolved when the operation voltage was low. Under this condition, the cell behaved quite differently in terms of energy efficiency.

[Hydrogen generating example 3-7]

The same hydrogen generating cell with that of hydrogen generating example 3-1 was used (except that the air electrode consisted of an oxidizing electrode to which oxidizing gas was flowed) . The cell was operated while the temperature being kept at 50°C with the constant flow of 1M fuel to the fuel electrode kept at 5 ml/min and the flow of oxidizing gas to the oxidizing electrode kept at 14.0 ml/min while oxygen concentration being varied to 10, 21, 40, or 100%. Then, while the current flowing between the oxidizing electrode and the fuel electrode being varied by means of a DC power source from outside, the operation voltage between the fuel electrode and the oxidizing electrode, the rate of hydrogen evolution occurring from the fuel electrode, and the energy efficiency were monitored and analyzed. The oxidizing gas containing 21% oxygen was represented by air, and the oxidizing gas containing 10% oxygen was obtained by mixing air with nitrogen. The oxidizing gas containing 40% oxygen was obtained by adding oxygen (100% oxygen) to air.
Relation of the rate of hydrogen evolution with the current density applied is shown in FIG. 65, and relation of the rate of hydrogen evolution with the operation voltage is shown in FIG. 66.
From this, it was found that the rate of hydrogen evolution grows almost linearly with the increase of current density provided that the current density is equal to or higher than 0.03 A/cm$^2$.
It was also found that the rate of hydrogen evolution tends to depend on the operation voltage, and hydrogen evolves when the operation voltage is equal to or larger than 400 mV; hydrogen is readier to evolve with increase of the concentration of oxygen; and the rate of hydrogen evolution becomes virtually constant under when the operation voltage is in the range of 400 to 800 mV, while it tends to grow when the operation voltage becomes equal to or larger than 800 mV.
Relation of the energy efficiency with the operation voltage is shown in FIG. 67.
It was found that the energy efficiency is equal to or larger than 100% even when the applied voltage is around 1000 mV, and the energy efficiency is particularly high with the concentration of oxygen being high when the applied voltage is kept equal to or smaller than 600 mV.

[Hydrogen generating example 3-8]

The same hydrogen generating cell as that of hydrogen generating example 3-1 was used (except that the air electrode consisted of an oxidizing electrode to which liquid hydrogen peroxide was flowed). The hydrogen generating cell was placed in an electric furnace where hot air was circulated. The cell was operated while the temperature being varied to 30, 50, 70, or 90°C with the flow of 1M aqueous solution of methanol to the fuel electrode kept at 5 ml/min and the flow of 1M $H2O_2$ (hydrogen peroxide) to the oxidizing electrode varied from 2.6 to 5.5 ml/min. Then, while the current flowing between the oxidizing electrode and the fuel electrode being varied by means of a DC power source from outside,

the operation voltage between the fuel electrode and the oxidizing electrode, the rate of hydrogen evolution occurring from the fuel electrode, and the energy efficiency were monitored and analyzed.

The flow rate of hydrogen peroxide was adjusted such that the open-circuit voltage was approximately equal to 500 a-cGV for all the temperatures tested.

Relation of the rate of hydrogen evolution with the current density applied is shown in FIG. 68, and relation of the rate of hydrogen evolution with the operation voltage is shown in FIG. 69.

From this, it was found that the rate of hydrogen evolution tends to depend on the operation voltage, and hydrogen evolves when the operation voltage is equal to or larger than 500 mV, and tends to grow when the operation voltage is equal to or larger than 800 mV; and hydrogen is readier to evolve with increase of the operation temperature.

Relation of the energy efficiency with the operation voltage is shown in FIG. 70.

It was found that the energy efficiency is equal to or larger than 100% even when the operation voltage is around 1000 mV, and the energy efficiency is particularly high with the temperature of 90 °C when the operation voltage is kept equal to or smaller than 800 mV.

What is important here is that hydrogen was withdrawn from the hydrogen generating cells of Example 3 whose energy content exceeded the electric current supplied from outside. In other words, the hydrogen generating cell of Example 3 generates hydrogen of energy more than inputted electric energy. In addition, reforming occurred at a surprisingly low temperature of 30 to 90°C. In view of these facts, the hydrogen generating device is likely to be novel and the effect to use this hydrogen generating device of the invention in the package-type fuel cell power generating device incorporating the control device requiring protection from high heat is profound.

In the following embodiments, examples to produce hydrogen by the hydrogen generating device used in the fuel cell power generating device of the invention using a fuel other than methanol will be described.

EXAMPLE 4

Hydrogen was generated by the hydrogen generating device of the present invention as described in Claim 4 of the invention (open circuit condition) using ethanol as a fuel.

The same hydrogen generating cell as that of hydrogen generating example 1-1, was used. At the cell temperature of 80°C, the flow rate of 1M aqueous solution of ethanol was made at 5ml/min to flow to the fuel electrode and the flow rate of air was made at 65 ml/min to the air electrode. Then, the open-circuit voltage of the cell and the rate of gas evolution generated from the fuel electrode were measured. The hydrogen concentration in the generated gas was analyzed by a gas chromatography and the hydrogen evolution rate was acquired.

The result is shown in Table 1:

Table 1:

| Air | Open-circuit voltage | Gas evolution rate | $H_2$ concentration | $H_2$ evolution rate |
|---|---|---|---|---|
| /ml/min | /mV | /ml /min | /% | /ml/min |
| 65 | 478 | 0.6 | 65.2 | 0.39 |

As shown in Table 1, it was confirmed that hydrogen was generated at the open-circuit voltage of 478 mV, but the hydrogen evolution rate was small.

EXAMPLE 5

Hydrogen was generated by the hydrogen generating device of the present invention as described in Claim 4 of the invention (open circuit condition) using ethylene glycol as a fuel.

The same hydrogen generating cell as that of hydrogen generating example 1-1 was used. At the cell temperature of 80°C, the flow rate of 1M aqueous solution of ethylene glycol was made at 5 ml/min to flow to the fuel electrode and the flow rate of air was made at 105 ml/min to the air electrode. Then, the open-circuit voltage of the cell and the rate of gas evolution generated from the fuel electrode were measured. The hydrogen concentration in the generated gas was analyzed by a gas chromatography and the hydrogen evolution rate was acquired.

The result is shown in Table 2:

Table 2:

| Air | Open-circuit voltage | Gas evolution rate | $H_2$ concentration | $H_2$ evolution rate |
|---|---|---|---|---|
| /ml/min | /mV | /ml/min | /% | /ml/min |
| 105 | 474 | 2.4 | 88.4 | 2.12 |

As shown in Table 2, it was confirmed that hydrogen was generated at the open-circuit voltage of 474 mV. The hydrogen evolution rate was larger than the case of aqueous solution of ethanol as a fuel but considerably smaller than the case of aqueous solution of methanol.

EXAMPLE 6

Hydrogen was generated by the hydrogen generating device of the present invention as described in Claim 4 of the invention (open circuit condition) using 2-propanol as a fuel.
The same hydrogen generating cell as that of hydrogen generating example 1-1 was used. At the cell temperature of 80°C, the flow rate of 1M aqueous solution of 2-propanol was made at 5 ml/min to flow to the fuel electrode and the flow rate of air was made at 35 ml/min to the air electrode. Then, the open-circuit voltage of the cell and the rate of gas evolution generated from the fuel electrode were measured. The hydrogen concentration in the generated gas was analyzed by a gas chromatography and the hydrogen evolution rate was acquired.
The result is shown in Table 3:

Table 3:

| Air | Open-circuit voltage | Gas evolution rate | $H_2$ concentration | $H_2$ evolution rate |
|---|---|---|---|---|
| /ml/min | /mV | /ml/min | /% | /ml/min |
| 35 | 514 | 3.96 | 95.6 | 3.78 |

As shown in Table 3, it was confirmed that hydrogen was generated at the open-circuit voltage of 514 mV, but the hydrogen evolution rate was larger than the case of the aqueous solution of ethanol or the aqueous solution of ethylene glycol as a fuel and the closest to the aqueous solution of methanol. Particularly, the hydrogen concentration in the generated gas was extremely high.

EXAMPLE 7

Hydrogen was generated by the hydrogen generating device of the present invention as described in Claim 4 of the invention (open circuit condition) using diethyl ether as a fuel.
The same hydrogen generating cell as that of hydrogen generating example 1-1 was used. At the cell temperature of 80°C, the flow rate of 1M aqueous solution of diethyl ether was made at 5 ml/min to flow to the fuel electrode and the flow rate of air was made at 20 ml/min to the air electrode. Then, the open-circuit voltage of the cell and the rate of gas evolution generated from the fuel electrode were measured. The hydrogen concentration in the generated gas was analyzed by a gas chromatography and the hydrogen evolution rate was acquired.
The result is shown in Table 4:

Table 4:

| Air | Open-circuit voltage | Gas evolution rate | $H_2$ concentration | $H_2$ evolution rate |
|---|---|---|---|---|
| /ml/min | /mV | /ml/min | /% | /ml/min |
| 20 | 565 | 3.0 | 7.6 | 0.23 |

As shown in Table 4, it was confirmed that hydrogen was generated at the open-circuit voltage of 565 mV. The hydrogen concentration in the generated gas was smaller than the cases using alcohol as a fuel and the hydrogen evolution rate was also small.

EXAMPLE 8

Hydrogen was generated by the hydrogen generating device of the present invention as described in Claim 4 of the invention (open circuit condition) using formaldehyde, formic acid as a fuel.

The same hydrogen generating cell as that of hydrogen generating example 1-1 was used. At the cell temperature of 50°C, the flow rate of 1M aqueous solution of formaldehyde, the flow rate of 1M aqueous solution of formic acid were made at 5 ml/min respectively to flow to the fuel electrode and the flow of air was made at 0 to 100 ml/min to the air electrode. Then, the open-circuit voltage of the cell and the rate of gas evolution generated from the fuel electrode were measured. The hydrogen concentration, in the generated gas was analyzed by a gas chromatography and the hydrogen evolution rate was acquired.

The result is shown in FIGS. 71 and 72 with the case where methanol was used.

As shown in FIG. 71, in the case of formaldehyde, formic acid, generation of hydrogen was confirmed from the fuel electrode of the cell by reducing the air flow rate as in the case of methanol. Also, the hydrogen evolution rate is the largest with methanol, followed by formaldehyde and formic acid. Moreover, it was found out that hydrogen was not generated unless the air flow rate is reduced in this order.

From FIG. 72, it was found out that in the case of formaldehyde and formic acid, the hydrogen evolution rate (hydrogen evolution volume) also tends to depend on the open-circuit voltage as with methanol and that hydrogen was generated at the open-circuit voltage of 200 to 800 mV. In the case of formic acid, hydrogen was generated in a state where the open-circuit voltage was lower than that for methanol, formaldehyde. Also, the peak of hydrogen evolution rate was observed at a low open-circuit voltage (about 350 mV) for formic acid, while that of methanol, formaldehyde was about 500 mV.

EXAMPLE 9

Hydrogen was generated by the hydrogen generating cell used in the hydrogen generating device of the present invention as described in Claims 3 and 4 of the invention (open circuit condition) by changing the structure of the hydrogen generating cell.

The same hydrogen generating cell as that of hydrogen generating example 1-1 was used to produce the hydrogen generating cell except that only the air electrode separator board is combined with MEA except the fuel electrode separator board of the separator boards.

The hydrogen generating cell produced as above was used. At the cell temperature of 50°C, the flow rate of 1M aqueous solution of methanol was made at 5 ml/min to flow to the fuel electrode and the flow rate of air was made at 0 to 150 ml/min to the air electrode. Then, the open-circuit voltage of the cell and the rate of gas evolution generated from the fuel electrode were measured. The hydrogen concentration in the generated gas was analyzed by a gas chromatography and the hydrogen evolution rate was acquired.

The result is shown in FIG. 73.

Hydrogen was generated at the air flow rate of 30 to 130 ml/min, but the hydrogen evolution volume was lower than the case where the separator board is used for both the fuel electrode and the air electrode.

The result of FIG. 73 is shown as relation of relation of the rate of hydrogen evolution with the open-circuit voltage in FIG. 74.

From this, the hydrogen evolution rate (hydrogen evolution volume) shows a tendency to depend on the open-circuit voltage as that of hydrogen generating example 1-1, and hydrogen is found to be generated at the open-circuit voltage of 400 to 600 mV. Also, the peak of the hydrogen evolution rate is observed in the vicinity of 470 mV.

## Industrial Applicability

As described above, a hydrogen generating device according to the present invention can generate hydrogen-containing gas by decomposing fuel containing an organic compound at temperature not higher than 100°C and supply hydrogen to a fuel cell, a hydrogen storage container or the like without difficulty. Thus, a hydrogen generating device according to the present invention can highly advantageously find applications in electric automobiles, submarines, hydrogen supply systems, package type fuel cell power generating device and so on.

## Claims

1. A hydrogen generating device for generating gas containing hydrogen by decomposing fuel containing an organic compound, **characterized by** comprising: a hydrogen generating cell formed by sandwiching a bonded assembly including a partition membrane, a fuel electrode arranged on one of the surfaces of said partition membrane and

an oxidizing electrode arranged on the other surface of said partition membrane between a fuel electrode separator provided with a channel groove for flowing fuel containing an organic compound and water to said fuel electrode and an oxidizing electrode separator provided with a channel groove for flowing an oxidizing agent to said oxidizing electrode; a means for supplying fuel containing the organic compound and water to said fuel electrode; a means for supplying an oxidizing agent to said oxidizing electrode; and a means for generating and collecting the gas containing hydrogen from the fuel electrode.

2. The hydrogen generating device according to claim 1, **characterized in that** the channel groove of said fuel electrode separator and the channel groove of said oxidizing electrode separator are provided with displacement such that the channel groove of the fuel electrode separator is opposed to a ridge portion other than the channel groove of the oxidizing electrode separator at least partially.

3. The hydrogen generating device according to claim 1, **characterized in that** a flow channel is provided to said fuel electrode for flowing fuel containing the organic compound and water without using said fuel electrode separator instead of the fuel electrode separator provided with the channel groove for flowing fuel containing the organic compound and water to said fuel electrode.

4. The hydrogen generating device according to any one of claims 1 through 3, **characterized in that** the device is an open circuit that has neither a means for withdrawing electric energy to outside from the hydrogen generating cell of the hydrogen generating device, nor a means for providing electric energy from outside to said hydrogen generating cell.

5. The hydrogen generating device according to any one of claims 1 through 3, **characterized by** comprising a means for withdrawing electric energy to outside with said fuel electrode and oxidizing electrode as negative electrode and positive electrode respectively.

6. The hydrogen generating device according to any one of claims 1 through 3, **characterized by** comprising a means for providing electric energy from outside with said fuel electrode and oxidizing electrode as cathode and anode respectively.

7. The hydrogen generating device according to any one of claims 1 through 3, **characterized in that** the voltage between said fuel electrode and oxidizing electrode is 200 to 1,000 mV.

8. The hydrogen generating device according to claim 4, **characterized in that** the voltage between said fuel electrode and oxidizing electrode is 300 to 800 mV.

9. The hydrogen generating device according to claim 5, **characterized in that** the voltage between said fuel electrode and oxidizing electrode is 200 to 600 mV.

10. The hydrogen generating device according to claim 5, **characterized in that** the voltage between said fuel electrode and oxidizing electrode and/or the evolution volume of hydrogen-containing gas are/is adjusted by varying the volume of electric energy that is withdrawn.

11. The hydrogen generating device according to claim 6, **characterized in that** the voltage between said fuel electrode and oxidizing electrode is 300 to 1,000 mV.

12. The hydrogen generating device according to claim 6, **characterized in that** the voltage between said fuel electrode and oxidizing electrode and/or the evolution volume of hydrogen-containing gas are/is adjusted by varying the volume of electric energy that is provided.

13. The hydrogen generating device according to any one of claims 1 through 3, **characterized in that** the evolution volume of hydrogen-containing gas is adjusted by varying the voltage between said fuel electrode and oxidizing electrode.

14. The hydrogen generating device according to any one of claims 1 through 3, **characterized in that** the voltage between said fuel electrode and oxidizing electrode and/or the evolution volume of hydrogen-containing gas are/is adjusted by varying the supply volume of the oxidizing agent.

**15.** The hydrogen generating device according to any one of claims 1 through 3, **characterized in that** the voltage between said fuel electrode and oxidizing electrode and/or the evolution volume of hydrogen-containing gas are/is adjusted by varying the concentration of said oxidizing agent.

**16.** The hydrogen generating device according to any one of claims 1 through 3, **characterized in that** the voltage between said fuel electrode and oxidizing electrode and/or the evolution volume of hydrogen-containing gas are/is adjusted by varying the supply volume of fuel containing an organic compound and water.

**17.** The hydrogen generating device according to any one of claims 1 through 3, **characterized in that** the voltage between said fuel electrode and oxidizing electrode and/or the evolution volume of hydrogen-containing gas are/is adjusted by varying the concentration of fuel containing an organic compound and water.

**18.** The hydrogen generating device according to any one of claims 1 through 3, **characterized in that** the operation temperature of the hydrogen generating device is not higher than 100°C.

**19.** The hydrogen generating device according to claim 18, **characterized in that** said operation temperature is between 30 to 90°C.

**20.** The hydrogen generating device according to any one of claims 1 through 3, **characterized in that** said organic compound supplied to said fuel electrode is one or two or more organic compounds selected from a group consisting of alcohol, aldehyde, carboxyl acid and ether.

**21.** The hydrogen generating device according to claim 20, **characterized in that** said alcohol is methanol.

**22.** The hydrogen generating device according to any one of claims 1 through 3, **characterized in that** said oxidizing agent is oxygen-containing gas or oxygen.

**23.** The hydrogen generating device according to any one of claims 1 through 3, **characterized in that** said oxidizing agent is liquid containing hydrogen peroxide.

**24.** The hydrogen generating device according to any one of claims 1 through 3, **characterized in that** said partition membrane is a proton conducting solid electrolyte membrane.

**25.** The hydrogen generating device according to claim 24,
**characterized in that** said proton conducting solid electrolyte membrane is perfluorocarbon sulfonate-based solid electrolyte membrane.

**26.** The hydrogen generating device according to any one of claims 1 through 3, **characterized in that** a catalyst of said fuel electrode is made of platinum-ruthenium alloy supported by carbon powder.

**27.** The hydrogen generating device according to any one of claims 1 through 3, **characterized in that** a catalyst of said oxidizing electrode is made of platinum supported by carbon powder.

**28.** The hydrogen generating device according to one of claims 1 through 3, **characterized by** further comprising a means for circulating fuel containing an organic compound and water.

**29.** The hydrogen generating device according to any one of claims 1 through 3, **characterized by** further comprising a carbon dioxide absorbing portion for absorbing carbon dioxide contained in said hydrogen-containing gas.

Fig. 1

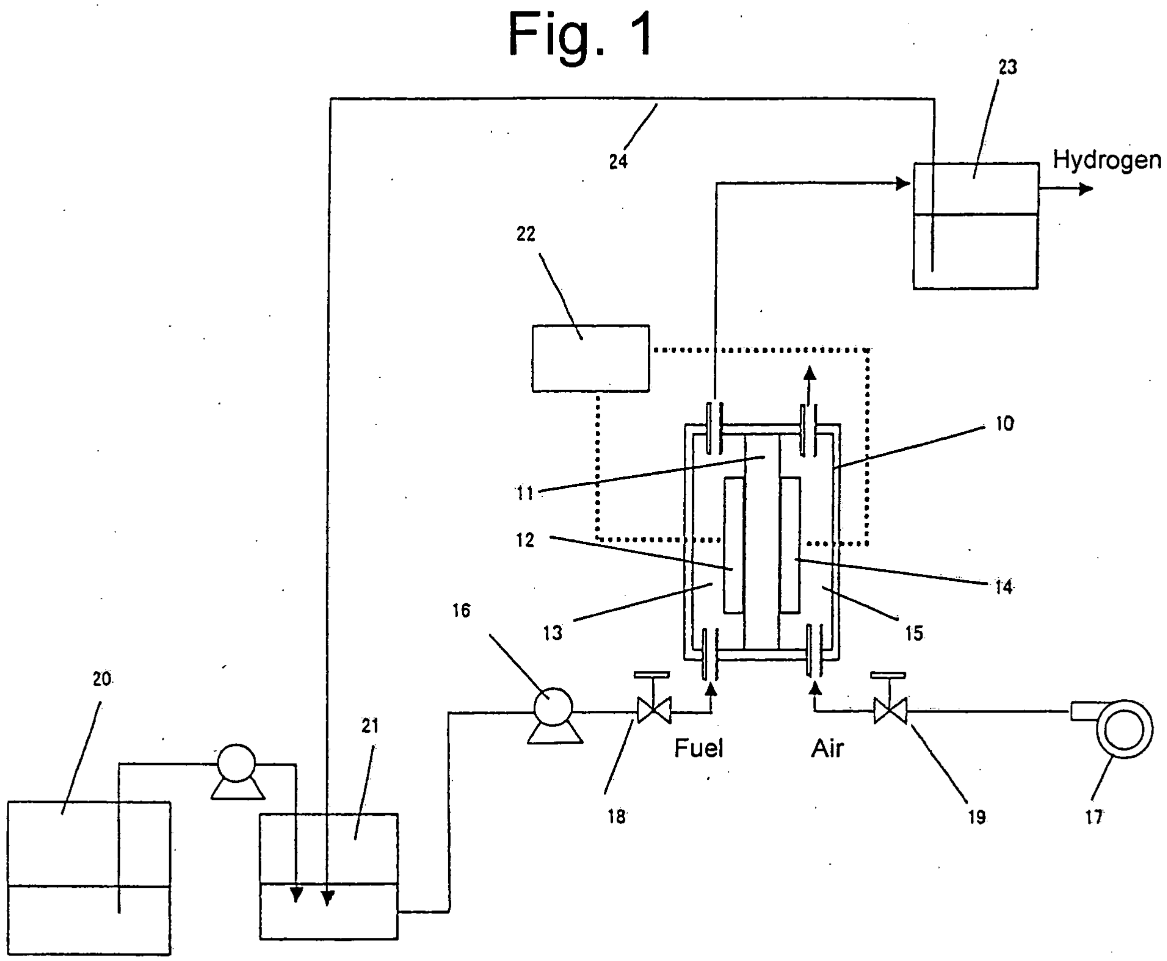
23
Hydrogen
24
22
10
11
12
14
16
13
15
20
21
Fuel
Air
18
19
17

Fig. 2

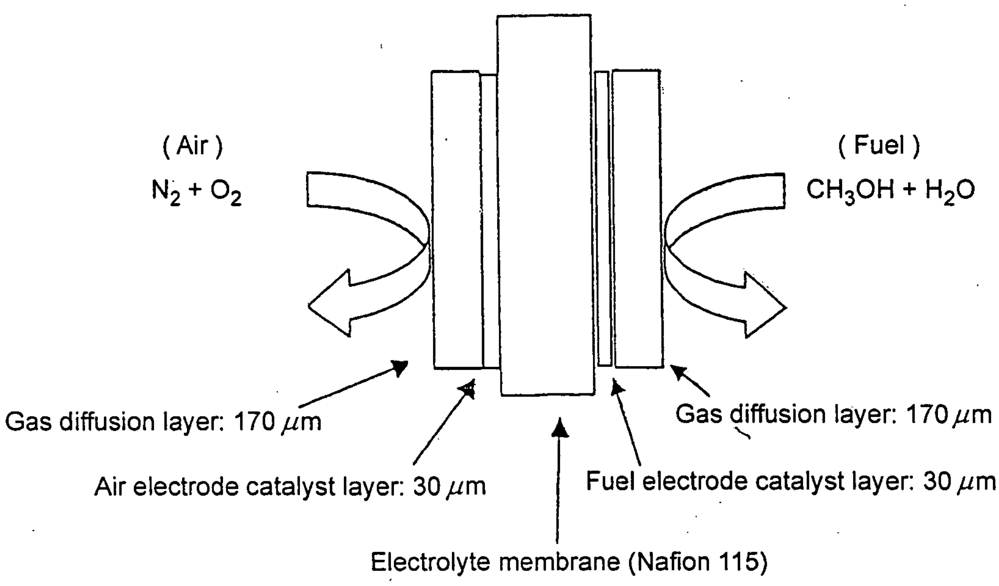
( Air )
$N_2 + O_2$
( Fuel )
$CH_3OH + H_2O$
Gas diffusion layer: 170 μm
Gas diffusion layer: 170 μm
Air electrode catalyst layer: 30 μm
Fuel electrode catalyst layer: 30 μm
Electrolyte membrane (Nafion 115)

Fig. 3

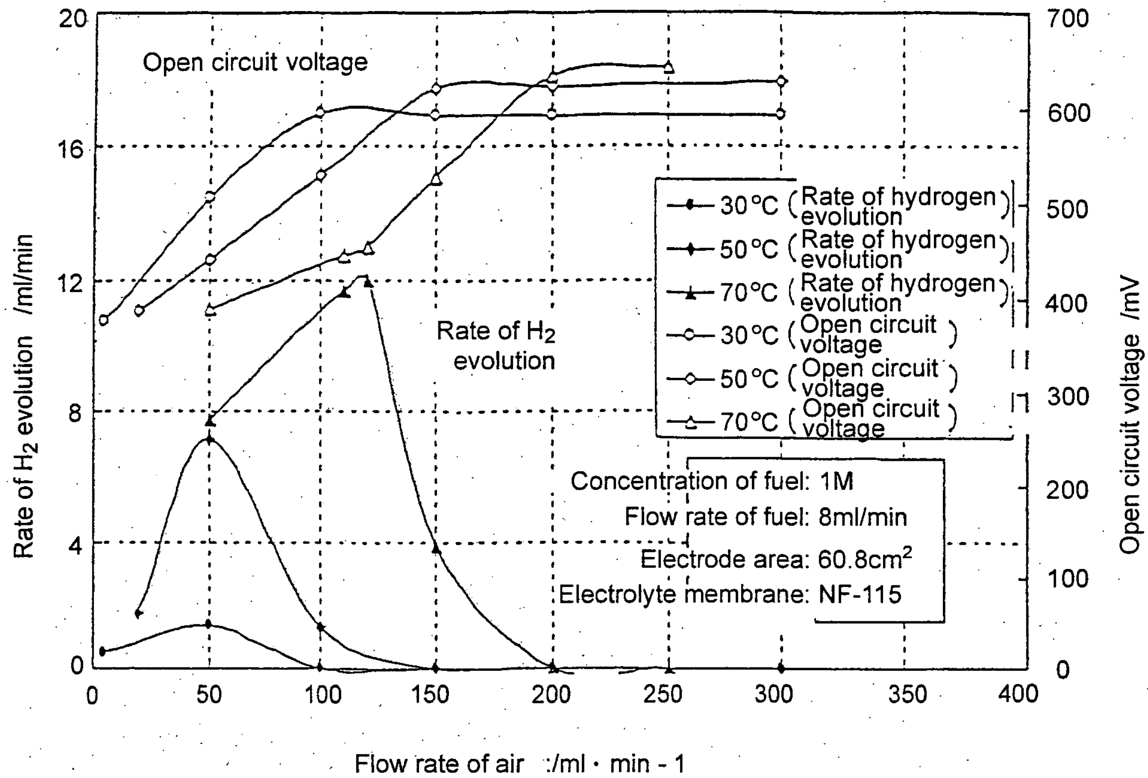
Open circuit voltage
Rate of H2 evolution
30°C (Rate of hydrogen evolution)
50°C (Rate of hydrogen evolution)
70°C (Rate of hydrogen evolution)
30°C (Open circuit voltage)
50°C (Open circuit voltage)
70°C (Open circuit voltage)
Concentration of fuel: 1M
Flow rate of fuel: 8ml/min
Electrode area: 60.8cm2
Electrolyte membrane: NF-115
Rate of H2 evolution /ml/min
Open circuit voltage /mV
Flow rate of air :/ml · min - 1
0
4
8
12
16
20
100
200
300
400
500
600
700
50
150
250
350

Fig. 4

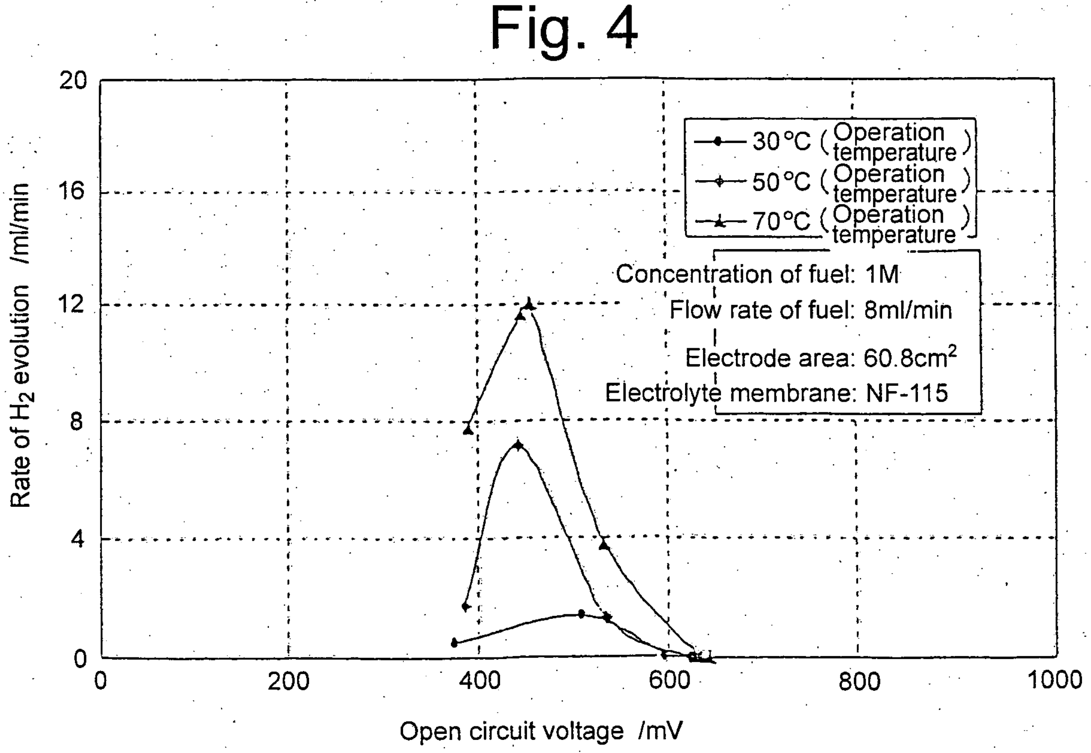
30°C (Operation temperature)
50°C (Operation temperature)
70°C (Operation temperature)
Concentration of fuel: 1M
Flow rate of fuel: 8ml/min
Electrode area: 60.8cm2
Electrolyte membrane: NF-115
Rate of H2 evolution /ml/min
Open circuit voltage /mV
0
4
8
12
16
20
200
400
600
800
1000

Fig. 5

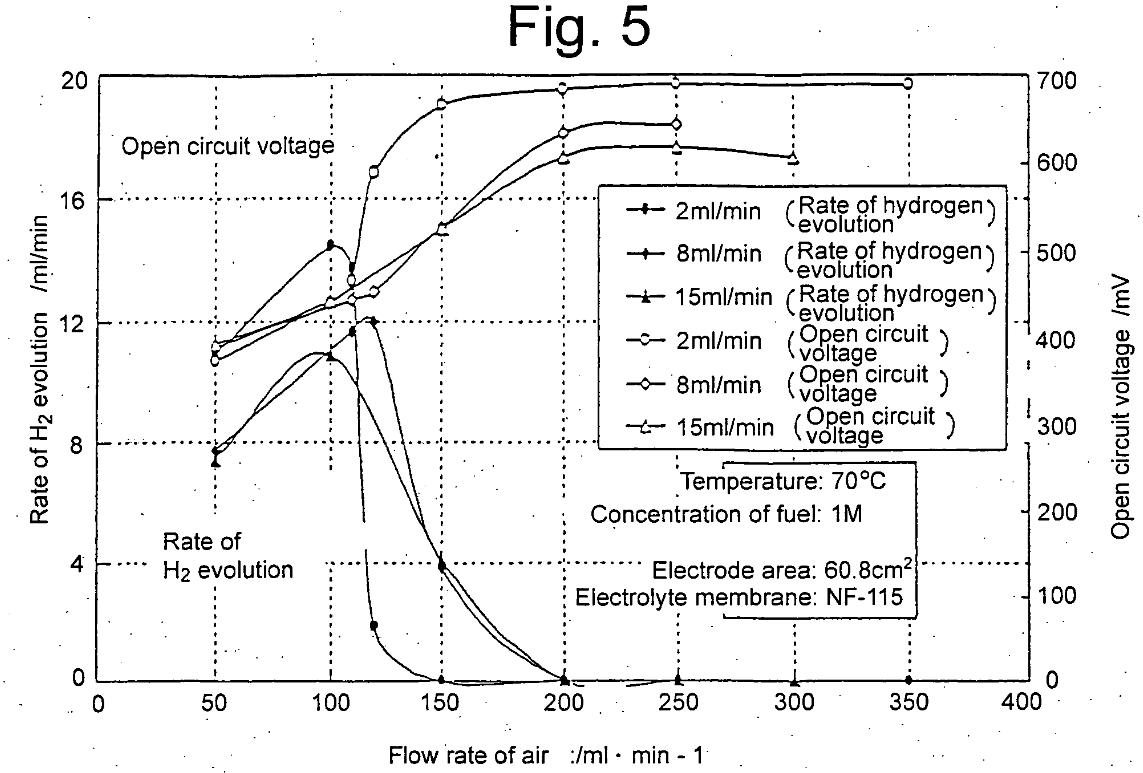
Open circuit voltage
Rate of H2 evolution
2ml/min (Rate of hydrogen evolution)
8ml/min (Rate of hydrogen evolution)
15ml/min (Rate of hydrogen evolution)
2ml/min (Open circuit voltage)
8ml/min (Open circuit voltage)
15ml/min (Open circuit voltage)
Temperature: 70°C
Concentration of fuel: 1M
Electrode area: 60.8cm2
Electrolyte membrane: NF-115
Rate of H2 evolution /ml/min
Open circuit voltage /mV
Flow rate of air :/ml · min - 1

Fig. 6

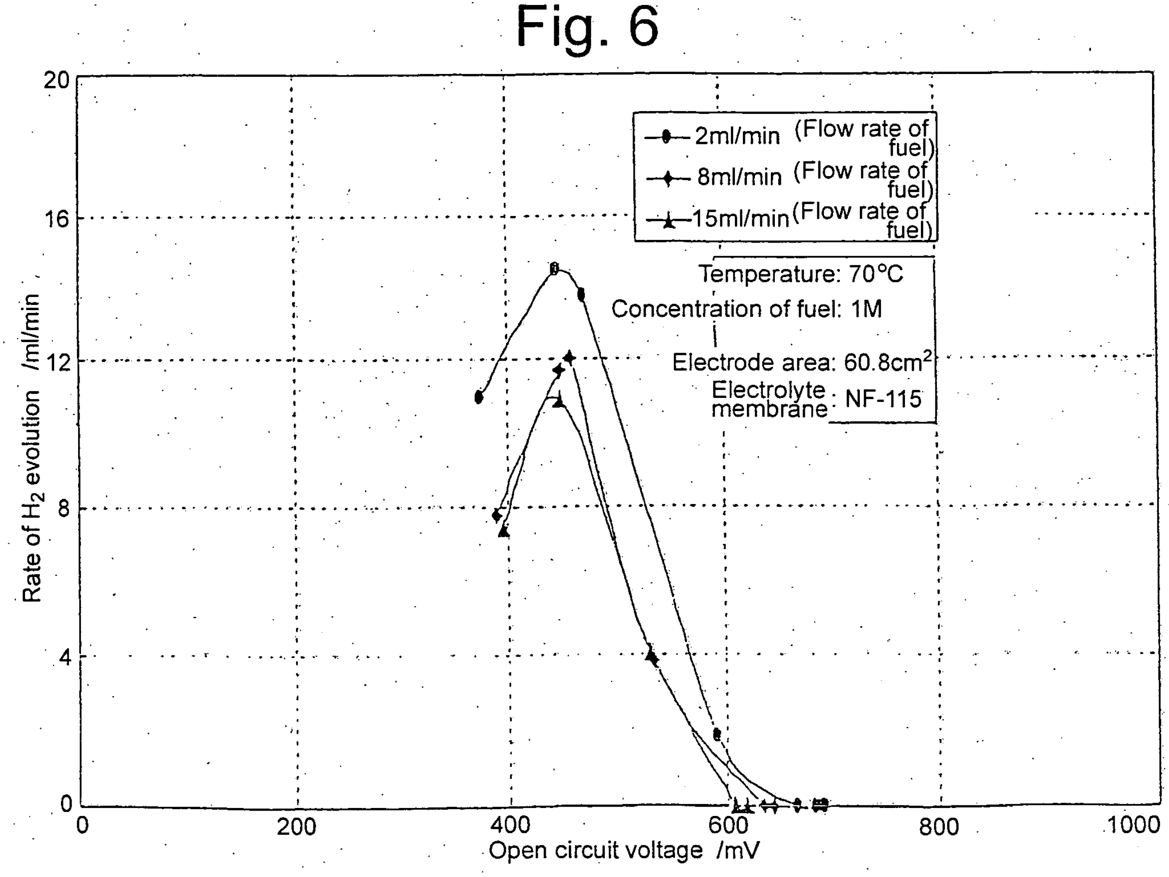
2ml/min (Flow rate of fuel)
8ml/min (Flow rate of fuel)
15ml/min (Flow rate of fuel)
Temperature: 70°C
Concentration of fuel: 1M
Electrode area: 60.8cm2
Electrolyte membrane: NF-115
Rate of H2 evolution /ml/min
Open circuit voltage /mV

Fig. 7

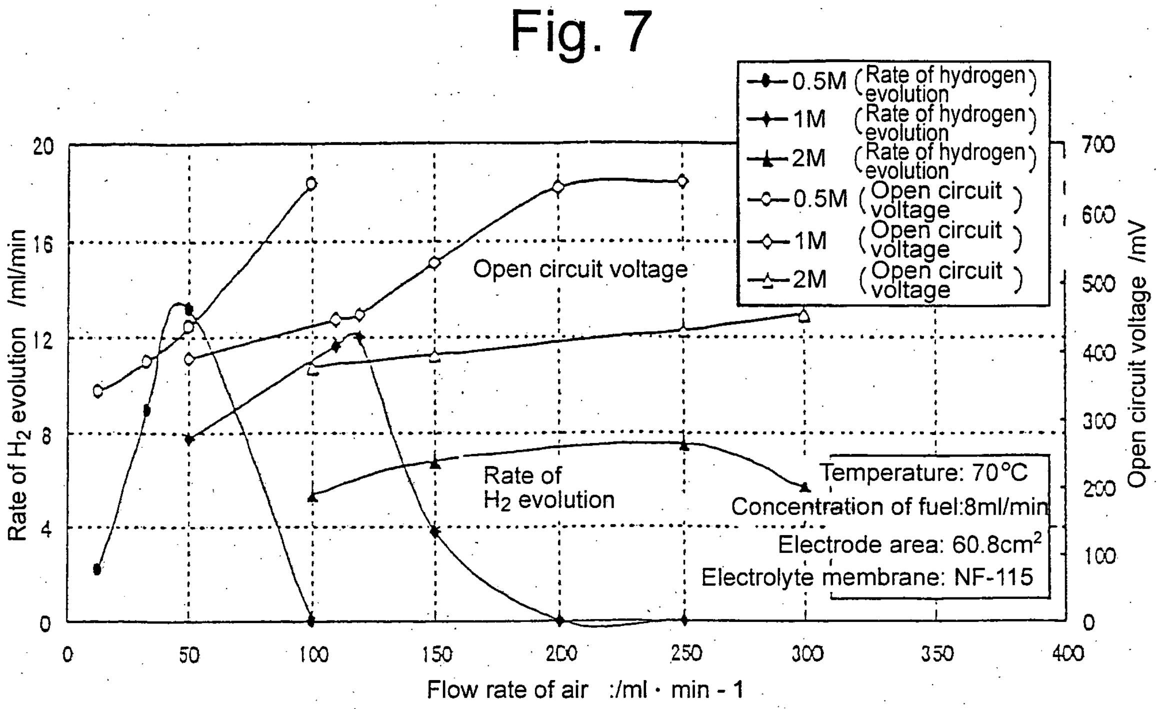
0.5M (Rate of hydrogen evolution)
1M (Rate of hydrogen evolution)
2M (Rate of hydrogen evolution)
0.5M (Open circuit voltage)
1M (Open circuit voltage)
2M (Open circuit voltage)
Open circuit voltage
Rate of H2 evolution
Temperature: 70°C
Concentration of fuel:8ml/min
Electrode area: 60.8cm2
Electrolyte membrane: NF-115
Rate of H2 evolution /ml/min
Open circuit voltage /mV
Flow rate of air :/ml · min - 1
0
4
8
12
16
20
100
200
300
400
500
600
700
50
150
250
350

Fig. 8

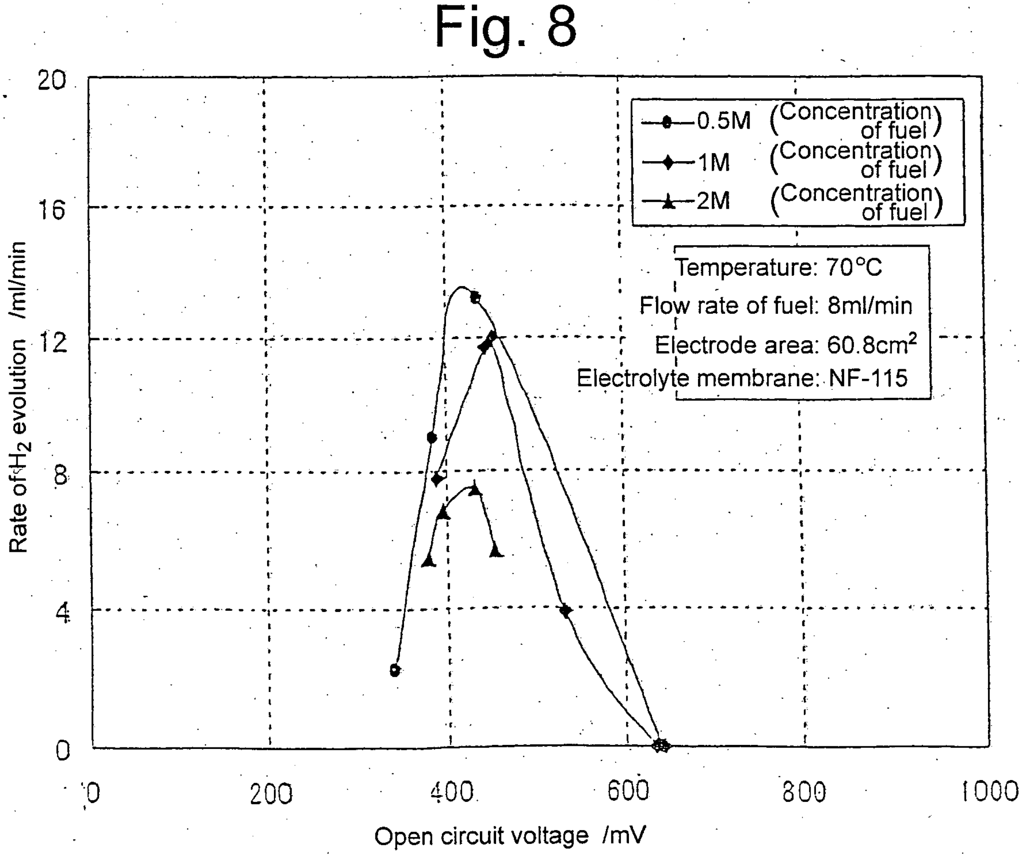
0.5M (Concentration of fuel)
1M (Concentration of fuel)
2M (Concentration of fuel)
Temperature: 70°C
Flow rate of fuel: 8ml/min
Electrode area: 60.8cm2
Electrolyte membrane: NF-115
Rate of H2 evolution /ml/min
Open circuit voltage /mV
0
4
8
12
16
20
200
400
600
800
1000

Fig. 9

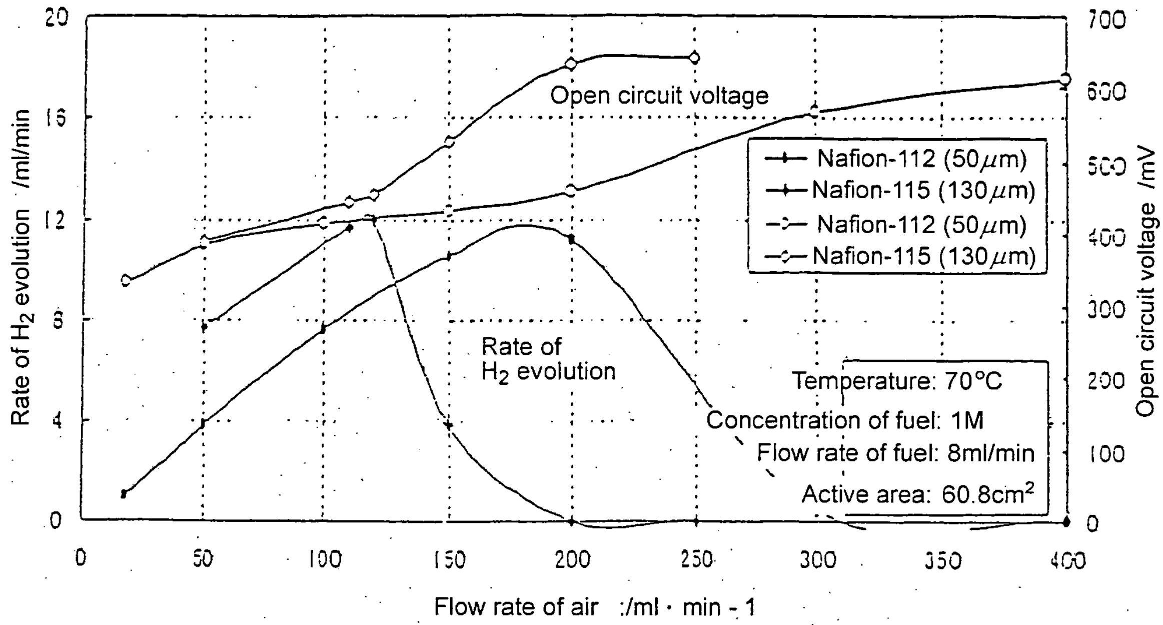
Rate of $H_2$ evolution /ml/min
Open circuit voltage /mV
Flow rate of air :/ml · min - 1
Open circuit voltage
Rate of $H_2$ evolution
Nafion-112 (50μm)
Nafion-115 (130μm)
Nafion-112 (50μm)
Nafion-115 (130μm)
Temperature: 70°C
Concentration of fuel: 1M
Flow rate of fuel: 8ml/min
Active area: 60.8cm²
0
4
8
12
16
20
0
100
200
300
400
500
600
700
0
50
100
150
200
250
300
350
400

Fig. 10

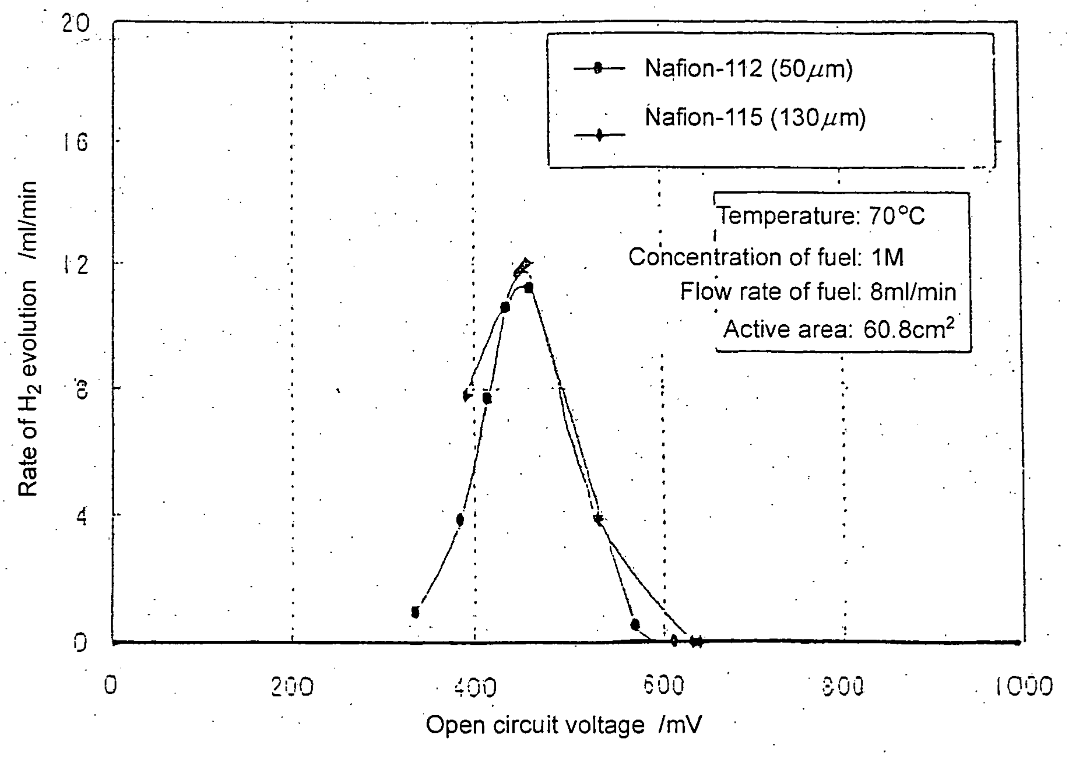
Rate of $H_2$ evolution /ml/min
Open circuit voltage /mV
Nafion-112 (50μm)
Nafion-115 (130μm)
Temperature: 70°C
Concentration of fuel: 1M
Flow rate of fuel: 8ml/min
Active area: 60.8cm²
0
4
8
12
16
20
0
200
400
600
800
1000

Fig. 11

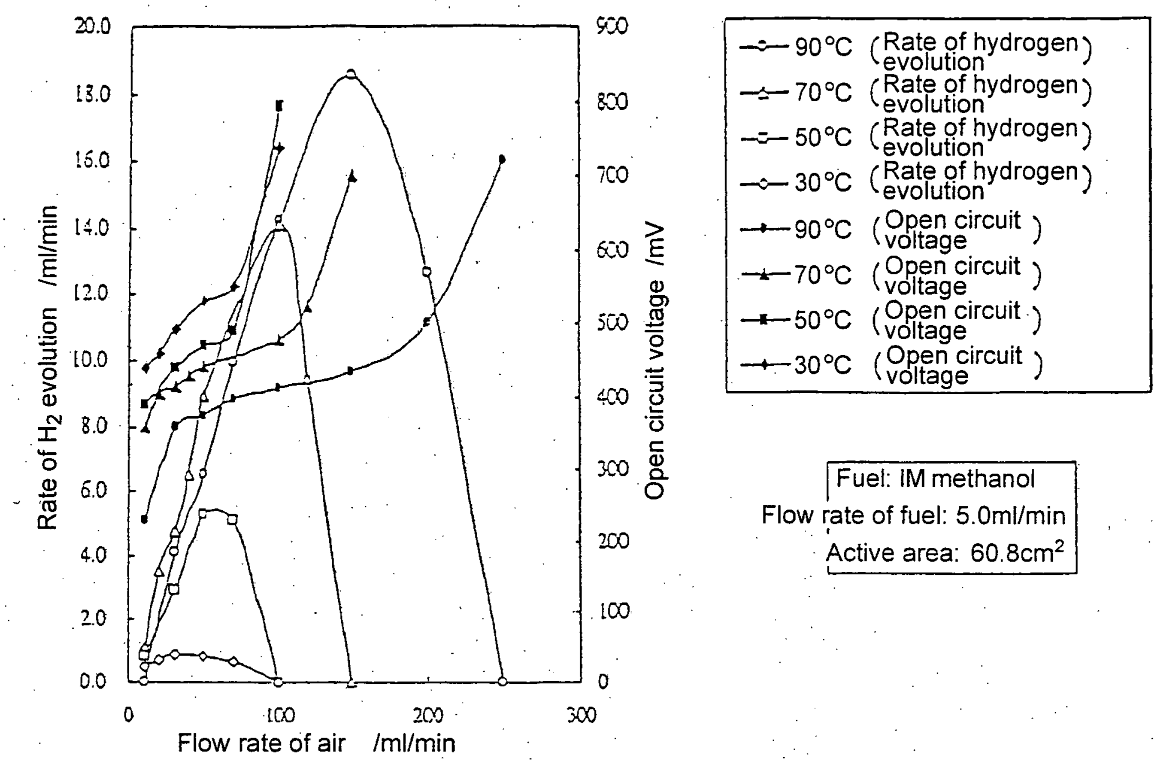
20.0
18.0
16.0
14.0
12.0
10.0
8.0
6.0
4.0
2.0
0.0
Rate of $H_2$ evolution /ml/min
900
800
700
600
500
400
300
200
100
0
Open circuit voltage /mV
0
100
200
300
Flow rate of air /ml/min
90°C (Rate of hydrogen evolution)
70°C (Rate of hydrogen evolution)
50°C (Rate of hydrogen evolution)
30°C (Rate of hydrogen evolution)
90°C (Open circuit voltage)
70°C (Open circuit voltage)
50°C (Open circuit voltage)
30°C (Open circuit voltage)
Fuel: IM methanol
Flow rate of fuel: 5.0ml/min
Active area: 60.8cm²

Fig. 12

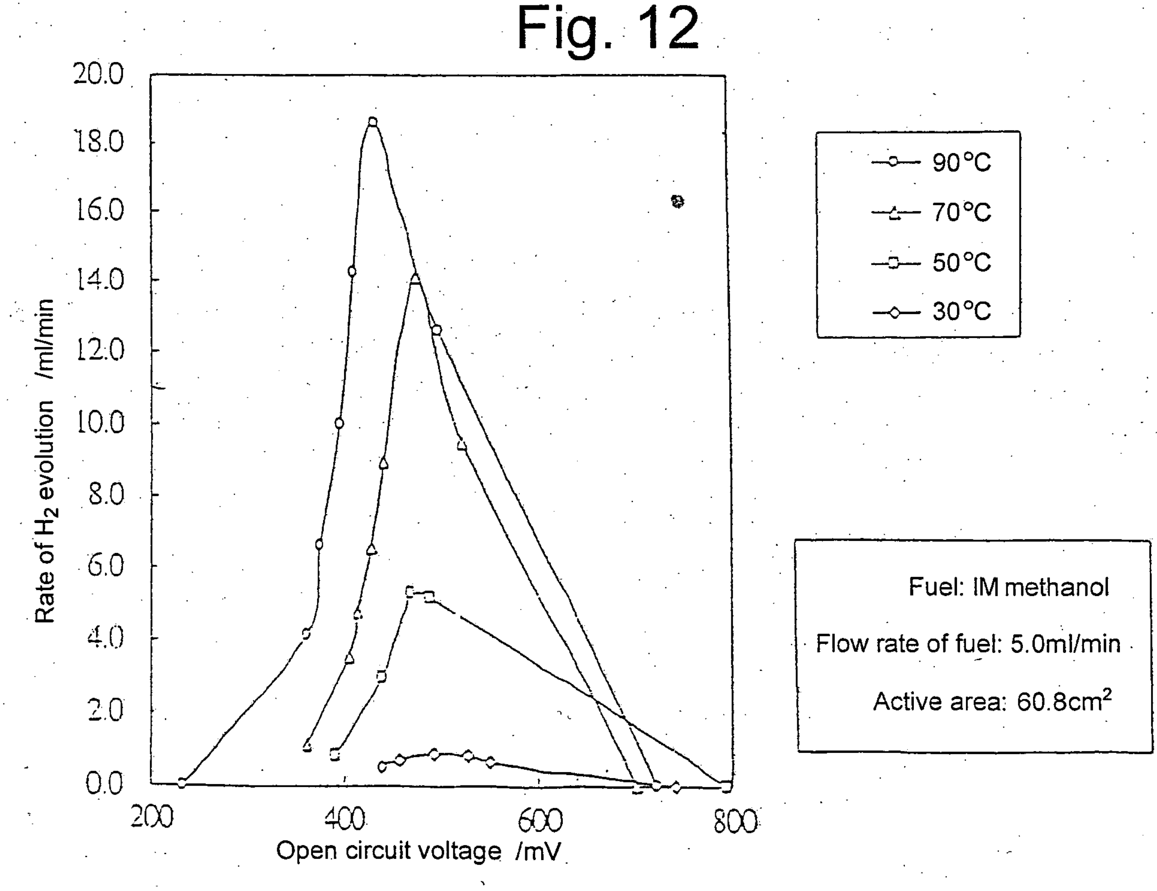
20.0
18.0
16.0
14.0
12.0
10.0
8.0
6.0
4.0
2.0
0.0
Rate of $H_2$ evolution /ml/min
200
400
600
800
Open circuit voltage /mV
90°C
70°C
50°C
30°C
Fuel: IM methanol
Flow rate of fuel: 5.0ml/min
Active area: 60.8cm²

Fig. 13

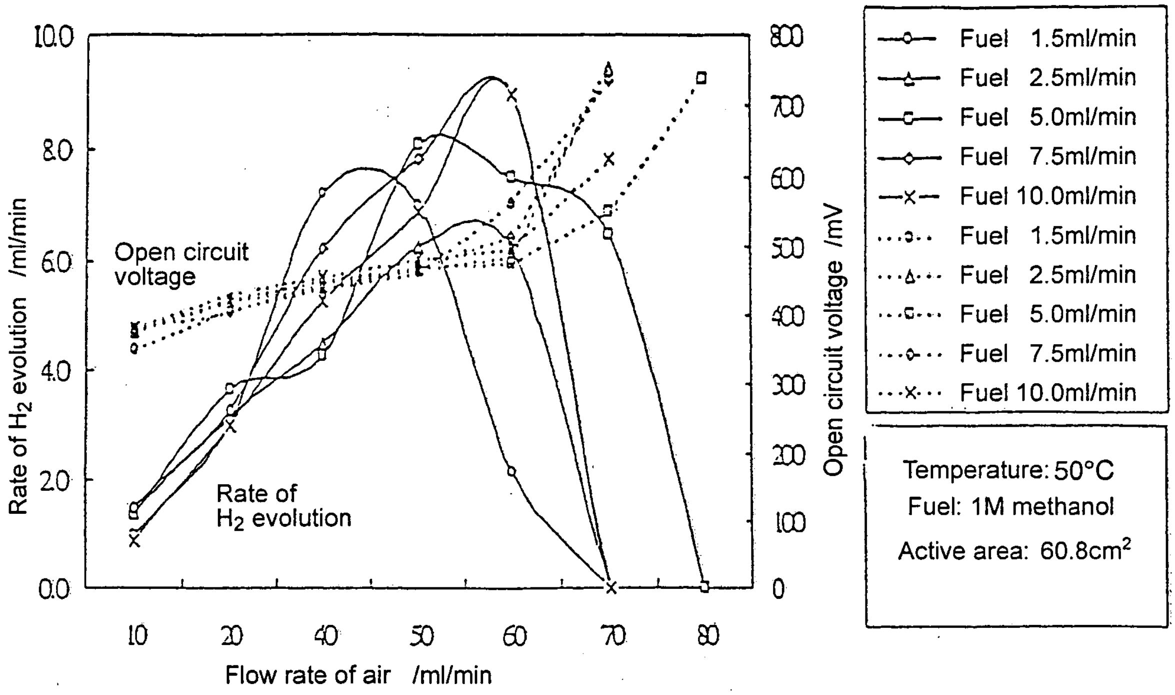
10.0
8.0
6.0
4.0
2.0
0.0
Rate of $H_2$ evolution /ml/min
Open circuit voltage
Rate of $H_2$ evolution
800
700
600
500
400
300
200
100
0
Open circuit voltage /mV
10
20
40
50
60
70
80
Flow rate of air /ml/min
Fuel 1.5ml/min
Fuel 2.5ml/min
Fuel 5.0ml/min
Fuel 7.5ml/min
Fuel 10.0ml/min
Fuel 1.5ml/min
Fuel 2.5ml/min
Fuel 5.0ml/min
Fuel 7.5ml/min
Fuel 10.0ml/min
Temperature: 50°C
Fuel: 1M methanol
Active area: 60.8cm²

Fig. 14

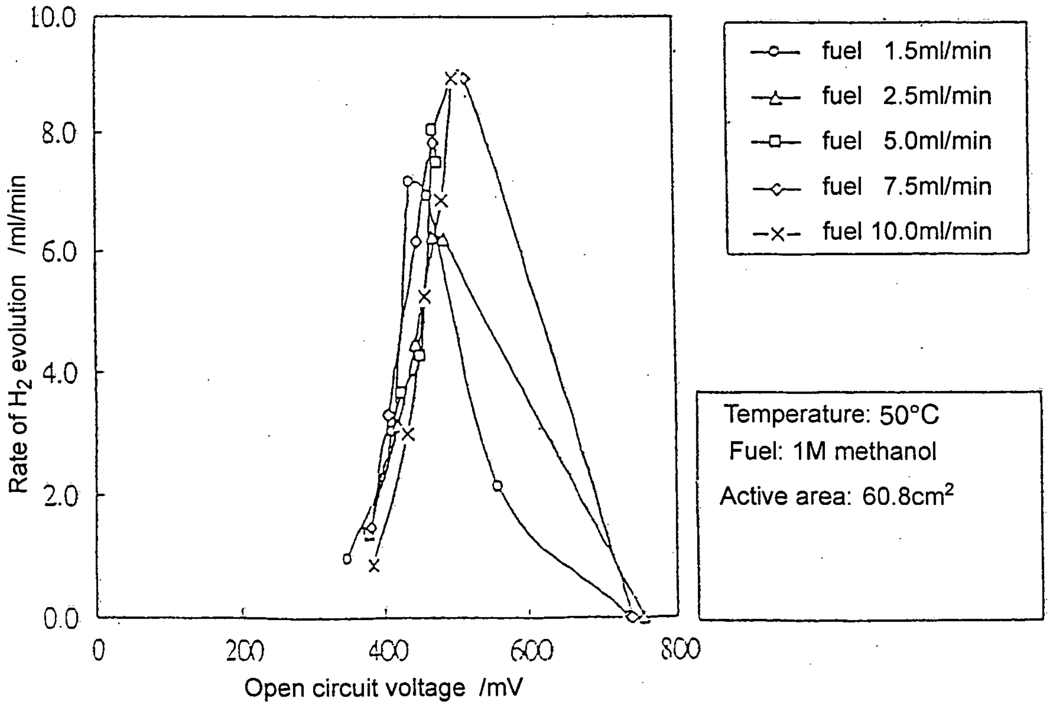
10.0
8.0
6.0
4.0
2.0
0.0
Rate of $H_2$ evolution /ml/min
0
200
400
600
800
Open circuit voltage /mV
fuel 1.5ml/min
fuel 2.5ml/min
fuel 5.0ml/min
fuel 7.5ml/min
fuel 10.0ml/min
Temperature: 50°C
Fuel: 1M methanol
Active area: 60.8cm²

Fig. 15

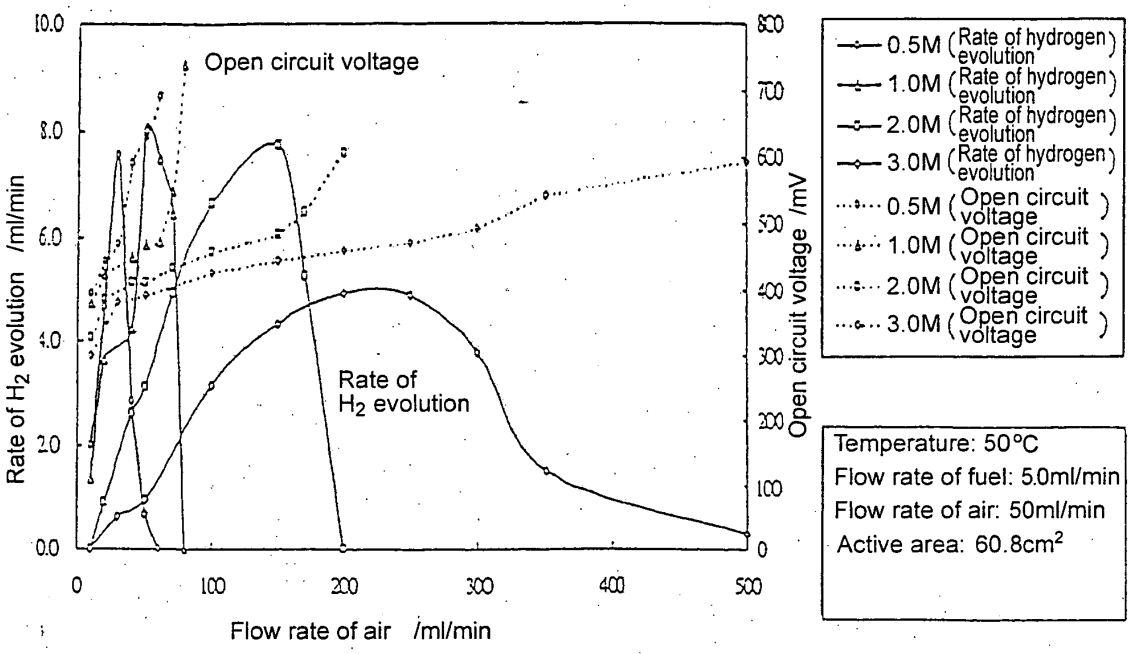
Open circuit voltage
Rate of
H2 evolution
Rate of H2 evolution /ml/min
Open circuit voltage /mV
Flow rate of air /ml/min
0.5M (Rate of hydrogen evolution)
1.0M (Rate of hydrogen evolution)
2.0M (Rate of hydrogen evolution)
3.0M (Rate of hydrogen evolution)
0.5M (Open circuit voltage)
1.0M (Open circuit voltage)
2.0M (Open circuit voltage)
3.0M (Open circuit voltage)
Temperature: 50°C
Flow rate of fuel: 5.0ml/min
Flow rate of air: 50ml/min
Active area: 60.8cm2

Fig. 16

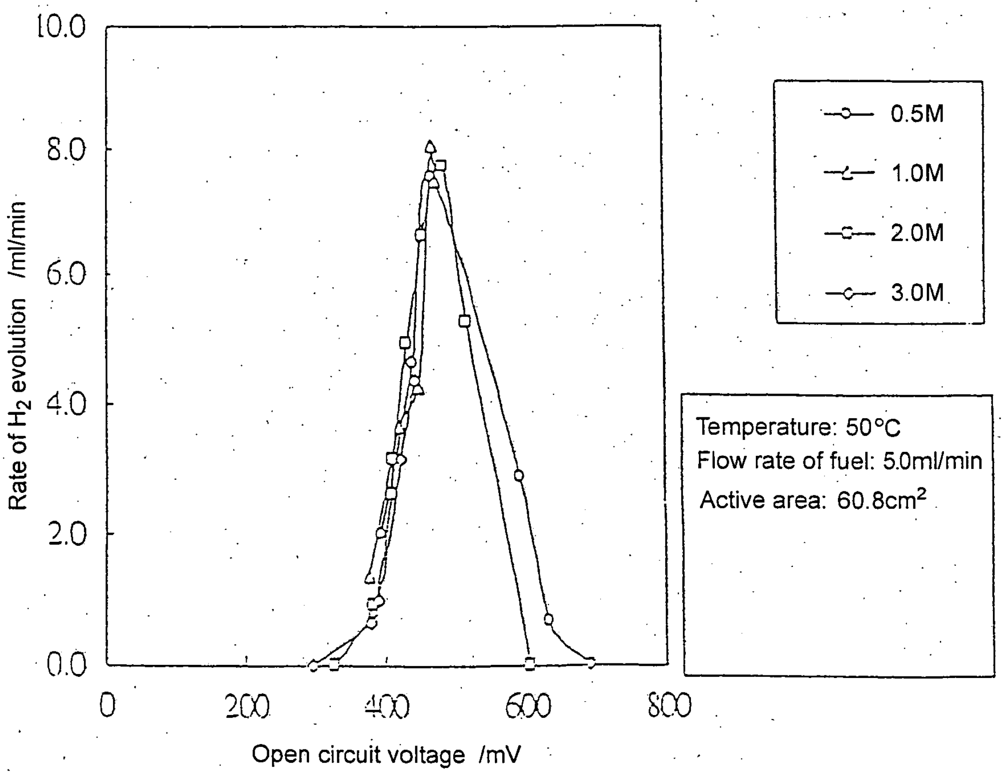
Rate of H2 evolution /ml/min
Open circuit voltage /mV
0.5M
1.0M
2.0M
3.0M
Temperature: 50°C
Flow rate of fuel: 5.0ml/min
Active area: 60.8cm2

# Fig. 17

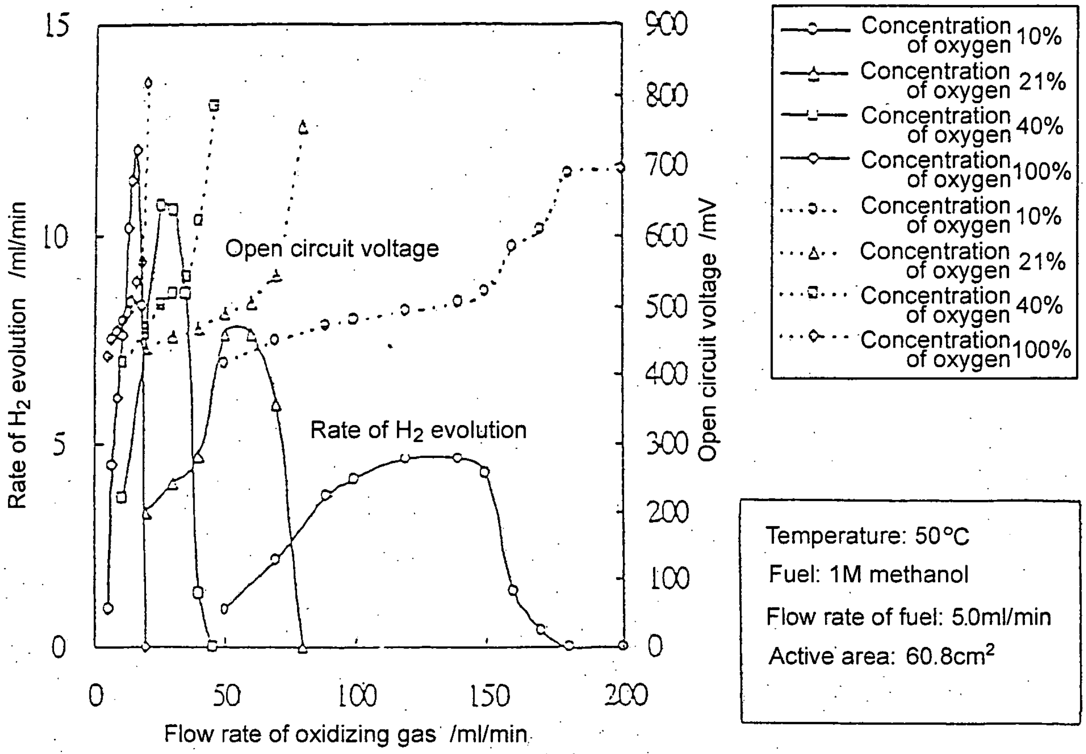
Rate of $H_2$ evolution /ml/min
Open circuit voltage /mV
Flow rate of oxidizing gas /ml/min
Open circuit voltage
Rate of $H_2$ evolution
15
10
5
0
900
800
700
600
500
400
300
200
100
0
0
50
100
150
200
Concentration of oxygen 10%
Concentration of oxygen 21%
Concentration of oxygen 40%
Concentration of oxygen 100%
Concentration of oxygen 10%
Concentration of oxygen 21%
Concentration of oxygen 40%
Concentration of oxygen 100%
Temperature: 50°C
Fuel: 1M methanol
Flow rate of fuel: 5.0ml/min
Active area: 60.8cm²

# Fig. 18

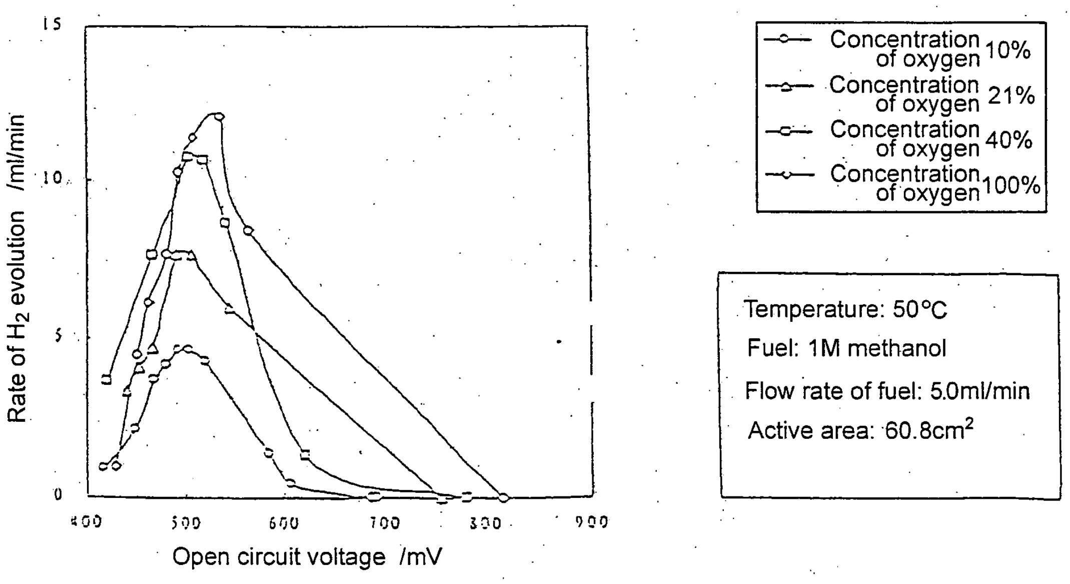
Rate of $H_2$ evolution /ml/min
Open circuit voltage /mV
15
10
5
0
400
500
600
700
800
900
Concentration of oxygen 10%
Concentration of oxygen 21%
Concentration of oxygen 40%
Concentration of oxygen 100%
Temperature: 50°C
Fuel: 1M methanol
Flow rate of fuel: 5.0ml/min
Active area: 60.8cm²

Fig. 19

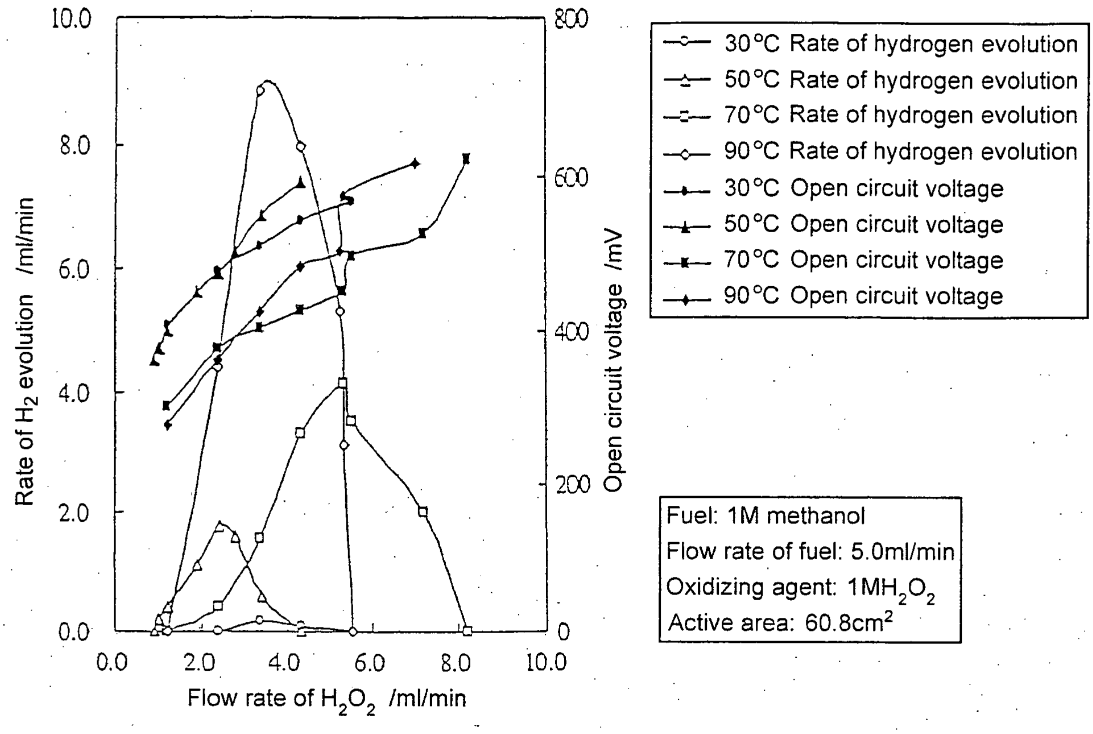
10.0
8.0
6.0
4.0
2.0
0.0
Rate of H2 evolution /ml/min
0.0 2.0 4.0 6.0 8.0 10.0
Flow rate of H2O2 /ml/min
800
600
400
200
0
Open circuit voltage /mV
30°C Rate of hydrogen evolution
50°C Rate of hydrogen evolution
70°C Rate of hydrogen evolution
90°C Rate of hydrogen evolution
30°C Open circuit voltage
50°C Open circuit voltage
70°C Open circuit voltage
90°C Open circuit voltage
Fuel: 1M methanol
Flow rate of fuel: 5.0ml/min
Oxidizing agent: 1MH2O2
Active area: 60.8cm2

Fig. 20

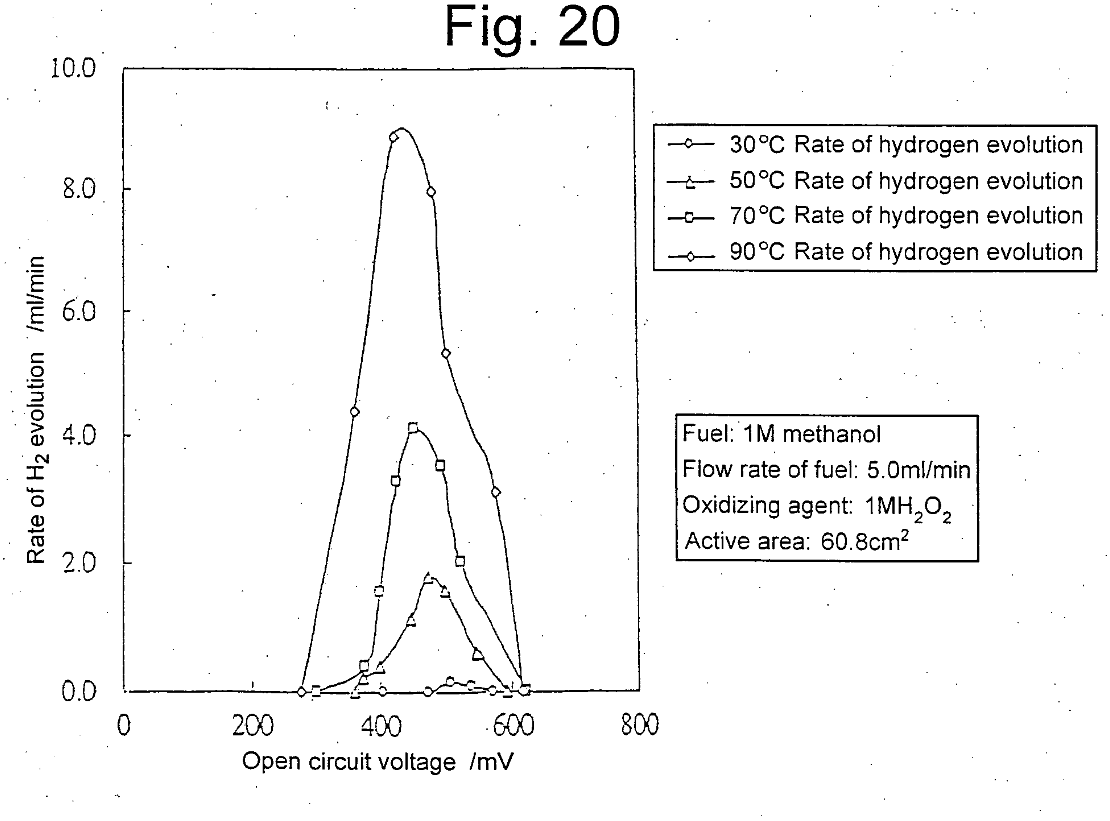
10.0
8.0
6.0
4.0
2.0
0.0
Rate of H2 evolution /ml/min
0 200 400 600 800
Open circuit voltage /mV
30°C Rate of hydrogen evolution
50°C Rate of hydrogen evolution
70°C Rate of hydrogen evolution
90°C Rate of hydrogen evolution
Fuel: 1M methanol
Flow rate of fuel: 5.0ml/min
Oxidizing agent: 1MH2O2
Active area: 60.8cm2

Fig. 21

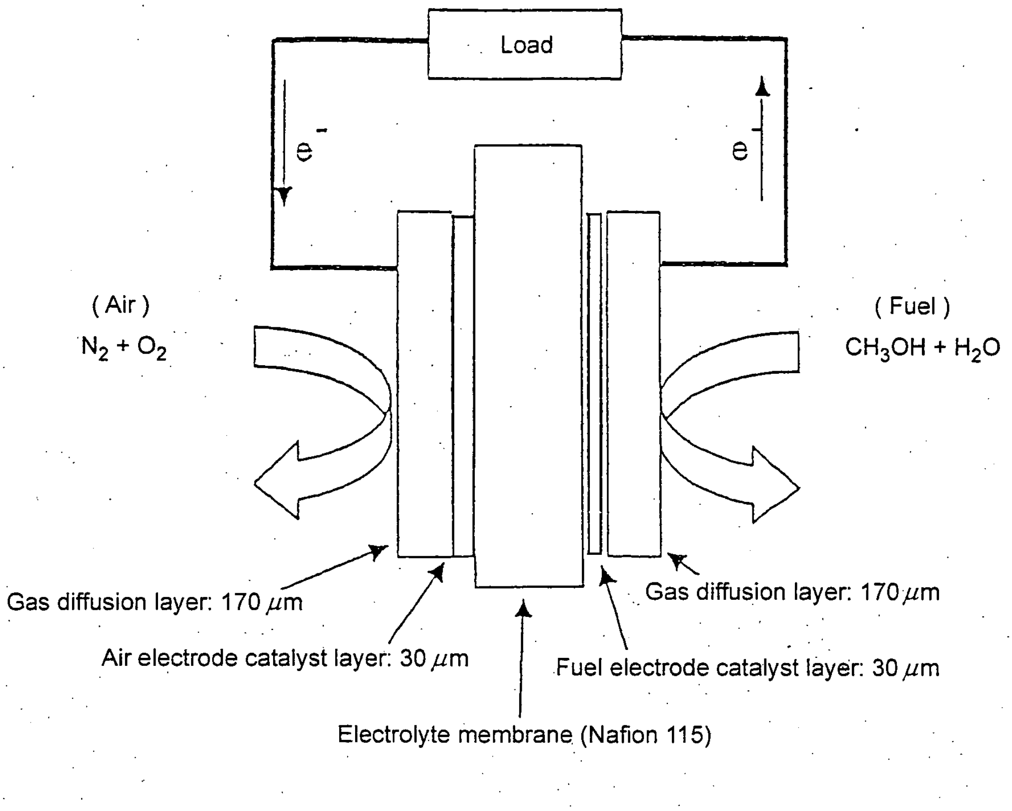
Load
e⁻
e⁻
( Air )
$N_2 + O_2$
( Fuel )
$CH_3OH + H_2O$
Gas diffusion layer: 170 μm
Air electrode catalyst layer: 30 μm
Electrolyte membrane (Nafion 115)
Fuel electrode catalyst layer: 30 μm
Gas diffusion layer: 170 μm

Fig. 22

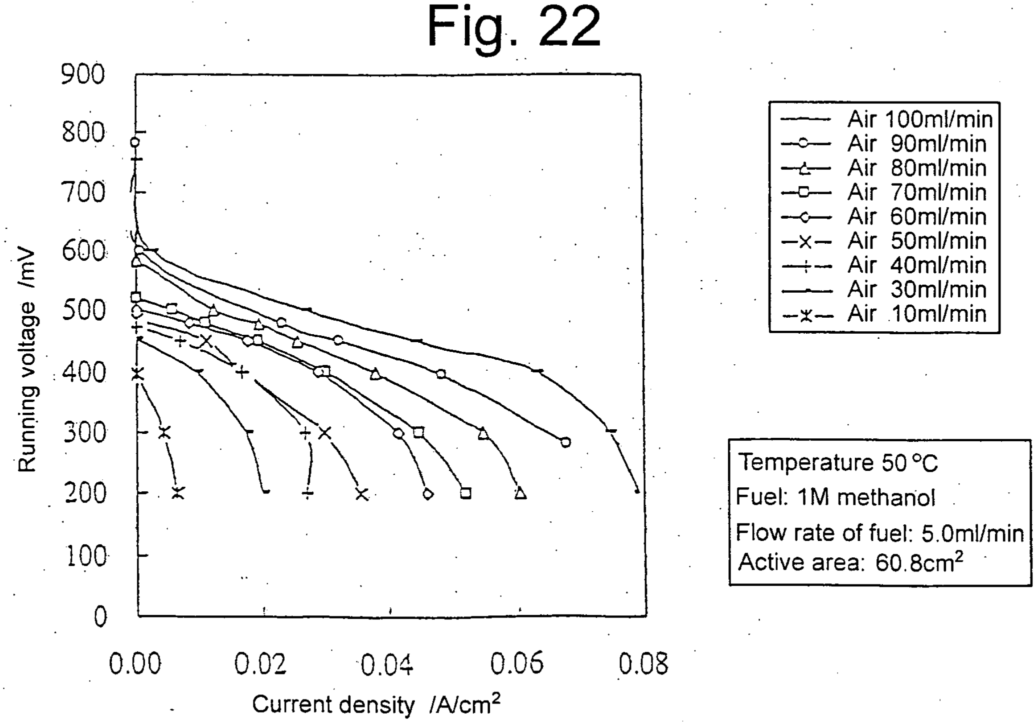
Running voltage /mV
900
800
700
600
500
400
300
200
100
0
0.00
0.02
0.04
0.06
0.08
Current density /A/cm²
Air 100ml/min
Air 90ml/min
Air 80ml/min
Air 70ml/min
Air 60ml/min
Air 50ml/min
Air 40ml/min
Air 30ml/min
Air 10ml/min
Temperature 50 °C
Fuel: 1M methanol
Flow rate of fuel: 5.0ml/min
Active area: 60.8cm²

Fig. 23

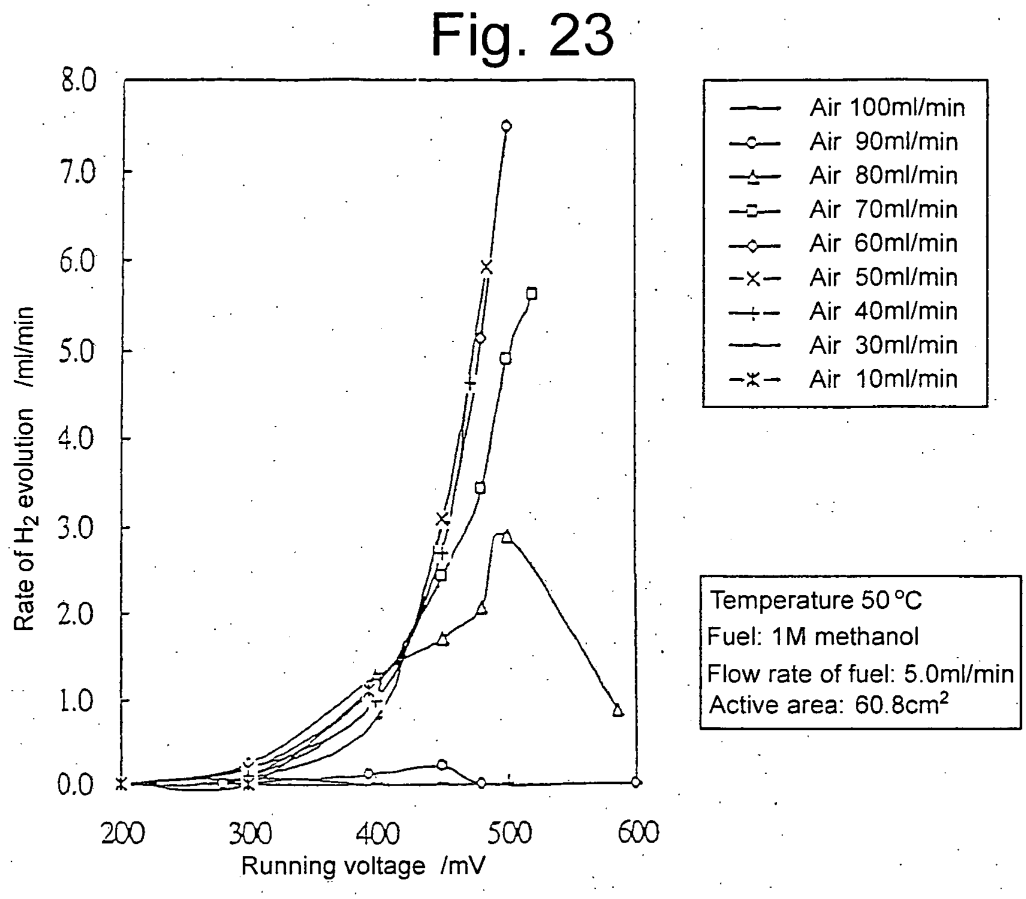
8.0
7.0
6.0
5.0
4.0
3.0
2.0
1.0
0.0
Rate of $H_2$ evolution /ml/min
200
300
400
500
600
Running voltage /mV
Air 100ml/min
Air 90ml/min
Air 80ml/min
Air 70ml/min
Air 60ml/min
Air 50ml/min
Air 40ml/min
Air 30ml/min
Air 10ml/min
Temperature 50 °C
Fuel: 1M methanol
Flow rate of fuel: 5.0ml/min
Active area: 60.8cm²

Fig. 24

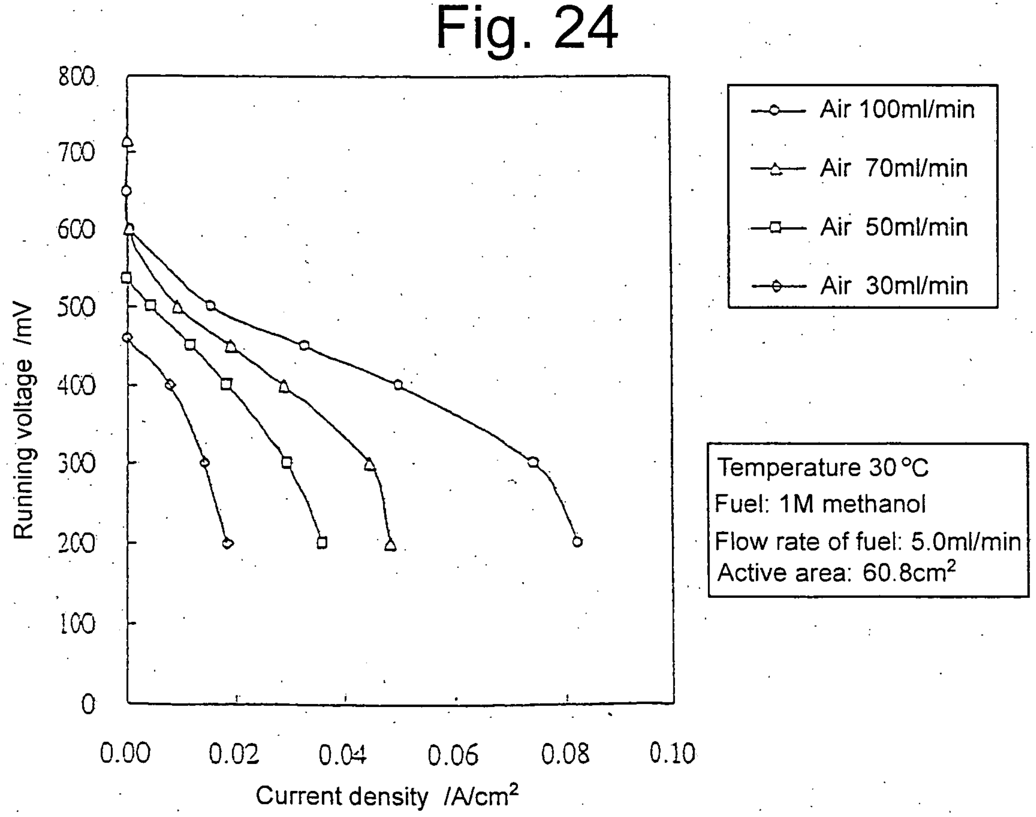
800
700
600
500
400
300
200
100
0
Running voltage /mV
0.00
0.02
0.04
0.06
0.08
0.10
Current density /A/cm²
Air 100ml/min
Air 70ml/min
Air 50ml/min
Air 30ml/min
Temperature 30 °C
Fuel: 1M methanol
Flow rate of fuel: 5.0ml/min
Active area: 60.8cm²

Fig. 25

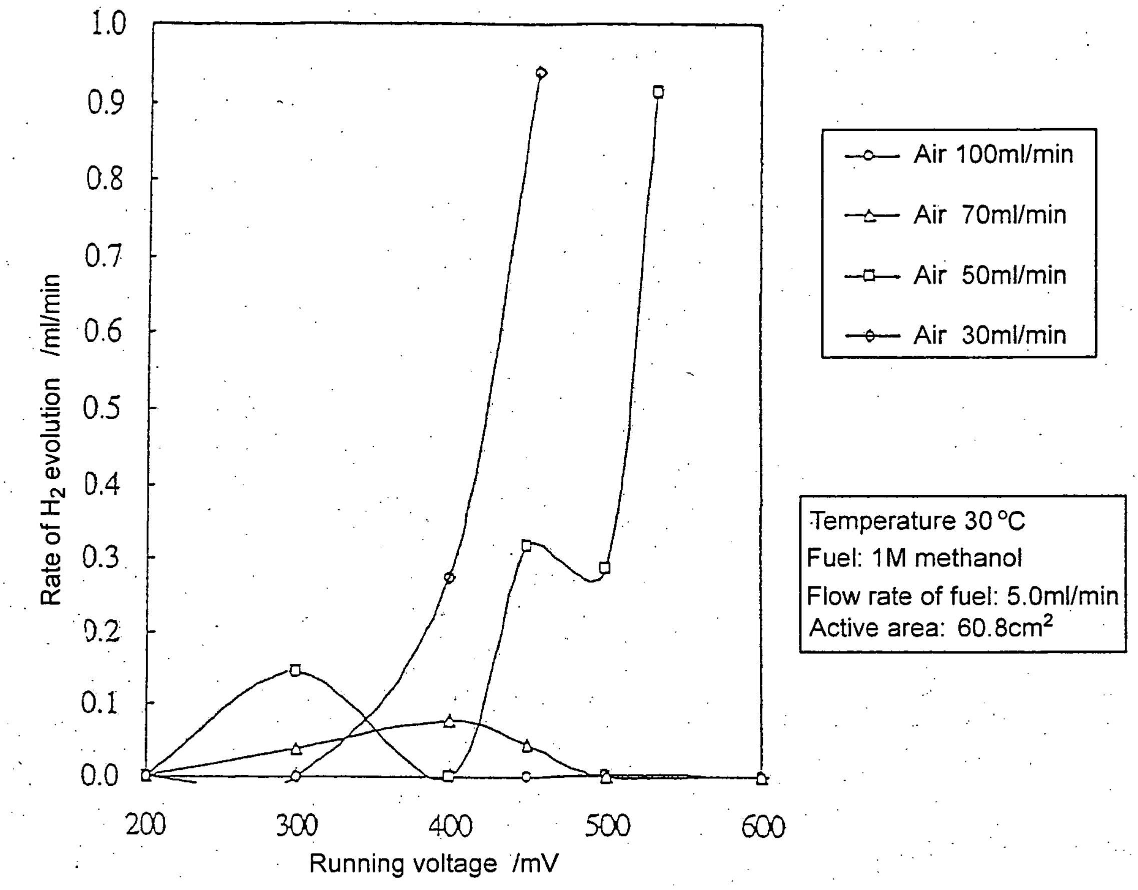
Rate of $H_2$ evolution /ml/min
1.0
0.9
0.8
0.7
0.6
0.5
0.4
0.3
0.2
0.1
0.0
200
300
400
500
600
Running voltage /mV
Air 100ml/min
Air 70ml/min
Air 50ml/min
Air 30ml/min
Temperature 30 °C
Fuel: 1M methanol
Flow rate of fuel: 5.0ml/min
Active area: 60.8cm$^2$

Fig. 26

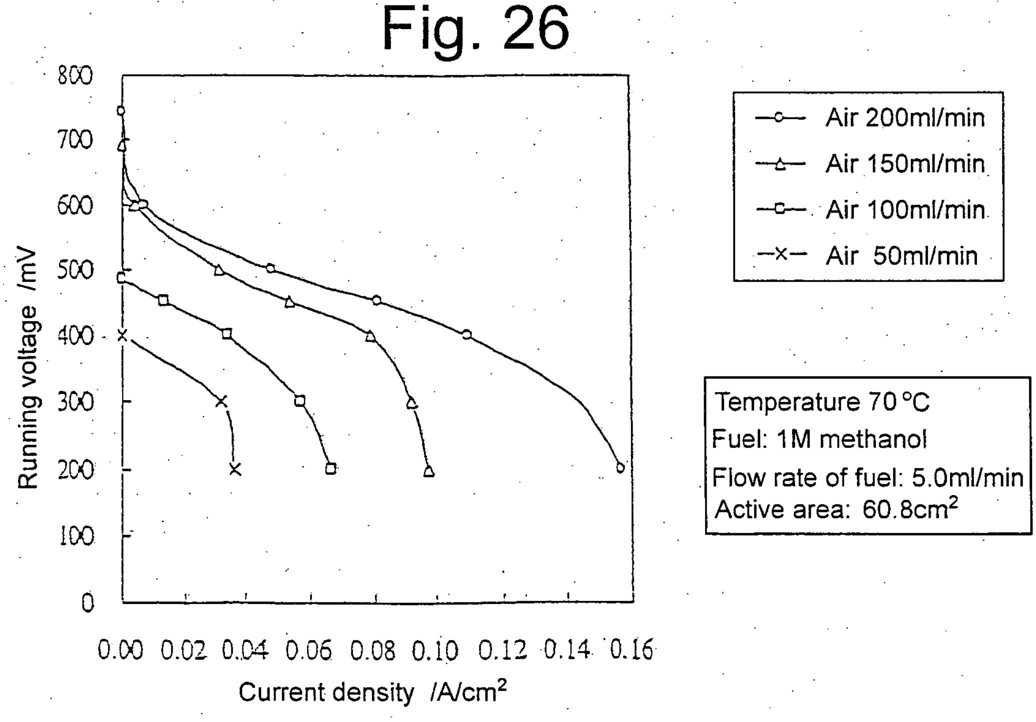
Running voltage /mV
800
700
600
500
400
300
200
100
0
0.00 0.02 0.04 0.06 0.08 0.10 0.12 0.14 0.16
Current density /A/cm$^2$
Air 200ml/min
Air 150ml/min
Air 100ml/min
Air 50ml/min
Temperature 70 °C
Fuel: 1M methanol
Flow rate of fuel: 5.0ml/min
Active area: 60.8cm$^2$

Fig. 27

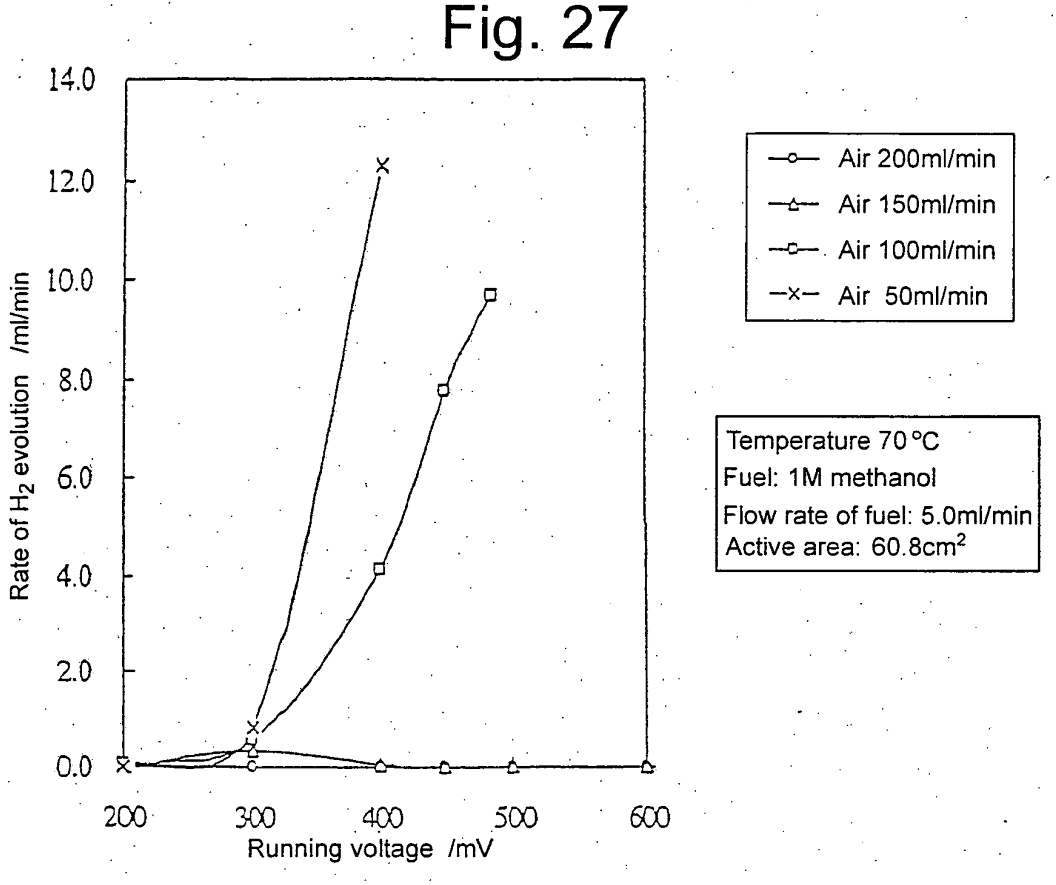
14.0
12.0
10.0
8.0
6.0
4.0
2.0
0.0
Rate of H2 evolution /ml/min
200
300
400
500
600
Running voltage /mV
Air 200ml/min
Air 150ml/min
Air 100ml/min
Air 50ml/min
Temperature 70 °C
Fuel: 1M methanol
Flow rate of fuel: 5.0ml/min
Active area: 60.8cm2

Fig. 28

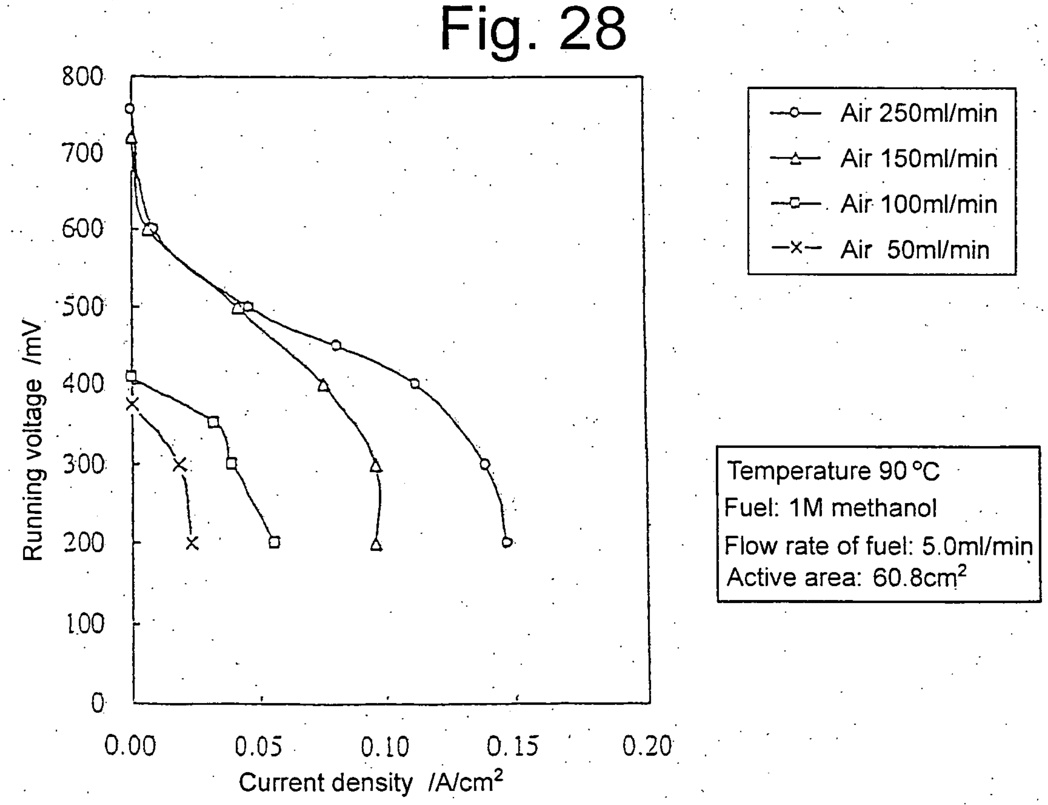
800
700
600
500
400
300
200
100
0
Running voltage /mV
0.00
0.05
0.10
0.15
0.20
Current density /A/cm2
Air 250ml/min
Air 150ml/min
Air 100ml/min
Air 50ml/min
Temperature 90 °C
Fuel: 1M methanol
Flow rate of fuel: 5.0ml/min
Active area: 60.8cm2

Fig. 29

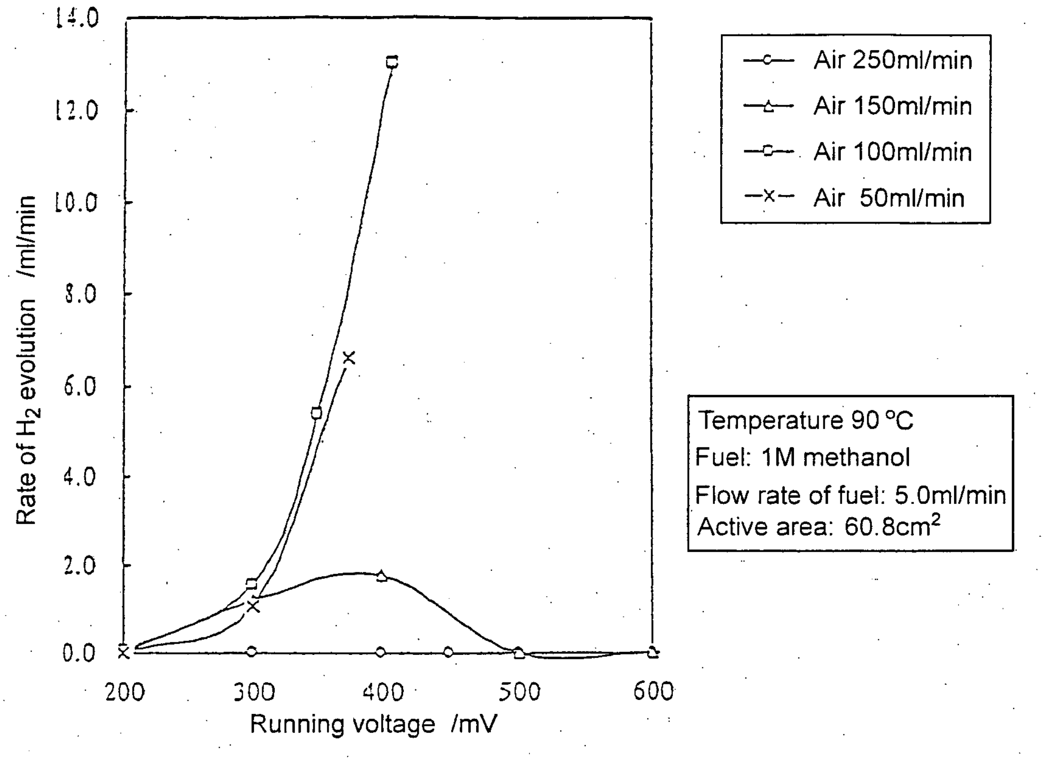
Rate of $H_2$ evolution /ml/min
14.0
12.0
10.0
8.0
6.0
4.0
2.0
0.0
200
300
400
500
600
Running voltage /mV
Air 250ml/min
Air 150ml/min
Air 100ml/min
Air 50ml/min
Temperature 90 °C
Fuel: 1M methanol
Flow rate of fuel: 5.0ml/min
Active area: 60.8cm$^2$

Fig. 30

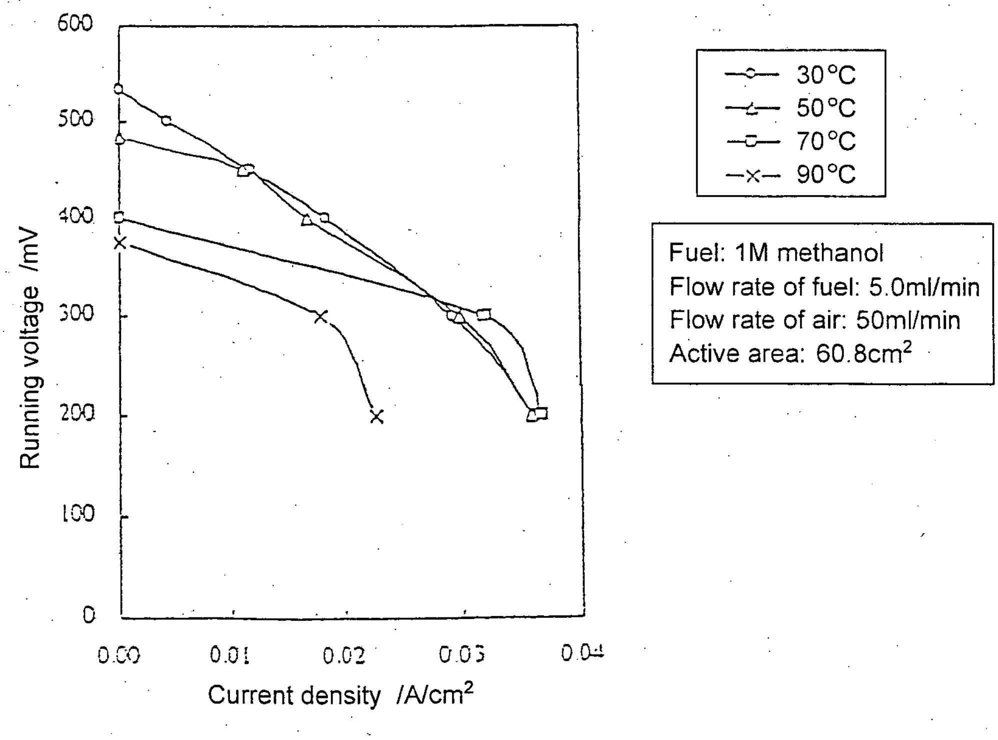
Running voltage /mV
600
500
400
300
200
100
0
0.00
0.01
0.02
0.03
0.04
Current density /A/cm$^2$
30°C
50°C
70°C
90°C
Fuel: 1M methanol
Flow rate of fuel: 5.0ml/min
Flow rate of air: 50ml/min
Active area: 60.8cm$^2$

Fig. 31

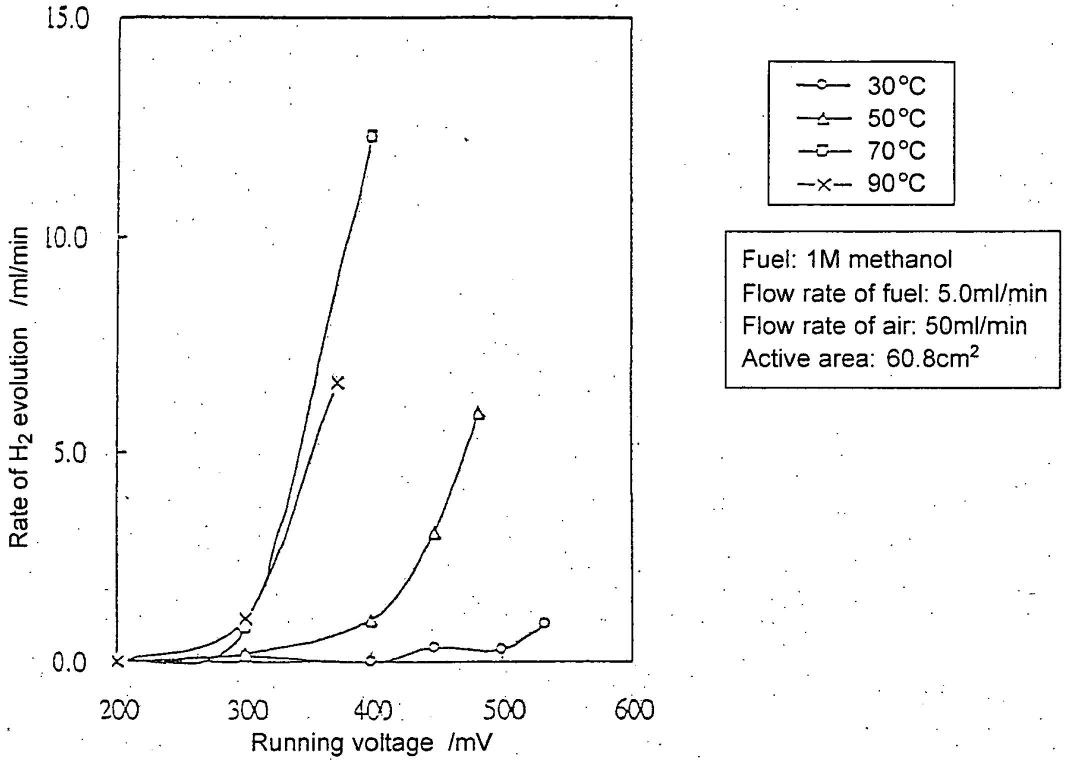
15.0
10.0
5.0
0.0
Rate of $H_2$ evolution /ml/min
200
300
400
500
600
Running voltage /mV
30°C
50°C
70°C
90°C
Fuel: 1M methanol
Flow rate of fuel: 5.0ml/min
Flow rate of air: 50ml/min
Active area: 60.8cm$^2$

Fig. 32

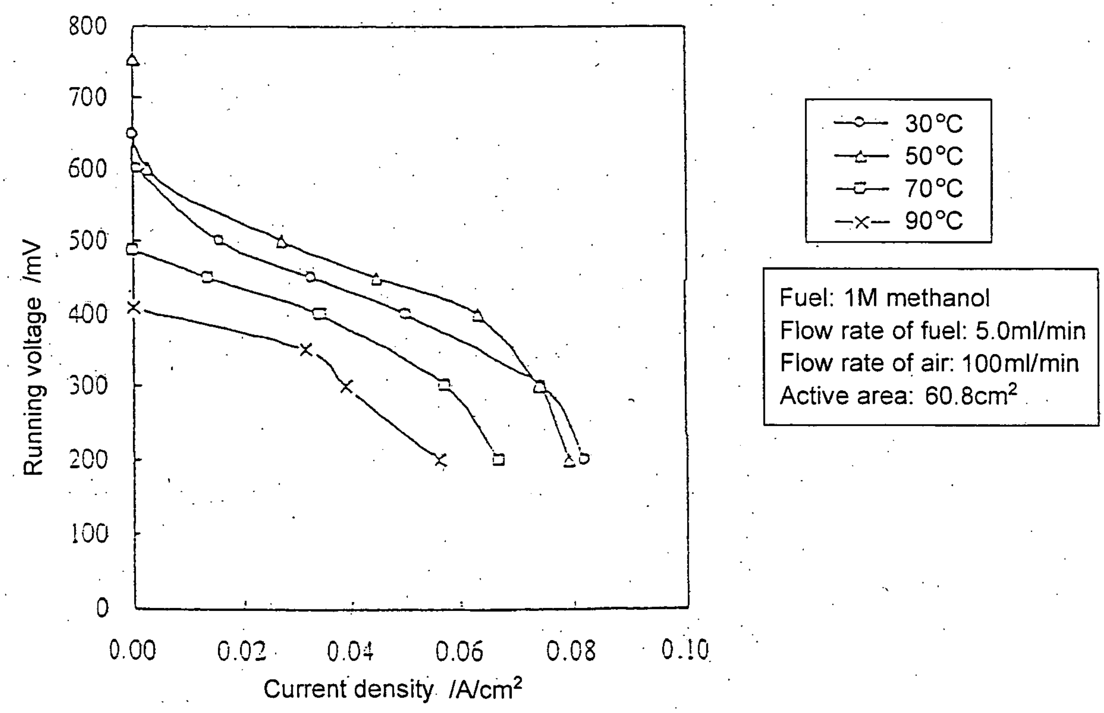
800
700
600
500
400
300
200
100
0
Running voltage /mV
0.00
0.02
0.04
0.06
0.08
0.10
Current density /A/cm$^2$
30°C
50°C
70°C
90°C
Fuel: 1M methanol
Flow rate of fuel: 5.0ml/min
Flow rate of air: 100ml/min
Active area: 60.8cm$^2$

Fig. 33

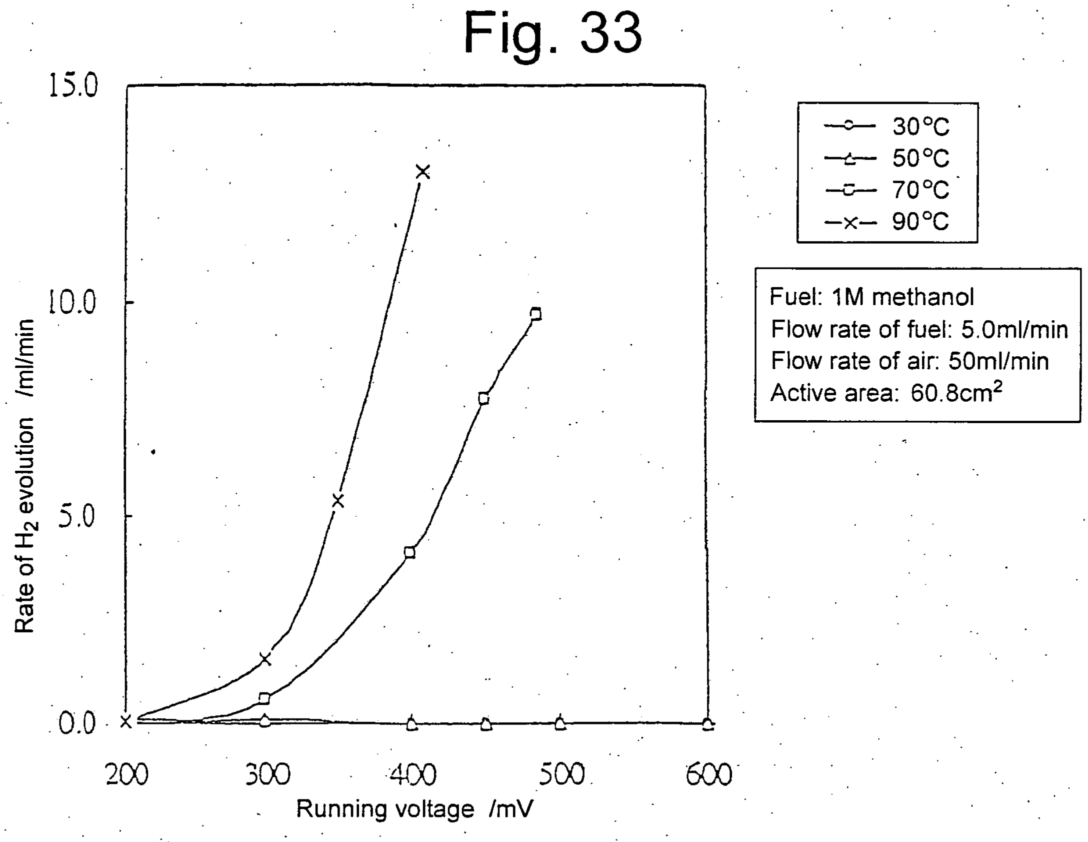
15.0
10.0
5.0
0.0
Rate of $H_2$ evolution /ml/min
200
300
400
500
600
Running voltage /mV
30°C
50°C
70°C
90°C
Fuel: 1M methanol
Flow rate of fuel: 5.0ml/min
Flow rate of air: 50ml/min
Active area: 60.8cm$^2$

Fig. 34

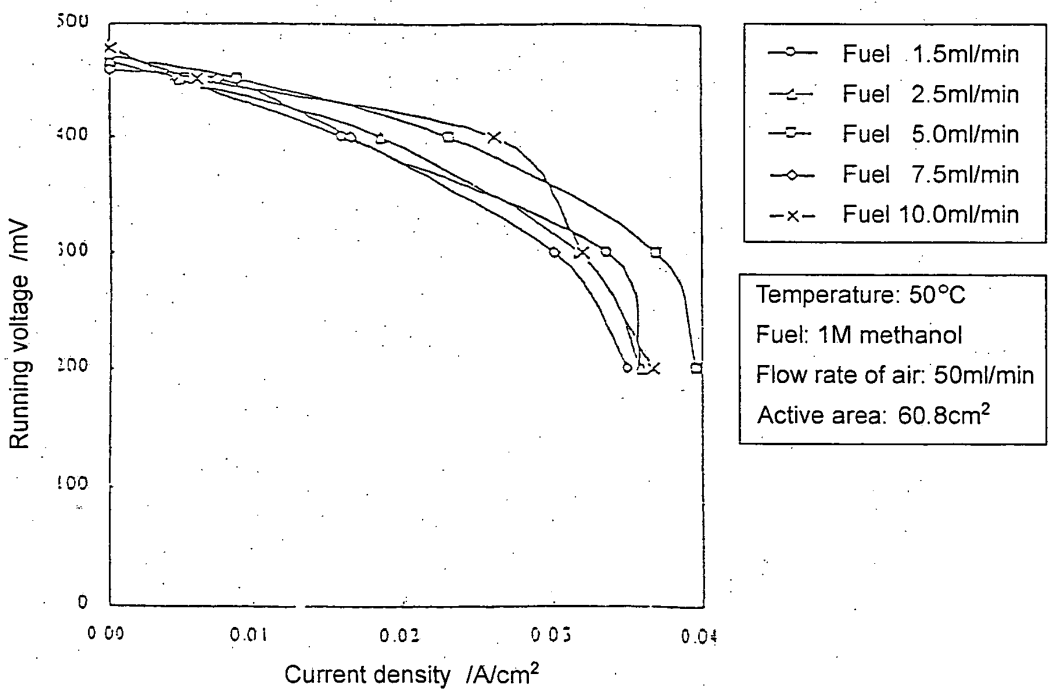
500
400
300
200
100
0
Running voltage /mV
0.00
0.01
0.02
0.03
0.04
Current density /A/cm$^2$
Fuel 1.5ml/min
Fuel 2.5ml/min
Fuel 5.0ml/min
Fuel 7.5ml/min
Fuel 10.0ml/min
Temperature: 50°C
Fuel: 1M methanol
Flow rate of air: 50ml/min
Active area: 60.8cm$^2$

Fig. 35

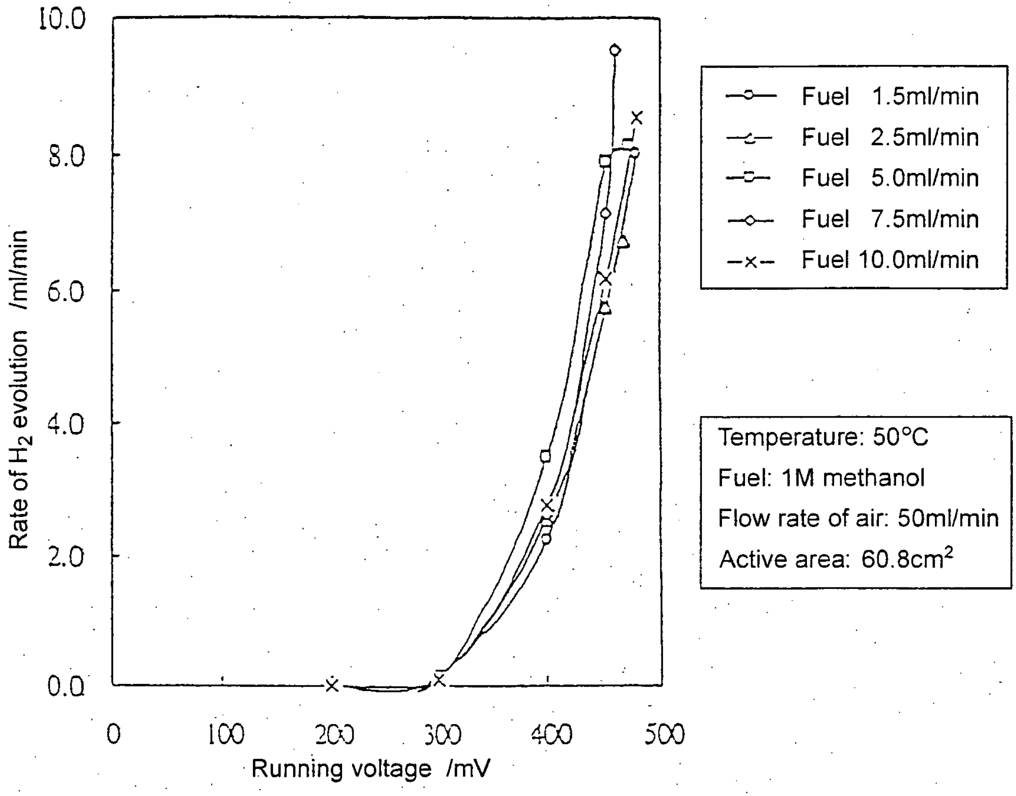
10.0
8.0
6.0
4.0
2.0
0.0
Rate of $H_2$ evolution /ml/min
0
100
200
300
400
500
Running voltage /mV
Fuel 1.5ml/min
Fuel 2.5ml/min
Fuel 5.0ml/min
Fuel 7.5ml/min
Fuel 10.0ml/min
Temperature: 50°C
Fuel: 1M methanol
Flow rate of air: 50ml/min
Active area: 60.8cm²

Fig. 37

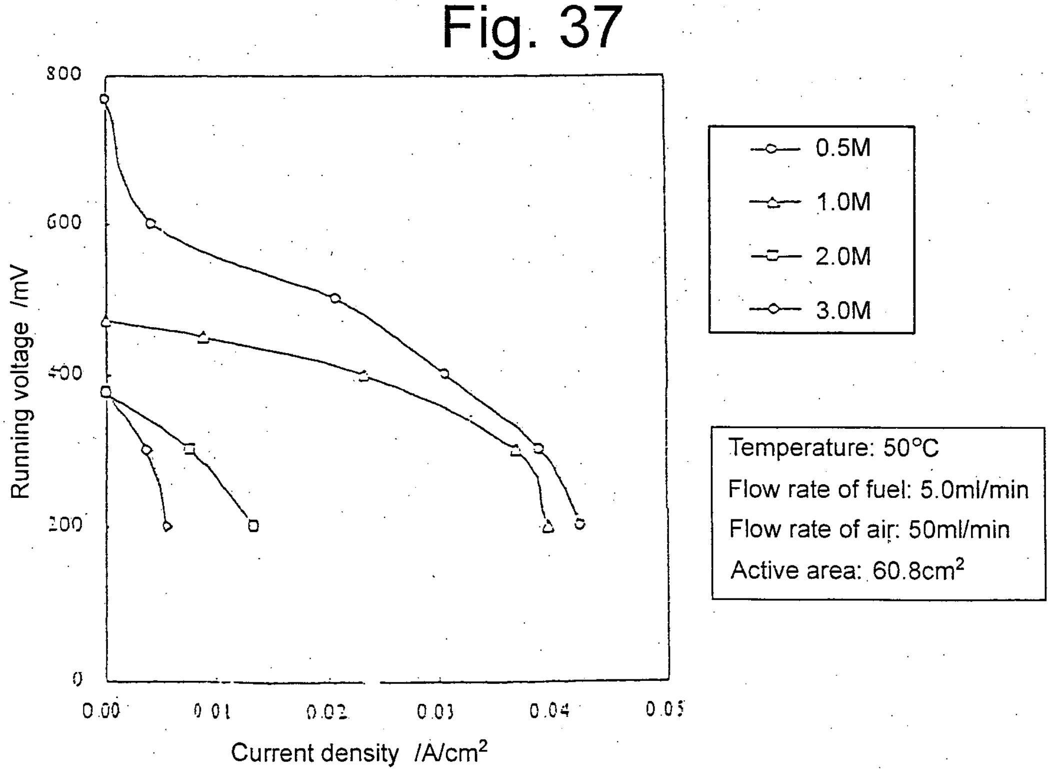
800
600
400
200
0
Running voltage /mV
0.00
0.01
0.02
0.03
0.04
0.05
Current density /A/cm²
0.5M
1.0M
2.0M
3.0M
Temperature: 50°C
Flow rate of fuel: 5.0ml/min
Flow rate of air: 50ml/min
Active area: 60.8cm²

Fig. 37

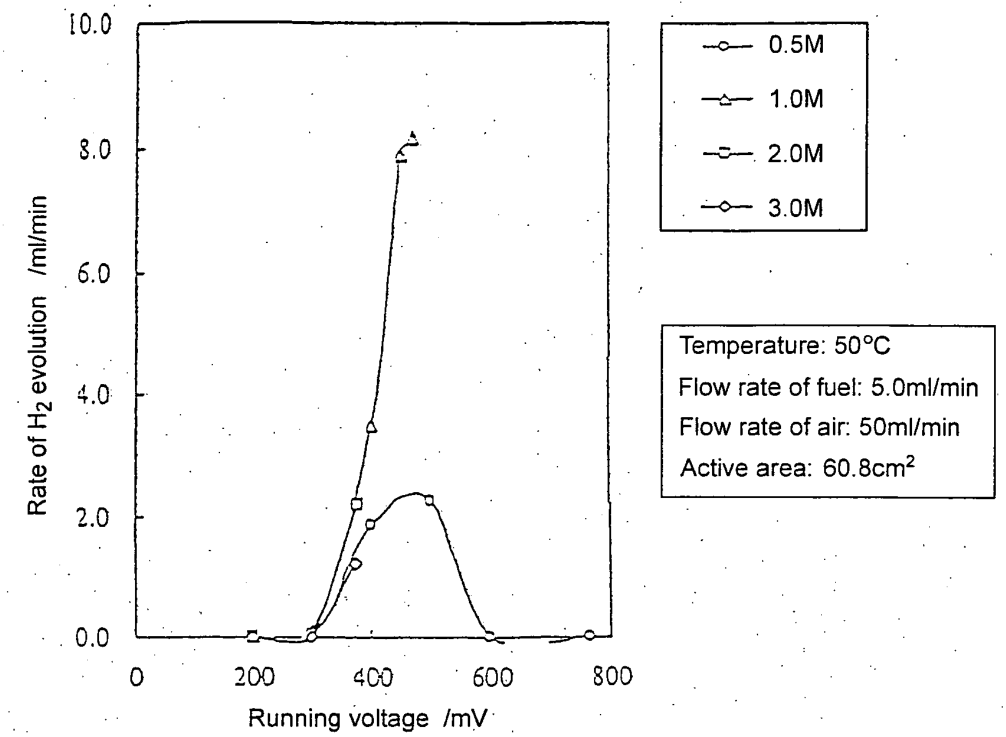
10.0
8.0
6.0
4.0
2.0
0.0
Rate of $H_2$ evolution /ml/min
0
200
400
600
800
Running voltage /mV
0.5M
1.0M
2.0M
3.0M
Temperature: 50°C
Flow rate of fuel: 5.0ml/min
Flow rate of air: 50ml/min
Active area: 60.8cm$^2$

Fig. 38

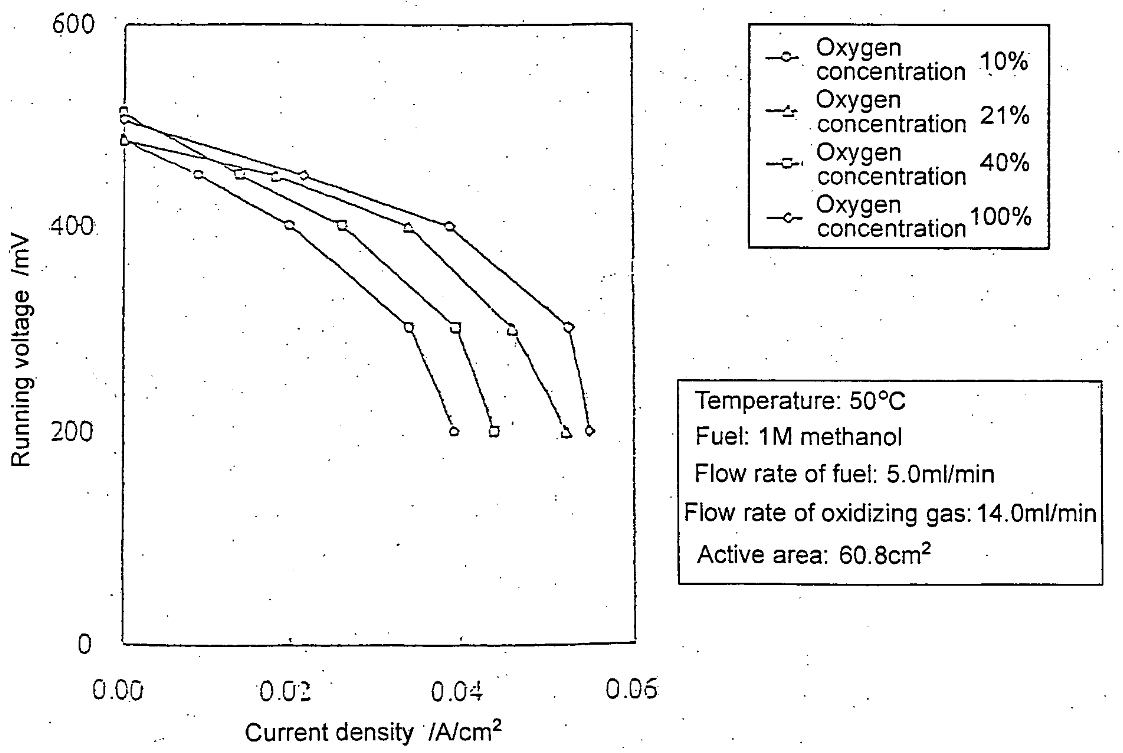
600
400
200
0
Running voltage /mV
0.00
0.02
0.04
0.06
Current density /A/cm$^2$
Oxygen concentration 10%
Oxygen concentration 21%
Oxygen concentration 40%
Oxygen concentration 100%
Temperature: 50°C
Fuel: 1M methanol
Flow rate of fuel: 5.0ml/min
Flow rate of oxidizing gas: 14.0ml/min
Active area: 60.8cm$^2$

Fig. 39

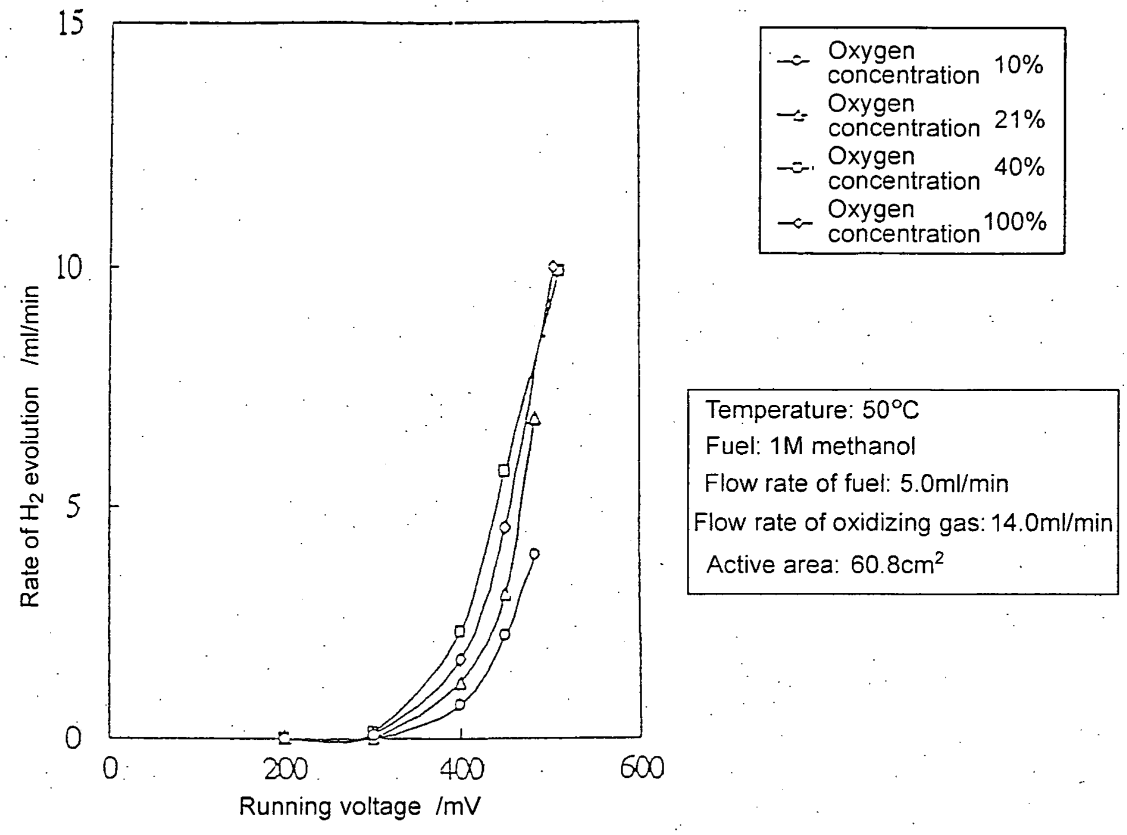
15
10
5
0
Rate of $H_2$ evolution /ml/min
0
200
400
600
Running voltage /mV
Oxygen concentration 10%
Oxygen concentration 21%
Oxygen concentration 40%
Oxygen concentration 100%
Temperature: 50°C
Fuel: 1M methanol
Flow rate of fuel: 5.0ml/min
Flow rate of oxidizing gas: 14.0ml/min
Active area: 60.8cm²

Fig. 40

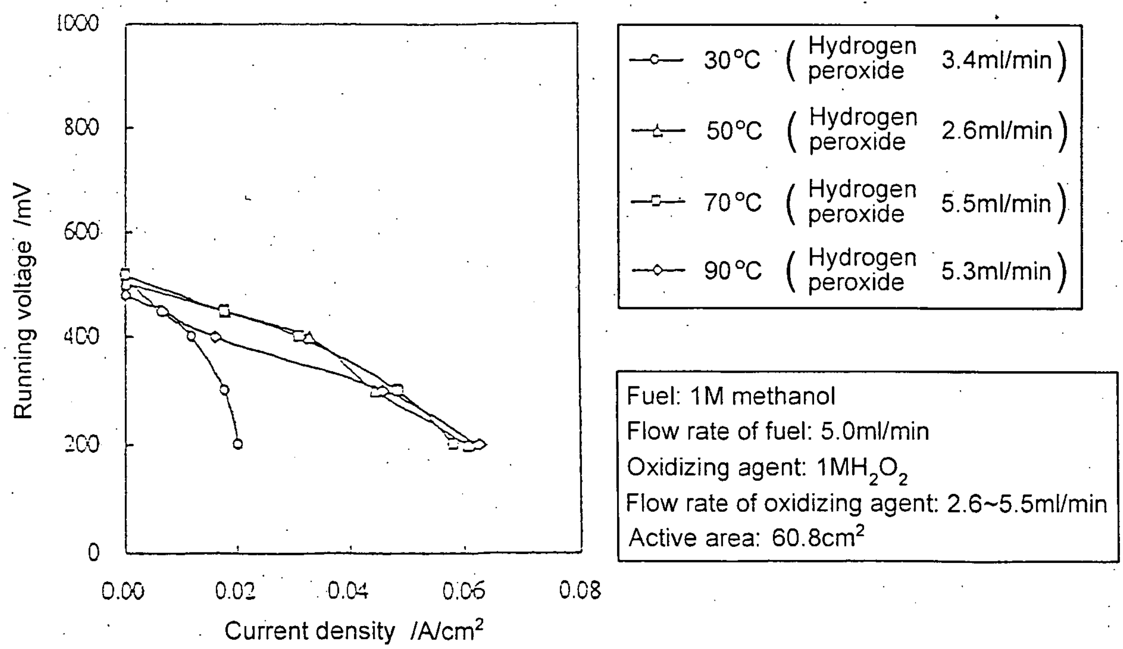
1000
800
600
400
200
0
Running voltage /mV
0.00
0.02
0.04
0.06
0.08
Current density /A/cm²
30°C (Hydrogen peroxide 3.4ml/min)
50°C (Hydrogen peroxide 2.6ml/min)
70°C (Hydrogen peroxide 5.5ml/min)
90°C (Hydrogen peroxide 5.3ml/min)
Fuel: 1M methanol
Flow rate of fuel: 5.0ml/min
Oxidizing agent: $1MH_2O_2$
Flow rate of oxidizing agent: 2.6~5.5ml/min
Active area: 60.8cm²

Fig. 41

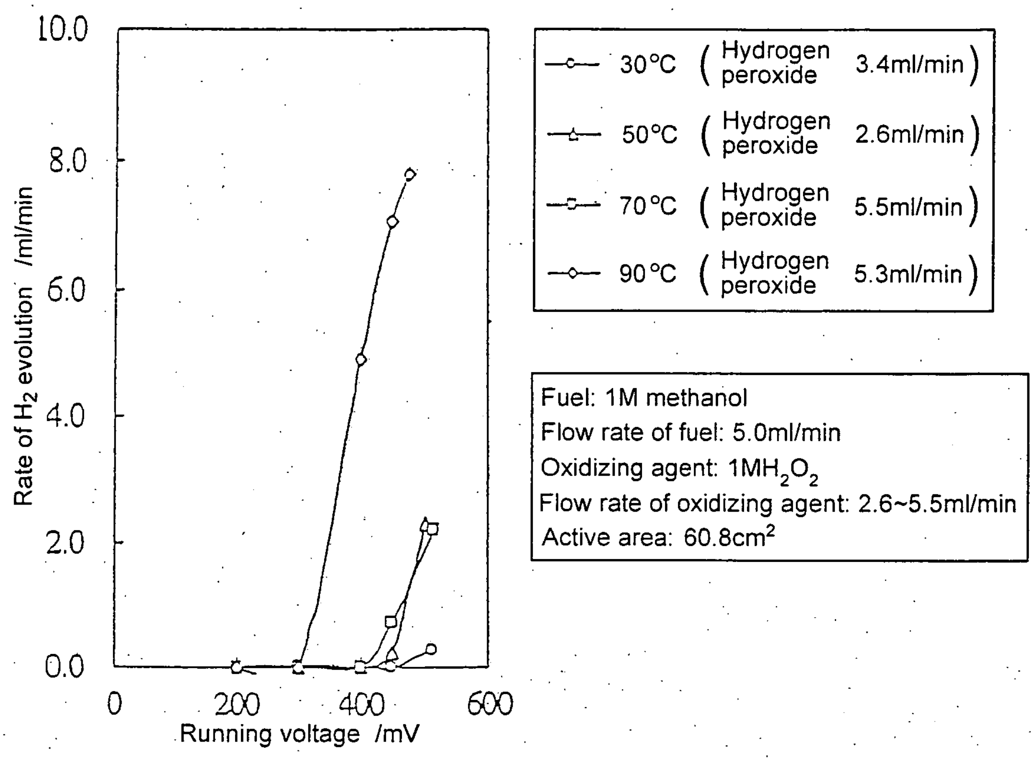
10.0
8.0
6.0
4.0
2.0
0.0
Rate of H2 evolution /ml/min
0
200
400
600
Running voltage /mV
30°C ( Hydrogen peroxide 3.4ml/min )
50°C ( Hydrogen peroxide 2.6ml/min )
70°C ( Hydrogen peroxide 5.5ml/min )
90°C ( Hydrogen peroxide 5.3ml/min )
Fuel: 1M methanol
Flow rate of fuel: 5.0ml/min
Oxidizing agent: 1MH2O2
Flow rate of oxidizing agent: 2.6~5.5ml/min
Active area: 60.8cm2

Fig. 42

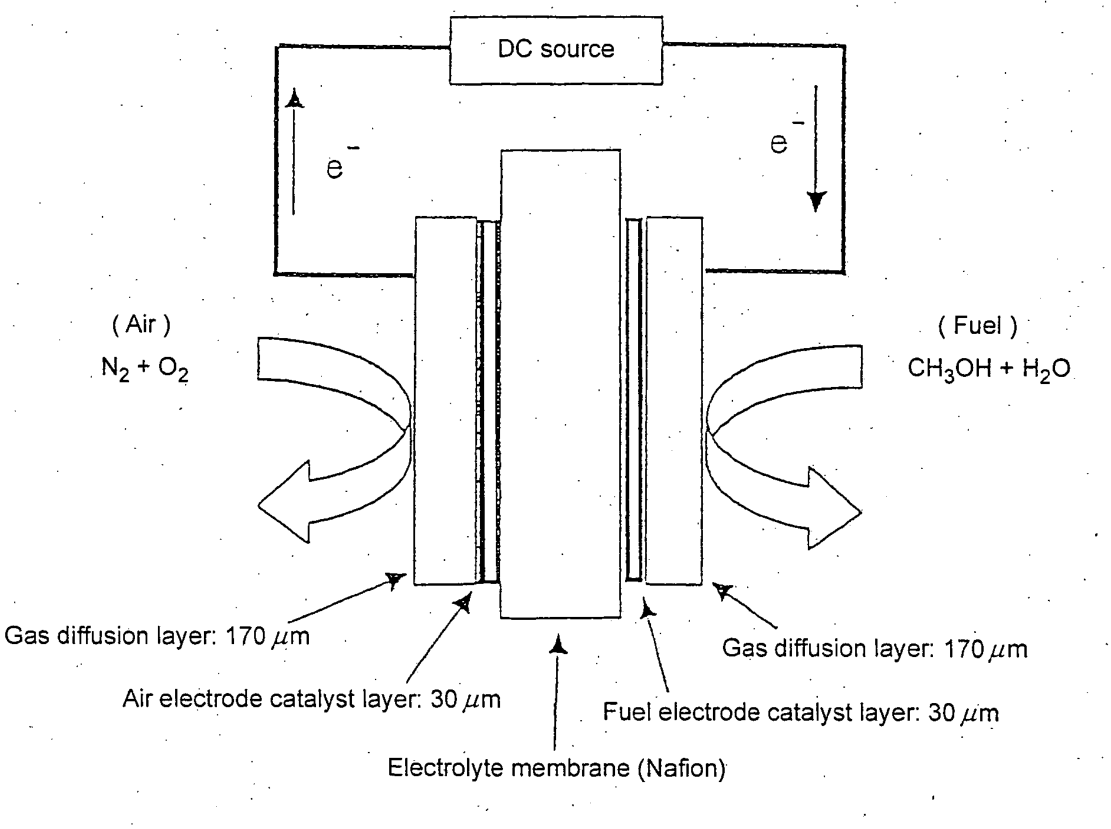
DC source
e-
e-
( Air )
N2 + O2
( Fuel )
CH3OH + H2O
Gas diffusion layer: 170 μm
Air electrode catalyst layer: 30 μm
Gas diffusion layer: 170 μm
Fuel electrode catalyst layer: 30 μm
Electrolyte membrane (Nafion)

Fig. 43

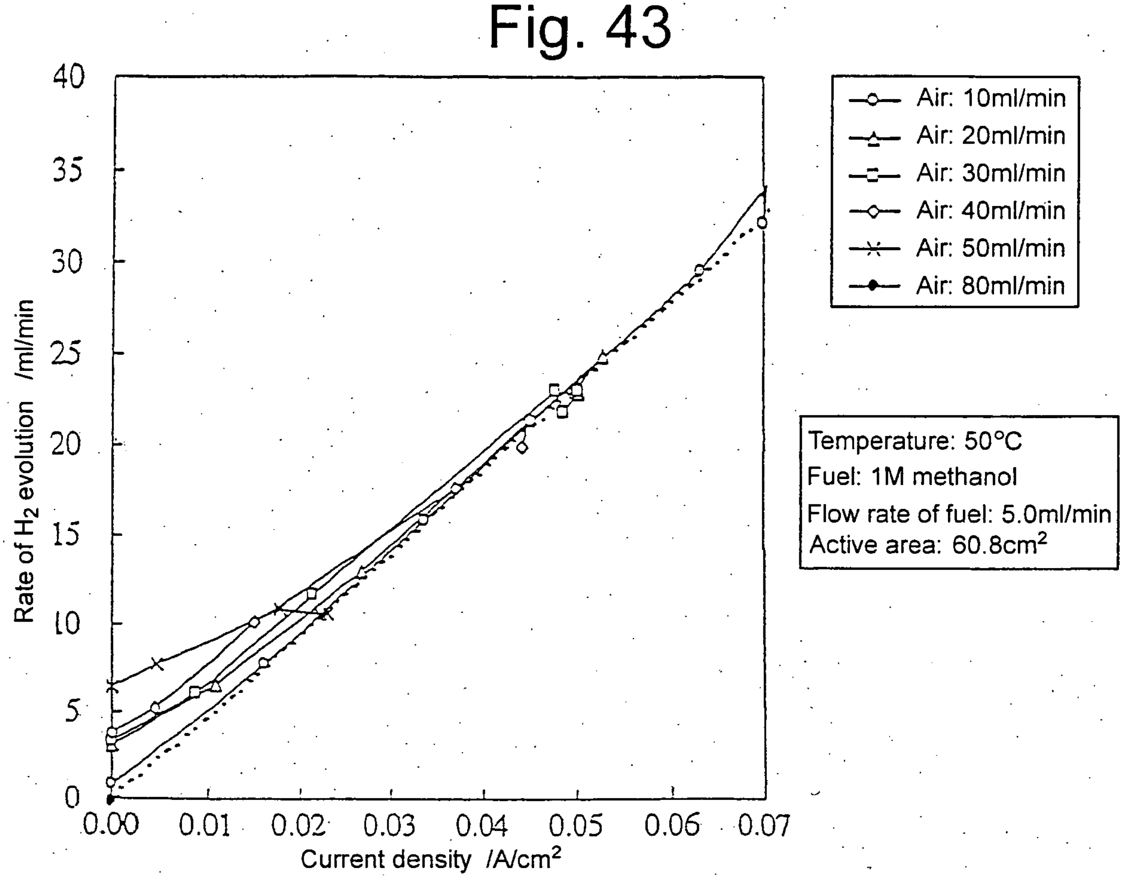
40
35
30
25
20
15
10
5
0
0.00
0.01
0.02
0.03
0.04
0.05
0.06
0.07
Current density /A/cm²
Rate of H₂ evolution /ml/min
Air: 10ml/min
Air: 20ml/min
Air: 30ml/min
Air: 40ml/min
Air: 50ml/min
Air: 80ml/min
Temperature: 50°C
Fuel: 1M methanol
Flow rate of fuel: 5.0ml/min
Active area: 60.8cm²

Fig. 44

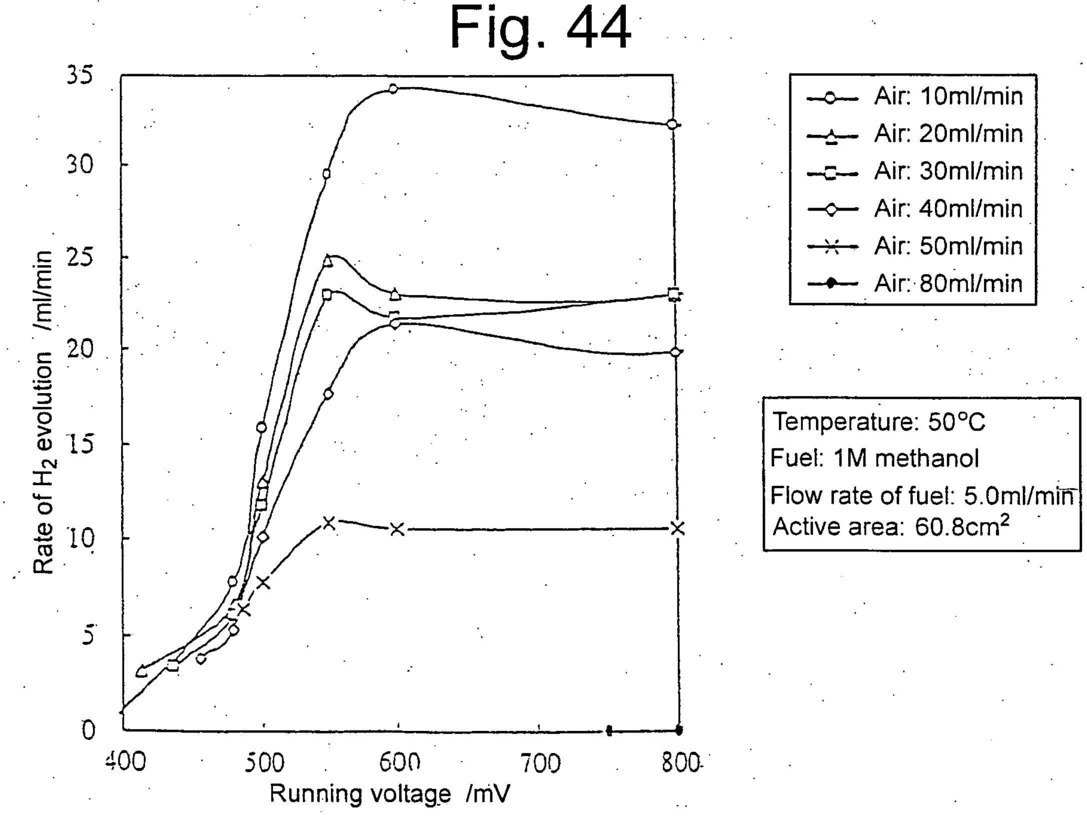
35
30
25
20
15
10
5
0
400
500
600
700
800
Running voltage /mV
Rate of H₂ evolution /ml/min
Air: 10ml/min
Air: 20ml/min
Air: 30ml/min
Air: 40ml/min
Air: 50ml/min
Air: 80ml/min
Temperature: 50°C
Fuel: 1M methanol
Flow rate of fuel: 5.0ml/min
Active area: 60.8cm²

Fig. 45

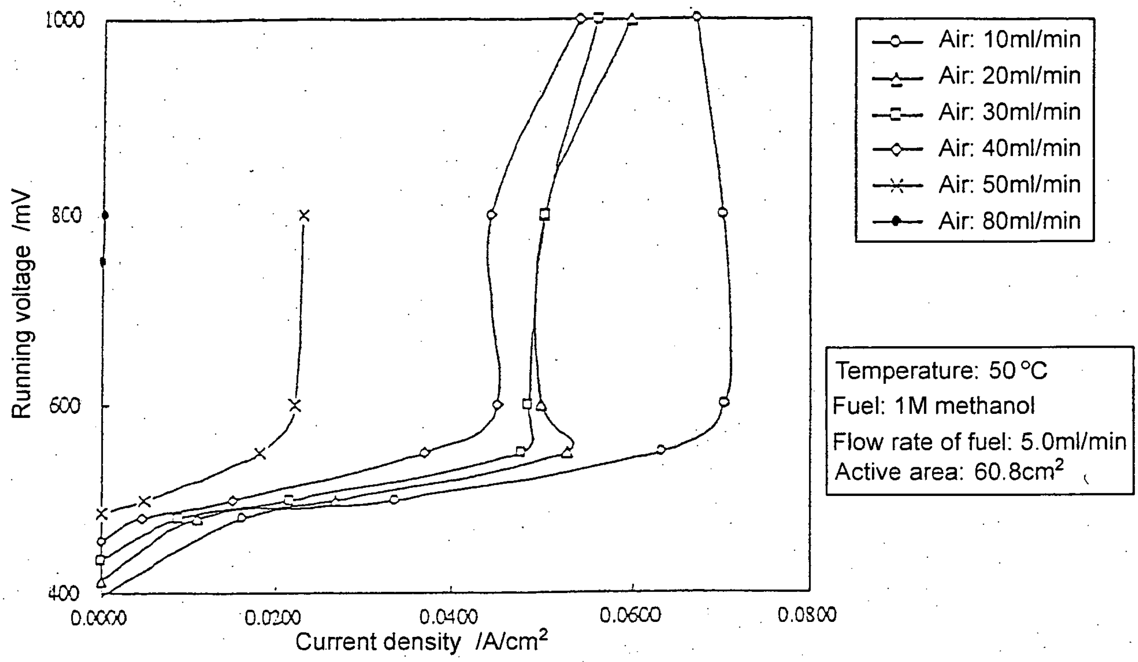
Air: 10ml/min
Air: 20ml/min
Air: 30ml/min
Air: 40ml/min
Air: 50ml/min
Air: 80ml/min
Temperature: 50 °C
Fuel: 1M methanol
Flow rate of fuel: 5.0ml/min
Active area: 60.8cm²
Running voltage /mV
Current density /A/cm²
1000
800
600
400
0.0000
0.0200
0.0400
0.0600
0.0800

Fig. 46

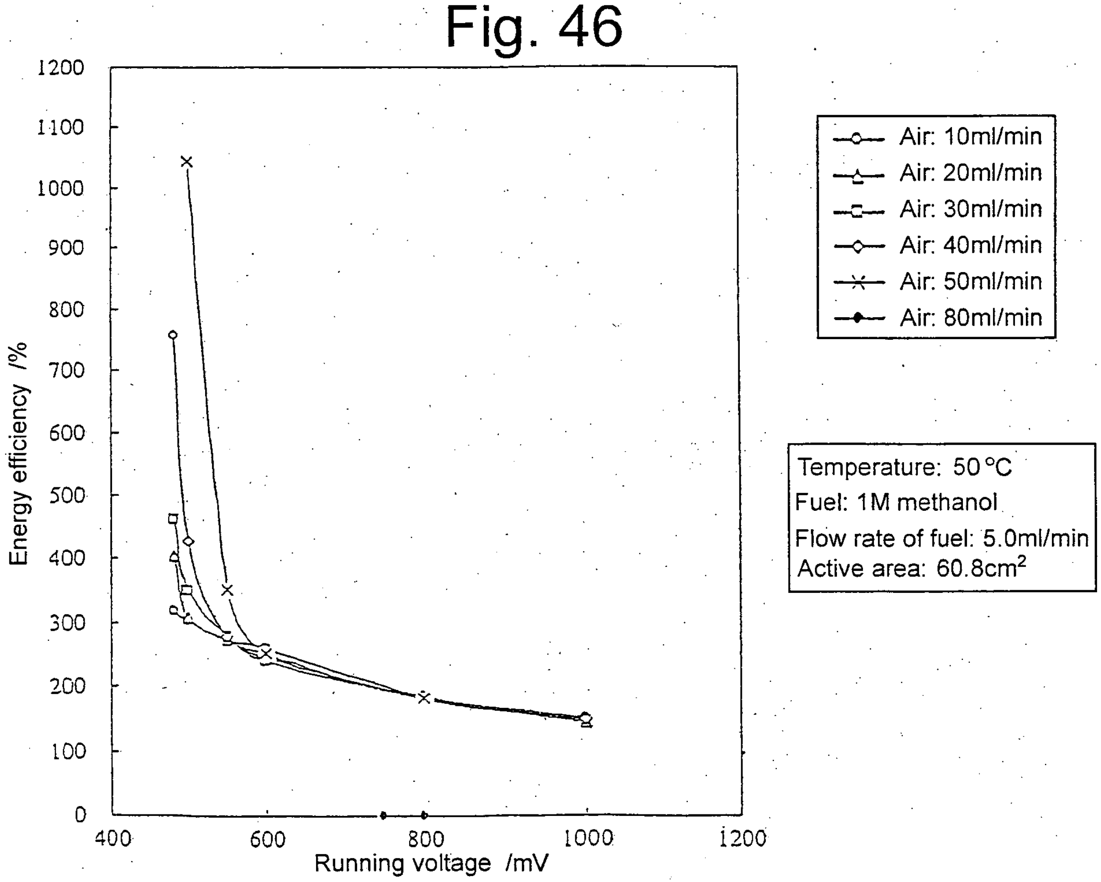
Air: 10ml/min
Air: 20ml/min
Air: 30ml/min
Air: 40ml/min
Air: 50ml/min
Air: 80ml/min
Temperature: 50 °C
Fuel: 1M methanol
Flow rate of fuel: 5.0ml/min
Active area: 60.8cm²
Energy efficiency /%
Running voltage /mV
1200
1100
1000
900
800
700
600
500
400
300
200
100
0
400
600
800
1000
1200

Fig. 47

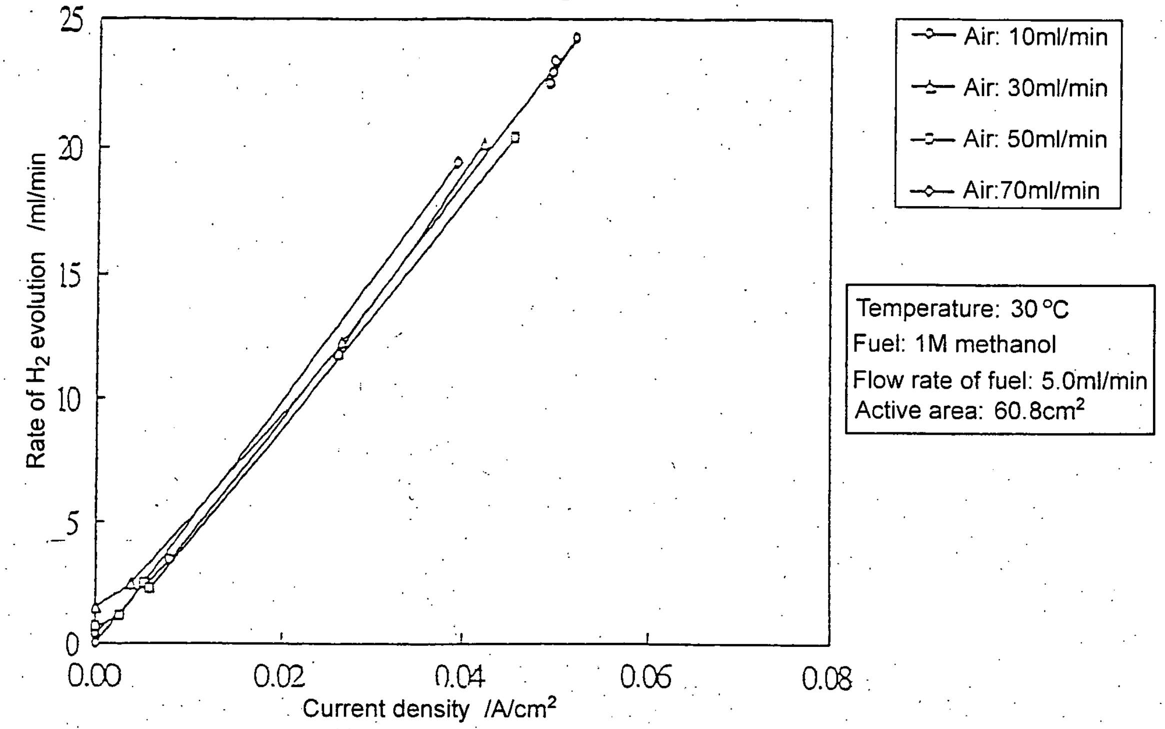
25
20
15
10
5
0
Rate of $H_2$ evolution /ml/min
0.00
0.02
0.04
0.06
0.08
Current density /A/cm$^2$
Air: 10ml/min
Air: 30ml/min
Air: 50ml/min
Air:70ml/min
Temperature: 30 °C
Fuel: 1M methanol
Flow rate of fuel: 5.0ml/min
Active area: 60.8cm$^2$

Fig. 48

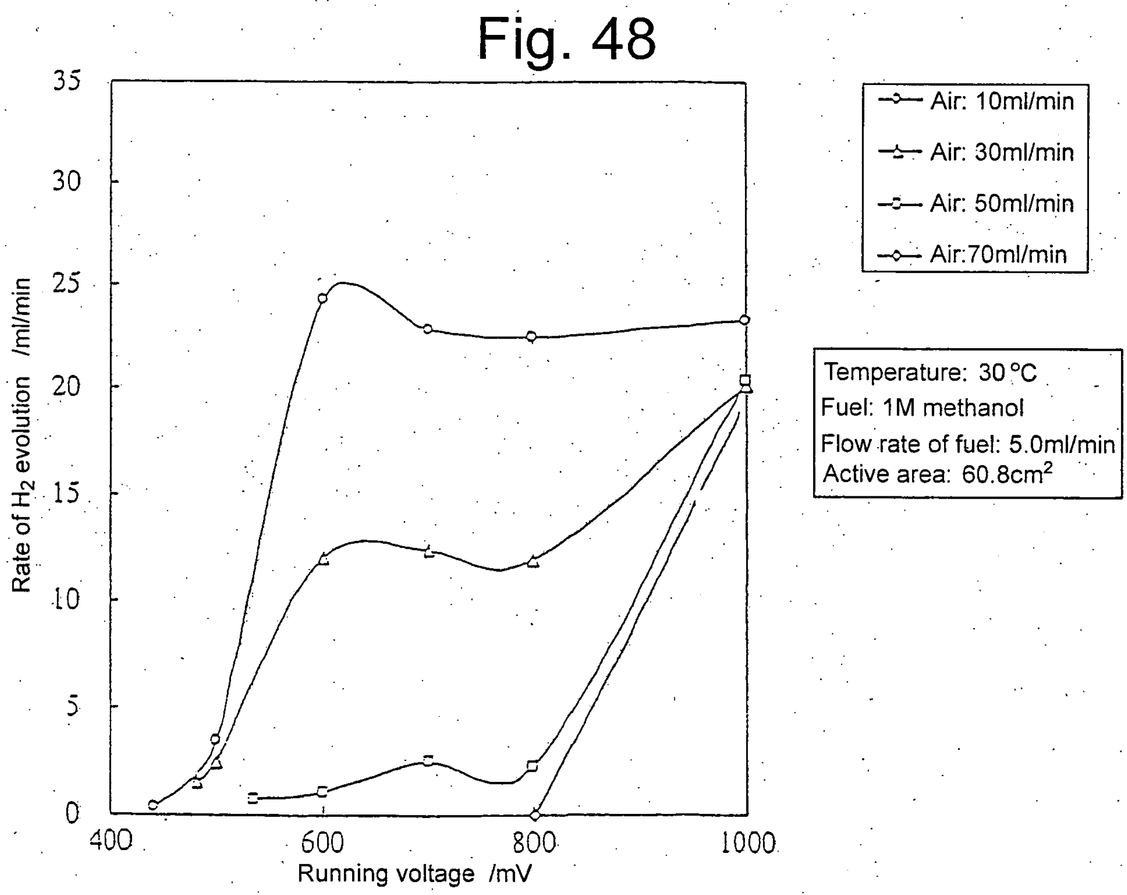
35
30
25
20
15
10
5
0
Rate of $H_2$ evolution /ml/min
400
600
800
1000
Running voltage /mV
Air: 10ml/min
Air: 30ml/min
Air: 50ml/min
Air:70ml/min
Temperature: 30 °C
Fuel: 1M methanol
Flow rate of fuel: 5.0ml/min
Active area: 60.8cm$^2$

# Fig. 49

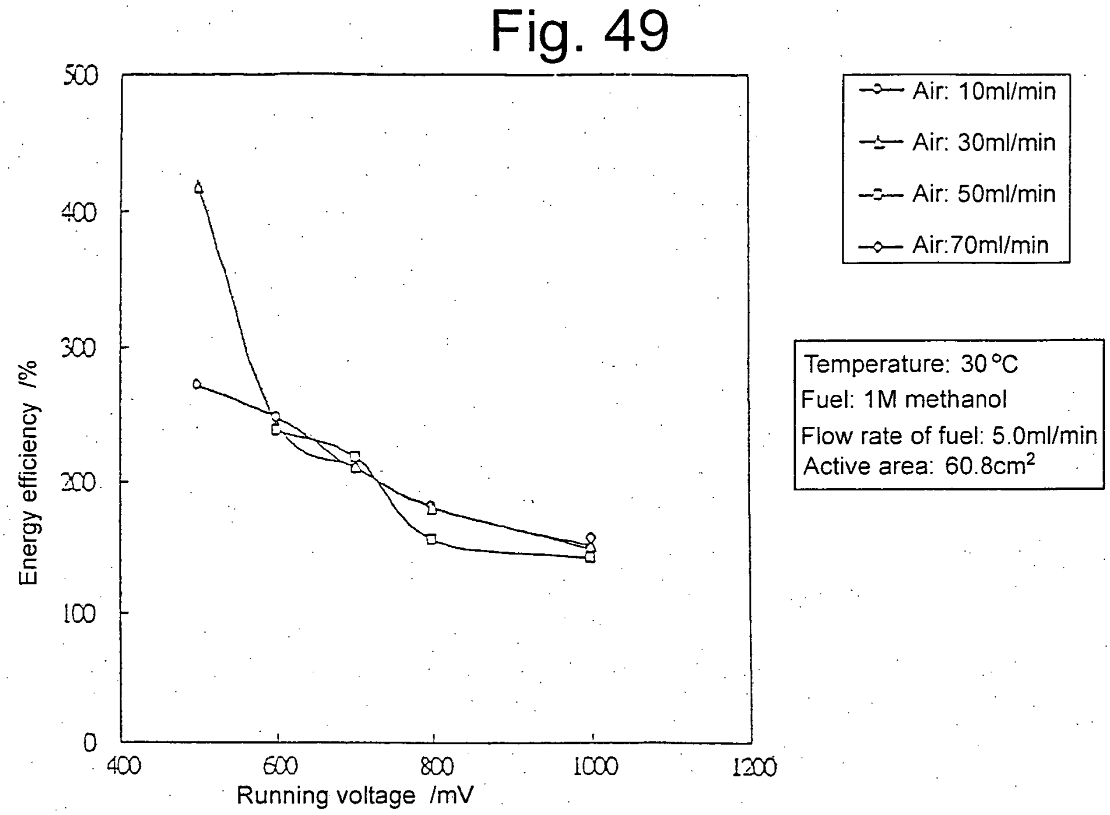

500
400
300
200
100
0
Energy efficiency /%
400
600
800
1000
1200
Running voltage /mV
Air: 10ml/min
Air: 30ml/min
Air: 50ml/min
Air:70ml/min
Temperature: 30 °C
Fuel: 1M methanol
Flow rate of fuel: 5.0ml/min
Active area: 60.8cm²


# Fig. 50

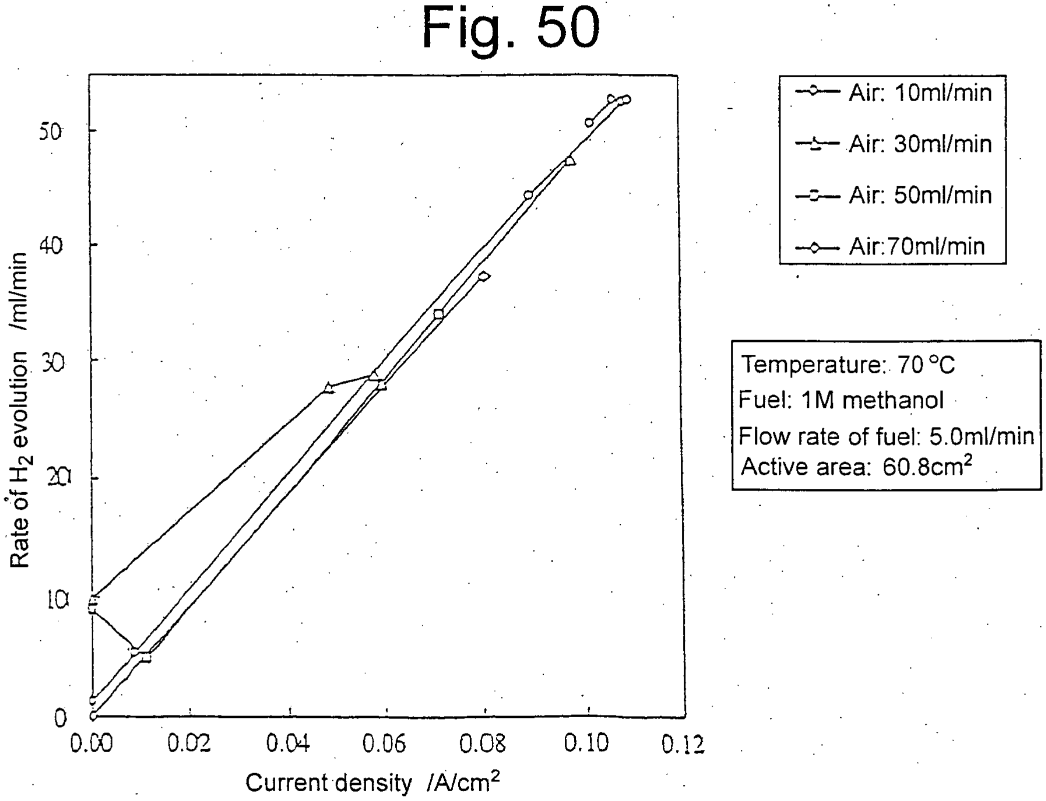

50
40
30
20
10
0
Rate of H2 evolution /ml/min
0.00
0.02
0.04
0.06
0.08
0.10
0.12
Current density /A/cm²
Air: 10ml/min
Air: 30ml/min
Air: 50ml/min
Air:70ml/min
Temperature: 70 °C
Fuel: 1M methanol
Flow rate of fuel: 5.0ml/min
Active area: 60.8cm²

Fig. 51

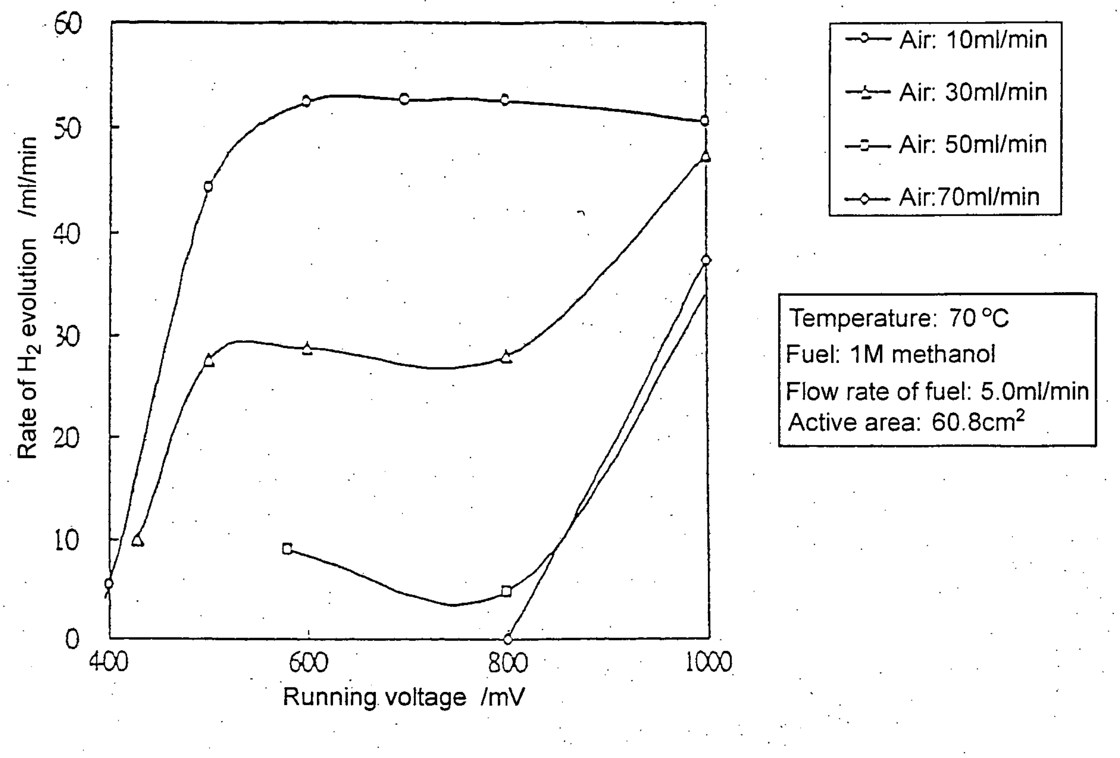
60
50
40
30
20
10
0
Rate of $H_2$ evolution /ml/min
400
600
800
1000
Running voltage /mV
Air: 10ml/min
Air: 30ml/min
Air: 50ml/min
Air:70ml/min
Temperature: 70 °C
Fuel: 1M methanol
Flow rate of fuel: 5.0ml/min
Active area: 60.8cm$^2$

Fig. 52

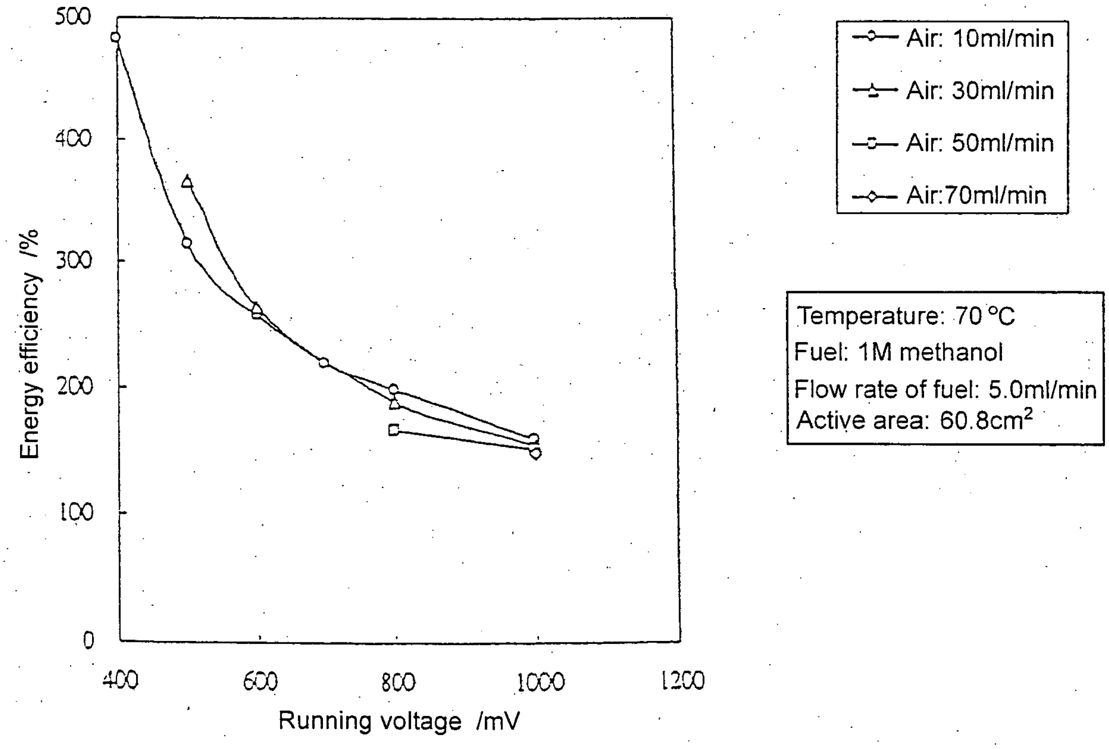
500
400
300
200
100
0
Energy efficiency /%
400
600
800
1000
1200
Running voltage /mV
Air: 10ml/min
Air: 30ml/min
Air: 50ml/min
Air:70ml/min
Temperature: 70 °C
Fuel: 1M methanol
Flow rate of fuel: 5.0ml/min
Active area: 60.8cm$^2$

Fig. 53

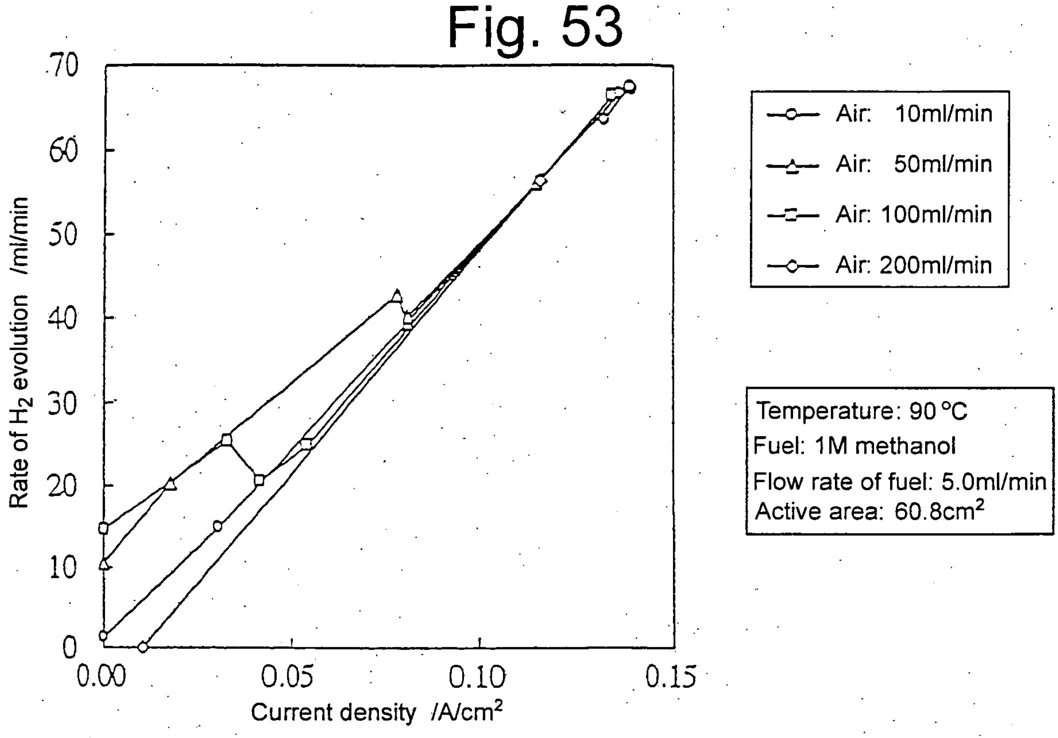

70
60
50
40
30
20
10
0
Rate of $H_2$ evolution /ml/min
0.00
0.05
0.10
0.15
Current density /A/cm$^2$
Air: 10ml/min
Air: 50ml/min
Air: 100ml/min
Air: 200ml/min
Temperature: 90 °C
Fuel: 1M methanol
Flow rate of fuel: 5.0ml/min
Active area: 60.8cm$^2$


Fig. 54

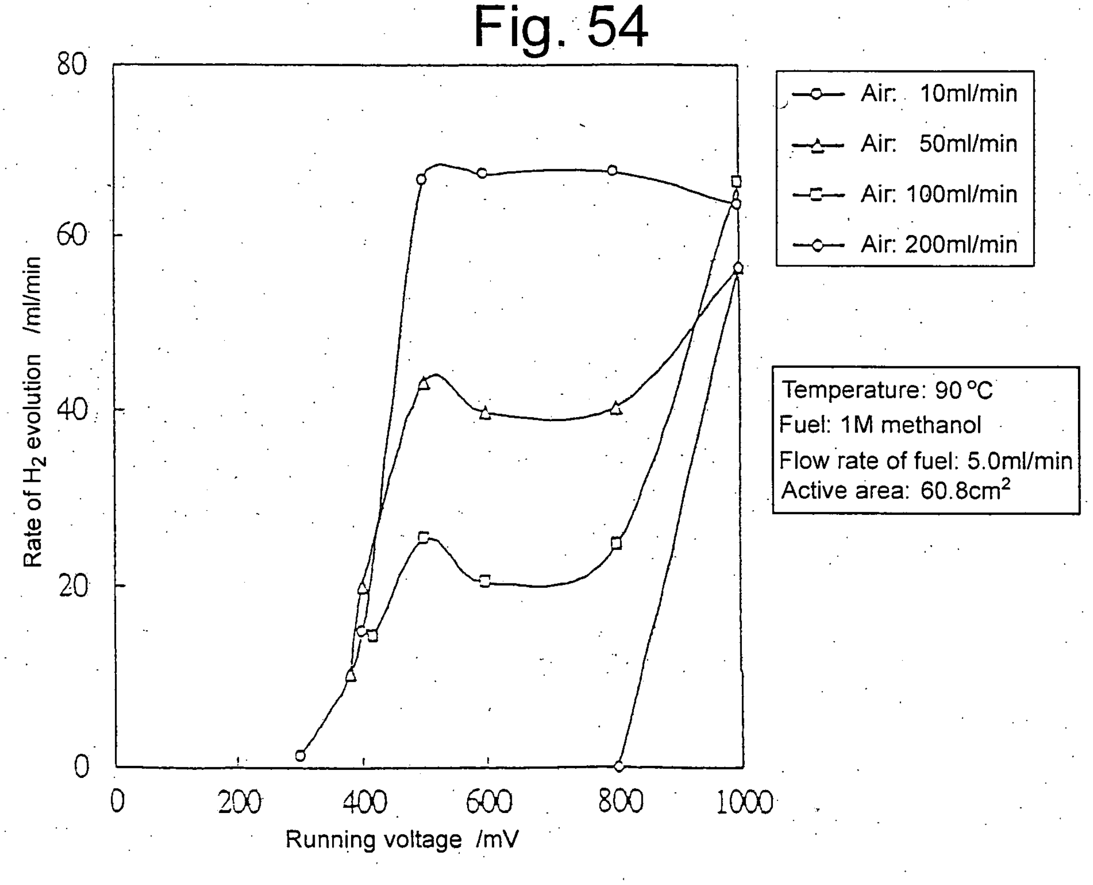

80
60
40
20
0
Rate of $H_2$ evolution /ml/min
0
200
400
600
800
1000
Running voltage /mV
Air: 10ml/min
Air: 50ml/min
Air: 100ml/min
Air: 200ml/min
Temperature: 90 °C
Fuel: 1M methanol
Flow rate of fuel: 5.0ml/min
Active area: 60.8cm$^2$

Fig. 55

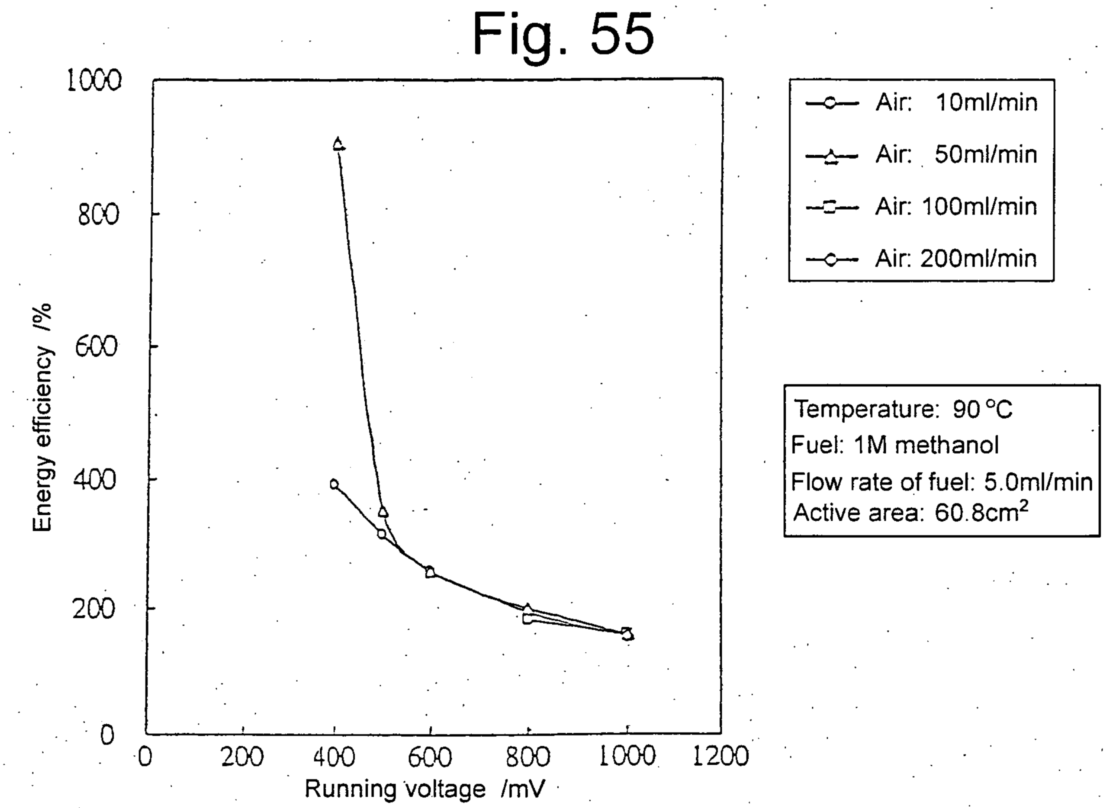
1000
800
600
400
200
0
Energy efficiency /%
0
200
400
600
800
1000
1200
Running voltage /mV
Air: 10ml/min
Air: 50ml/min
Air: 100ml/min
Air: 200ml/min
Temperature: 90 °C
Fuel: 1M methanol
Flow rate of fuel: 5.0ml/min
Active area: 60.8cm2

Fig. 56

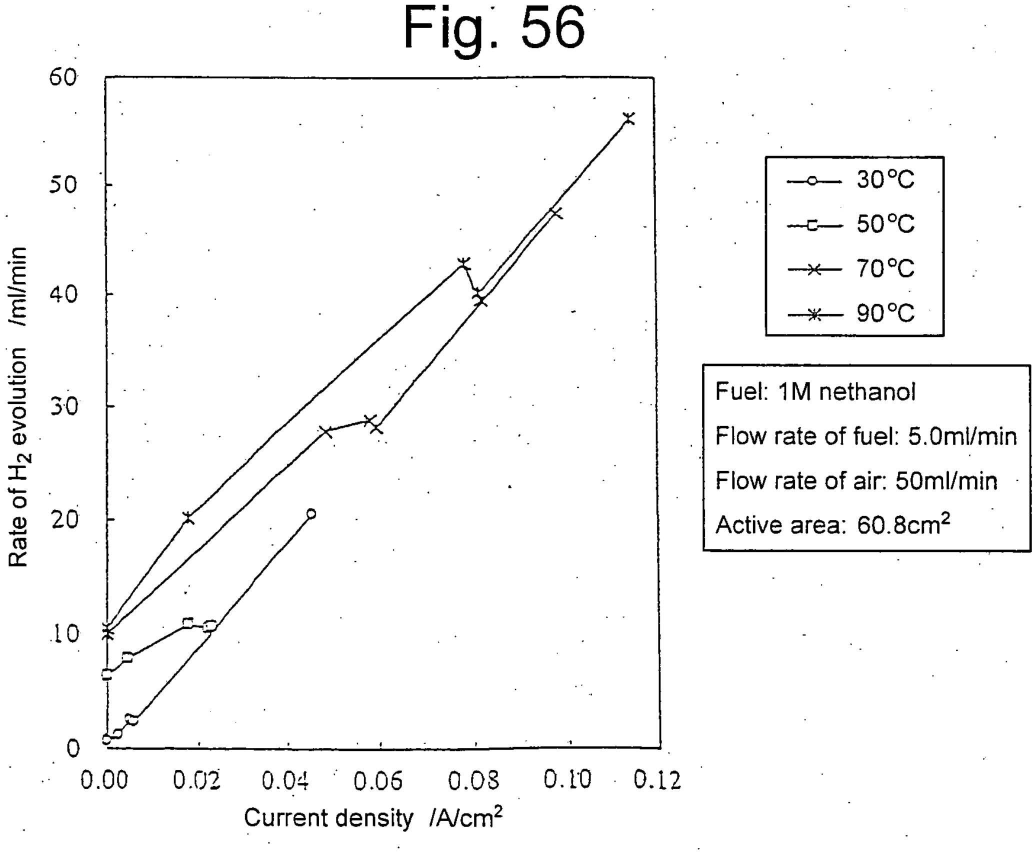
60
50
40
30
20
10
0
Rate of H2 evolution /ml/min
0.00
0.02
0.04
0.06
0.08
0.10
0.12
Current density /A/cm2
30°C
50°C
70°C
90°C
Fuel: 1M nethanol
Flow rate of fuel: 5.0ml/min
Flow rate of air: 50ml/min
Active area: 60.8cm2

Fig. 57

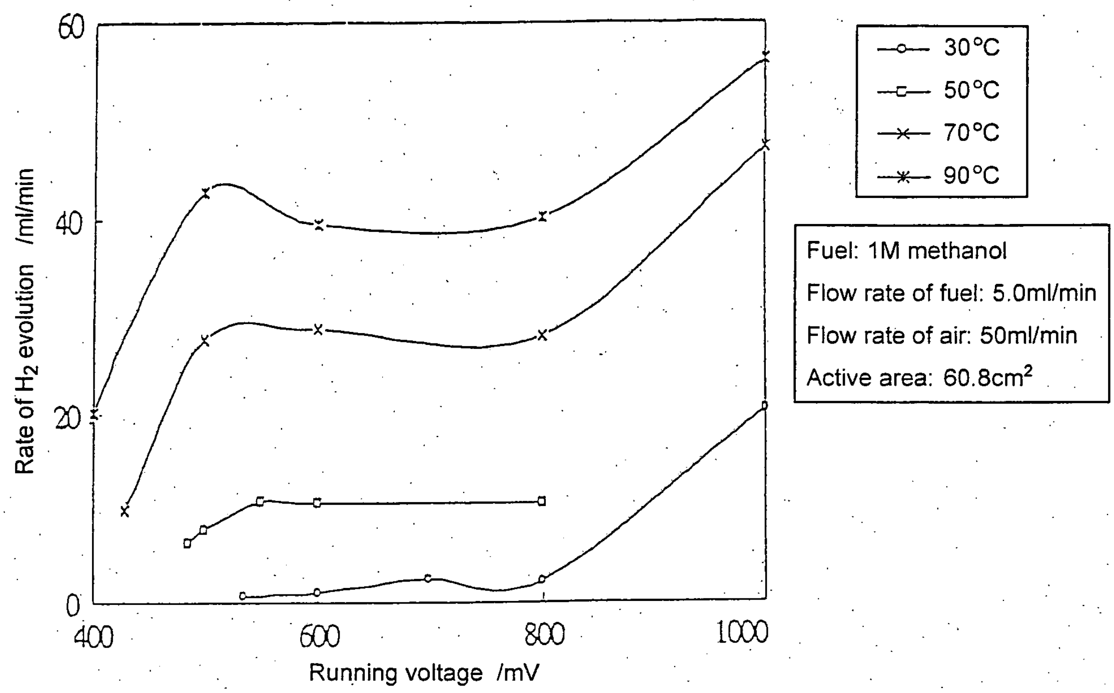

60
40
20
0
Rate of H2 evolution /ml/min
400
600
800
1000
Running voltage /mV
30°C
50°C
70°C
90°C
Fuel: 1M methanol
Flow rate of fuel: 5.0ml/min
Flow rate of air: 50ml/min
Active area: 60.8cm2


Fig. 58

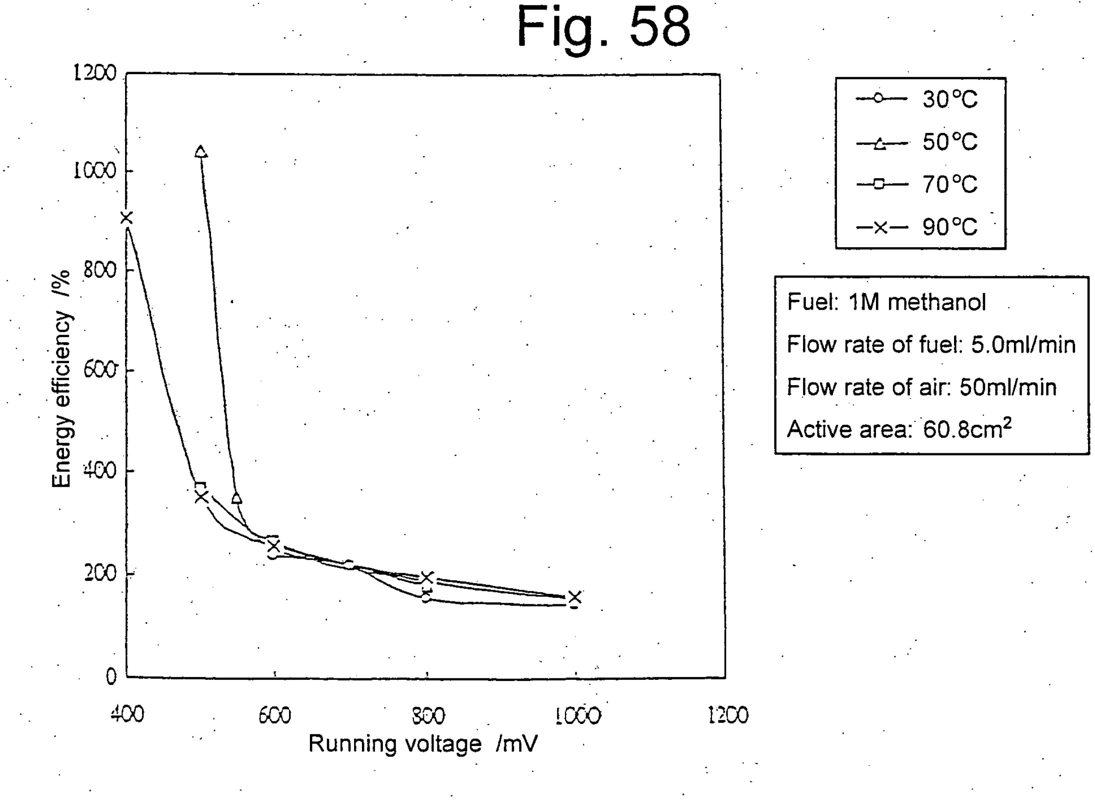

1200
1000
800
600
400
200
0
Energy efficiency /%
400
600
800
1000
1200
Running voltage /mV
30°C
50°C
70°C
90°C
Fuel: 1M methanol
Flow rate of fuel: 5.0ml/min
Flow rate of air: 50ml/min
Active area: 60.8cm2

# Fig. 59

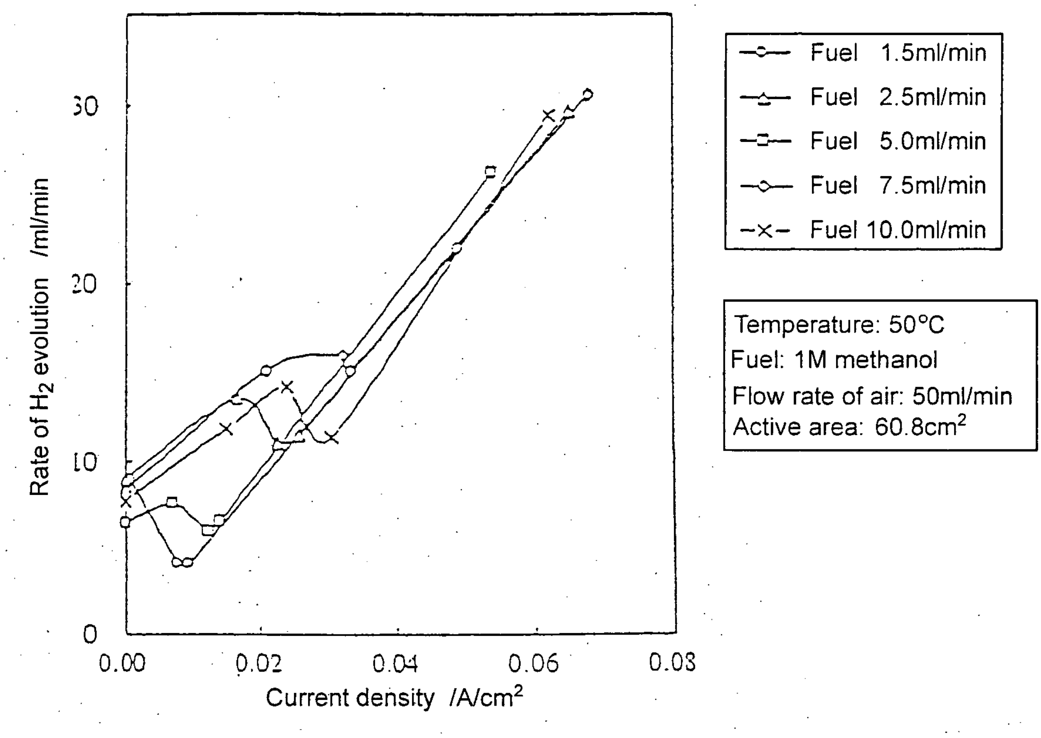
Fuel 1.5ml/min
Fuel 2.5ml/min
Fuel 5.0ml/min
Fuel 7.5ml/min
Fuel 10.0ml/min
Temperature: 50°C
Fuel: 1M methanol
Flow rate of air: 50ml/min
Active area: 60.8cm²
Rate of H₂ evolution /ml/min
0
10
20
30
0.00
0.02
0.04
0.06
0.08
Current density /A/cm²

# Fig. 60

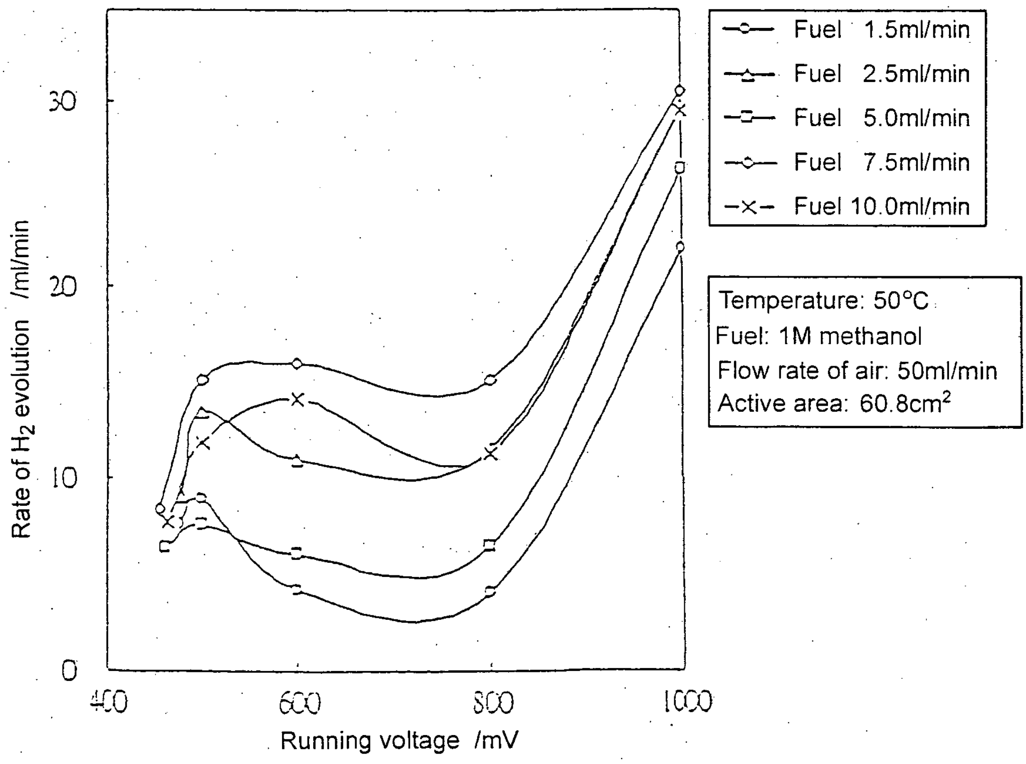
Fuel 1.5ml/min
Fuel 2.5ml/min
Fuel 5.0ml/min
Fuel 7.5ml/min
Fuel 10.0ml/min
Temperature: 50°C
Fuel: 1M methanol
Flow rate of air: 50ml/min
Active area: 60.8cm²
Rate of H₂ evolution /ml/min
0
10
20
30
400
600
800
1000
Running voltage /mV

Fig. 61

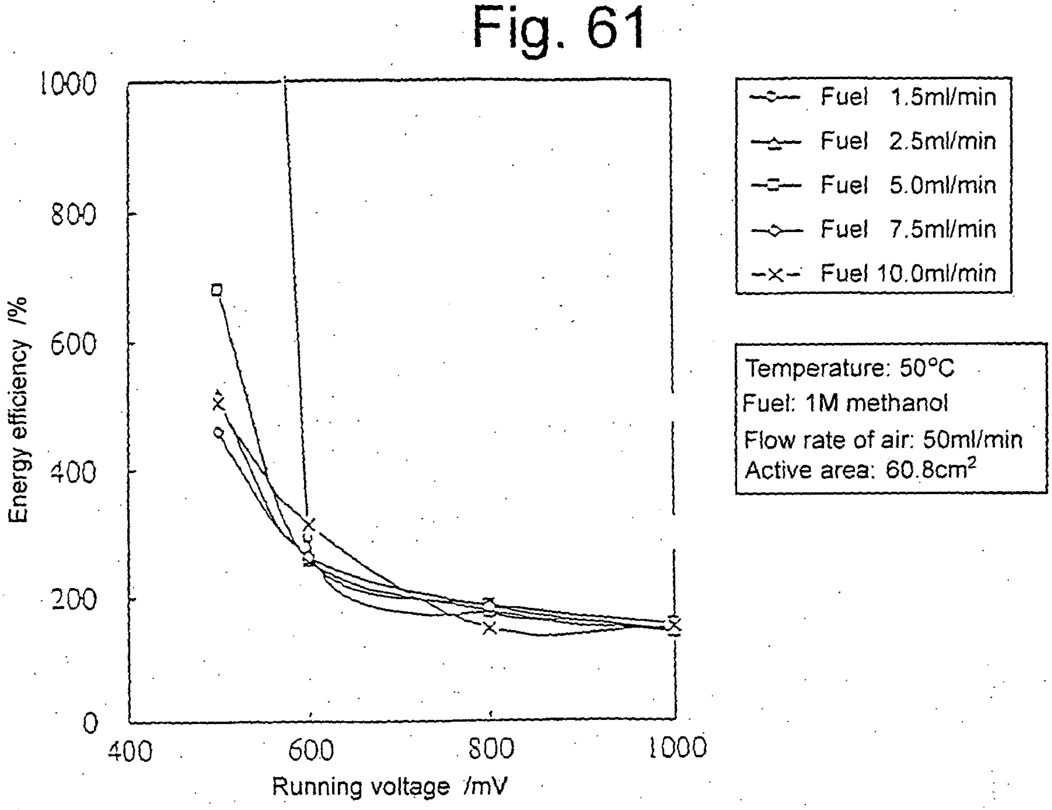
Energy efficiency /%
1000
800
600
400
200
0
400
600
800
1000
Running voltage /mV
Fuel 1.5ml/min
Fuel 2.5ml/min
Fuel 5.0ml/min
Fuel 7.5ml/min
Fuel 10.0ml/min
Temperature: 50°C
Fuel: 1M methanol
Flow rate of air: 50ml/min
Active area: 60.8cm2

Fig. 62

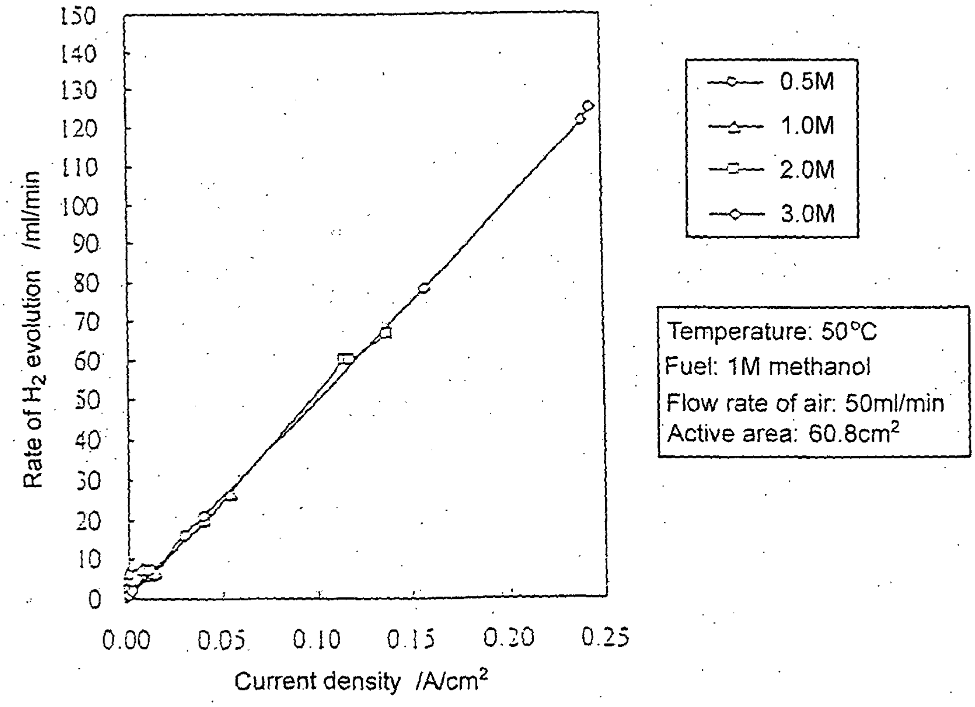
Rate of H2 evolution /ml/min
150
140
130
120
110
100
90
80
70
60
50
40
30
20
10
0
0.00
0.05
0.10
0.15
0.20
0.25
Current density /A/cm2
0.5M
1.0M
2.0M
3.0M
Temperature: 50°C
Fuel: 1M methanol
Flow rate of air: 50ml/min
Active area: 60.8cm2

Fig. 63

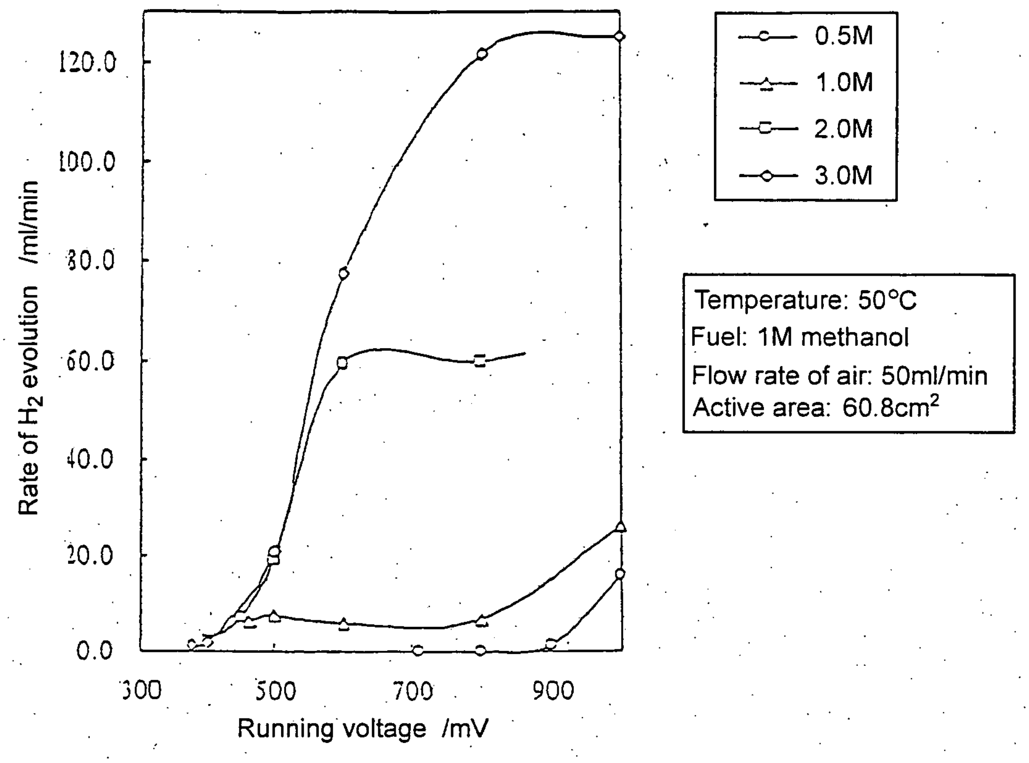
120.0
100.0
80.0
60.0
40.0
20.0
0.0
Rate of $H_2$ evolution /ml/min
300
500
700
900
Running voltage /mV
0.5M
1.0M
2.0M
3.0M
Temperature: 50°C
Fuel: 1M methanol
Flow rate of air: 50ml/min
Active area: 60.8cm²

Fig. 64

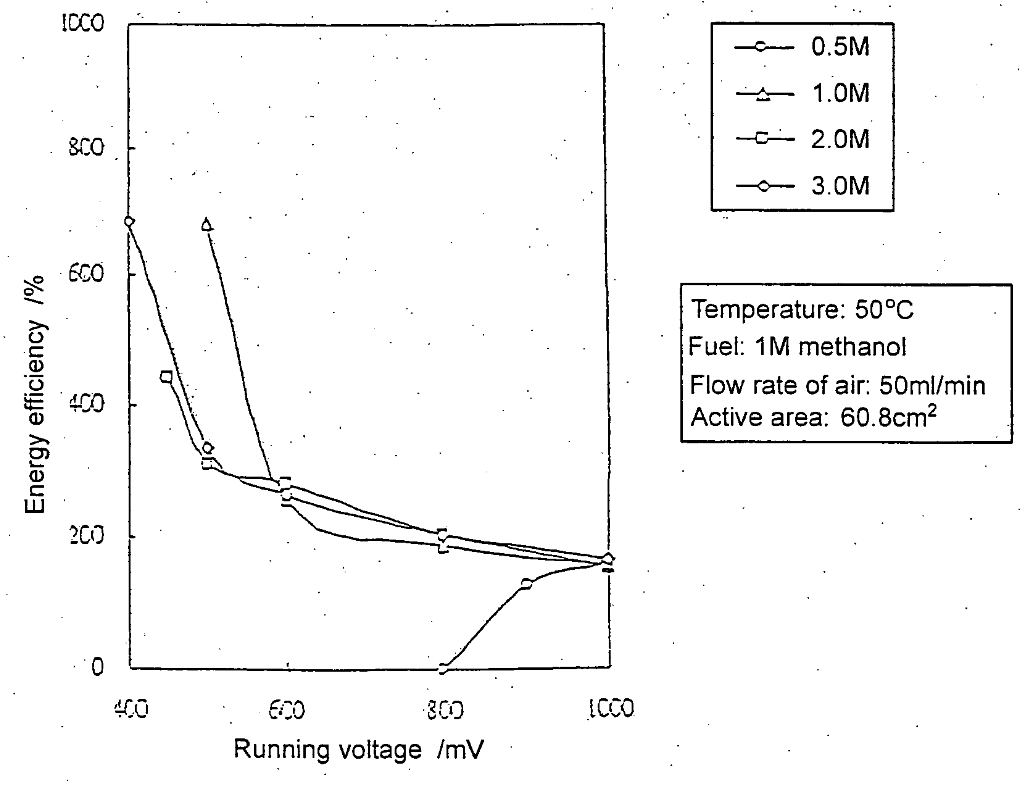
1000
800
600
400
200
0
Energy efficiency /%
400
600
800
1000
Running voltage /mV
0.5M
1.0M
2.0M
3.0M
Temperature: 50°C
Fuel: 1M methanol
Flow rate of air: 50ml/min
Active area: 60.8cm²

Fig. 65

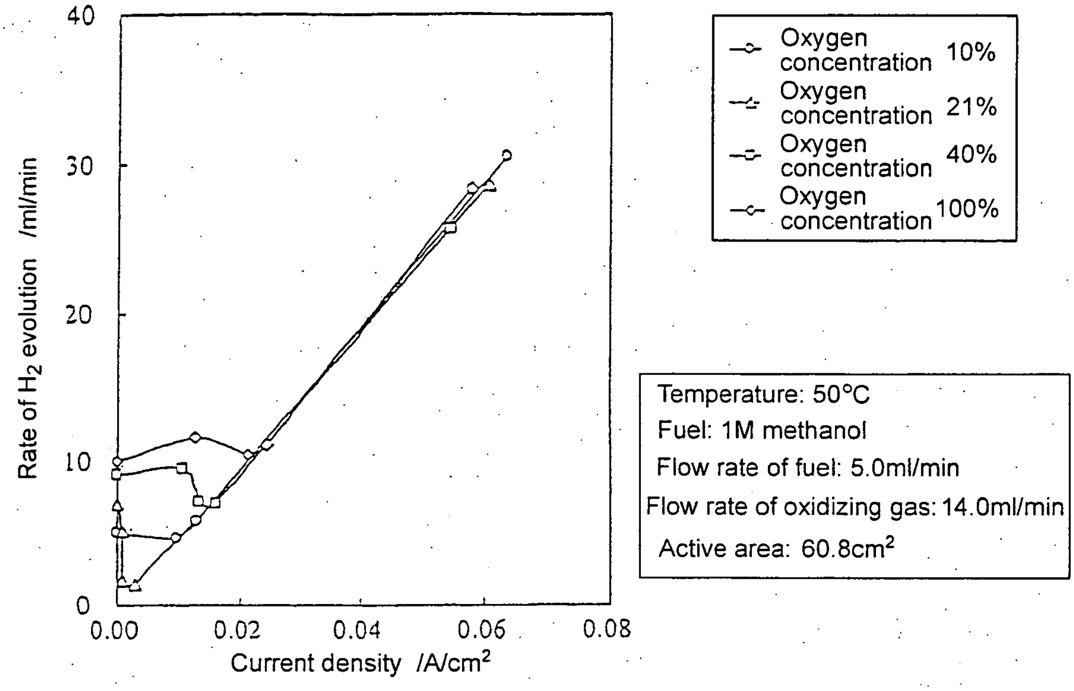
Rate of $H_2$ evolution /ml/min
40
30
20
10
0
0.00
0.02
0.04
0.06
0.08
Current density /A/cm$^2$
Oxygen concentration 10%
Oxygen concentration 21%
Oxygen concentration 40%
Oxygen concentration 100%
Temperature: 50°C
Fuel: 1M methanol
Flow rate of fuel: 5.0ml/min
Flow rate of oxidizing gas: 14.0ml/min
Active area: 60.8cm$^2$

Fig. 66

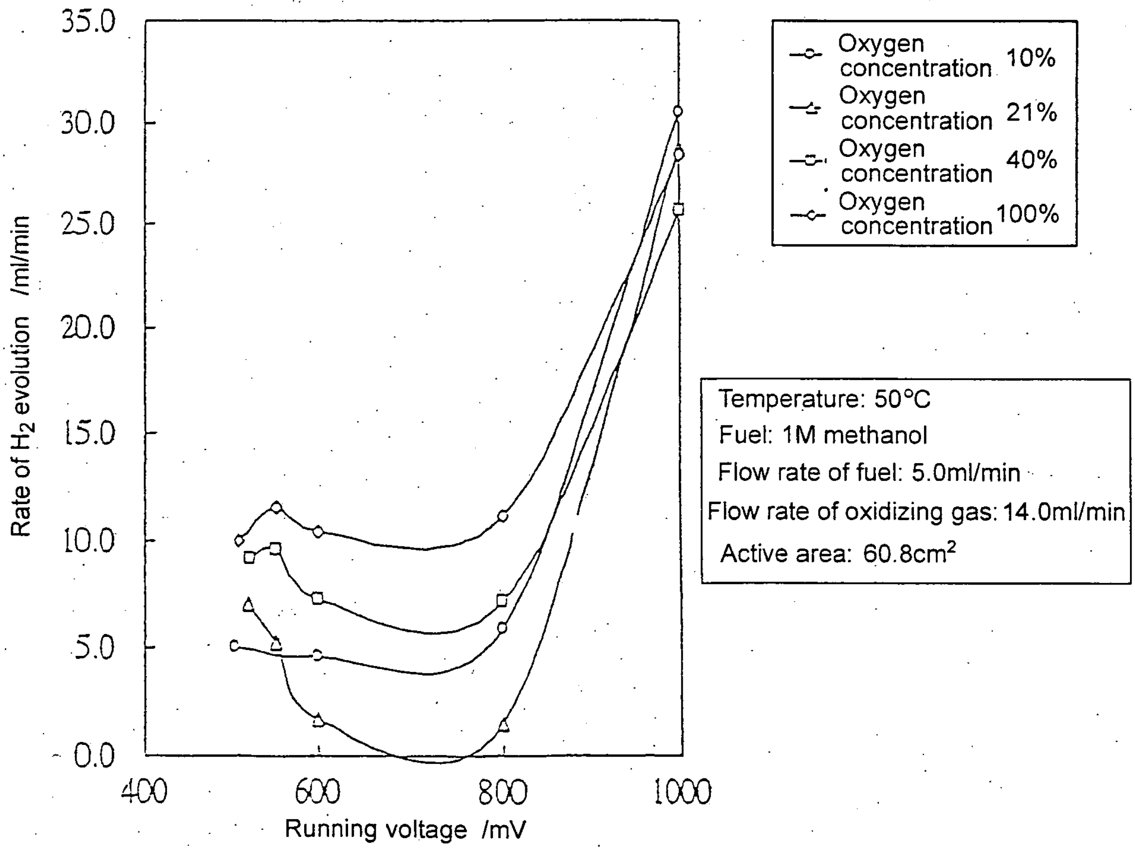
Rate of $H_2$ evolution /ml/min
35.0
30.0
25.0
20.0
15.0
10.0
5.0
0.0
400
600
800
1000
Running voltage /mV
Oxygen concentration 10%
Oxygen concentration 21%
Oxygen concentration 40%
Oxygen concentration 100%
Temperature: 50°C
Fuel: 1M methanol
Flow rate of fuel: 5.0ml/min
Flow rate of oxidizing gas: 14.0ml/min
Active area: 60.8cm$^2$

Fig. 67

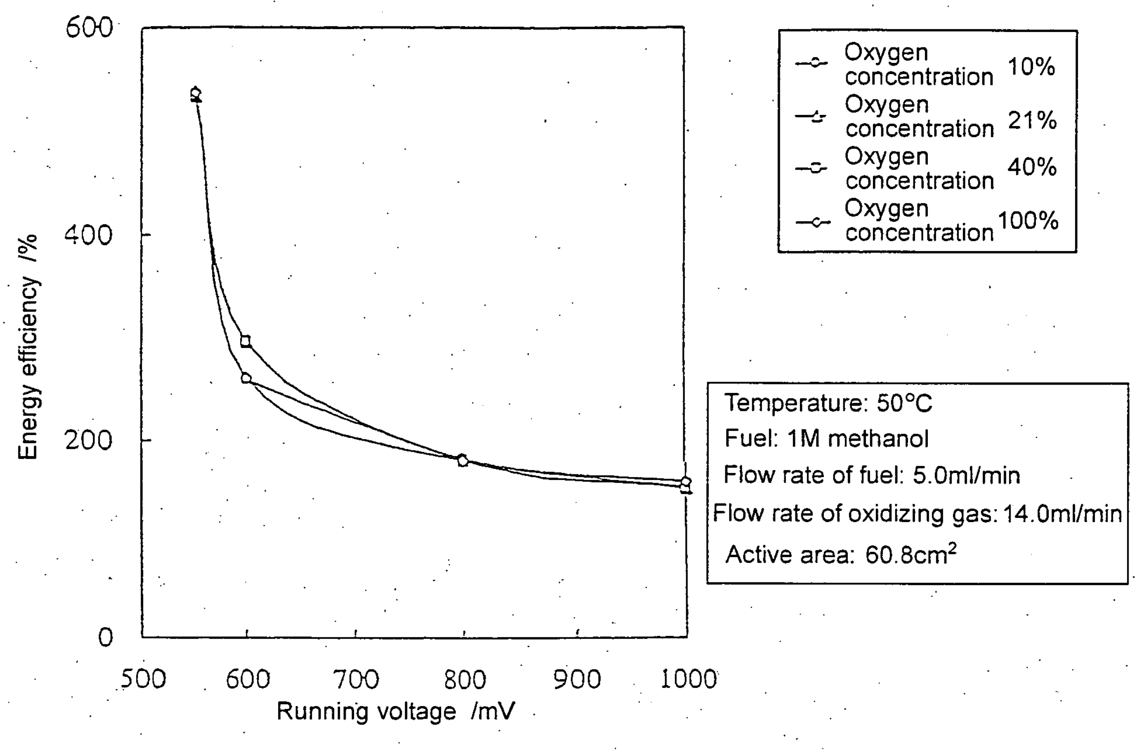
600
400
200
0
500
600
700
800
900
1000
Running voltage /mV
Energy efficiency /%
Oxygen concentration 10%
Oxygen concentration 21%
Oxygen concentration 40%
Oxygen concentration 100%
Temperature: 50°C
Fuel: 1M methanol
Flow rate of fuel: 5.0ml/min
Flow rate of oxidizing gas: 14.0ml/min
Active area: 60.8cm²

Fig. 68

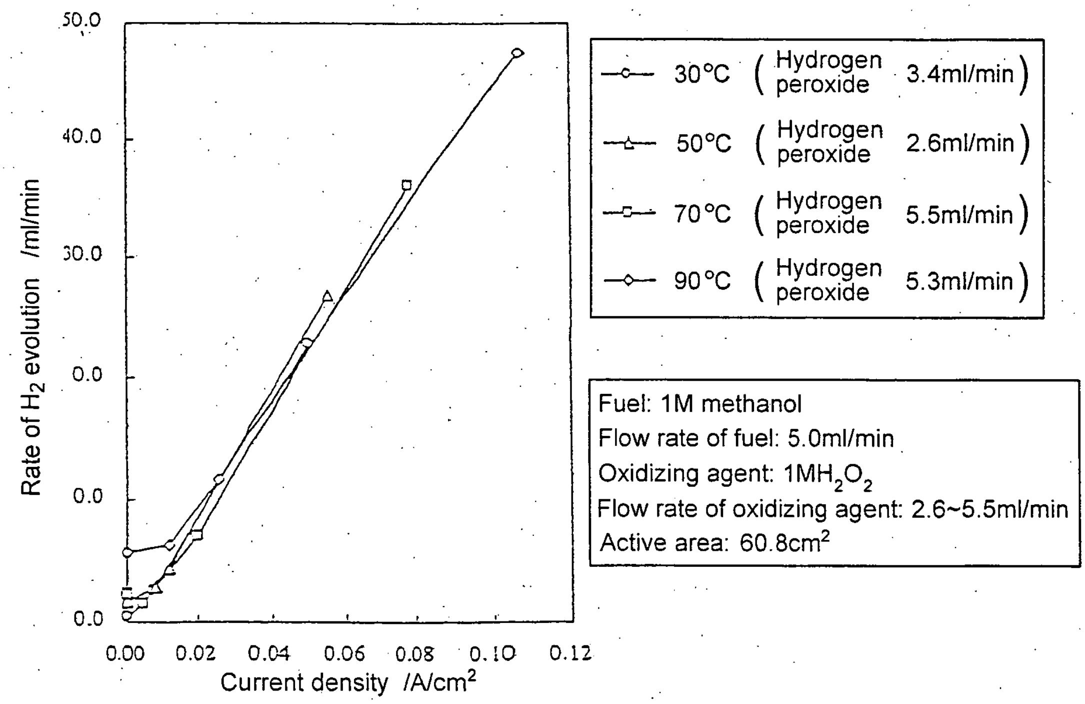
50.0
40.0
30.0
0.0
0.0
0.0
0.00
0.02
0.04
0.06
0.08
0.10
0.12
Current density /A/cm²
Rate of H₂ evolution /ml/min
30°C (Hydrogen peroxide 3.4ml/min)
50°C (Hydrogen peroxide 2.6ml/min)
70°C (Hydrogen peroxide 5.5ml/min)
90°C (Hydrogen peroxide 5.3ml/min)
Fuel: 1M methanol
Flow rate of fuel: 5.0ml/min
Oxidizing agent: 1MH2O2
Flow rate of oxidizing agent: 2.6~5.5ml/min
Active area: 60.8cm²

Fig. 69

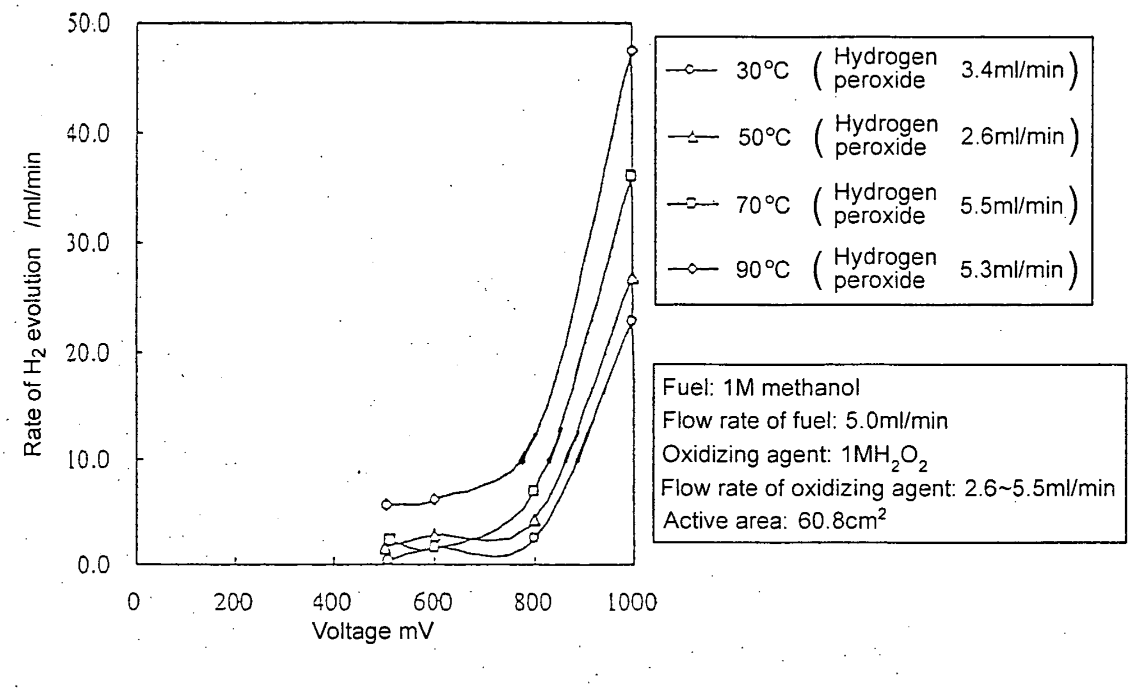
50.0
40.0
30.0
20.0
10.0
0.0
Rate of $H_2$ evolution /ml/min
0
200
400
600
800
1000
Voltage mV
30°C (Hydrogen peroxide 3.4ml/min)
50°C (Hydrogen peroxide 2.6ml/min)
70°C (Hydrogen peroxide 5.5ml/min)
90°C (Hydrogen peroxide 5.3ml/min)
Fuel: 1M methanol
Flow rate of fuel: 5.0ml/min
Oxidizing agent: $1MH_2O_2$
Flow rate of oxidizing agent: 2.6~5.5ml/min
Active area: $60.8cm^2$

Fig. 70

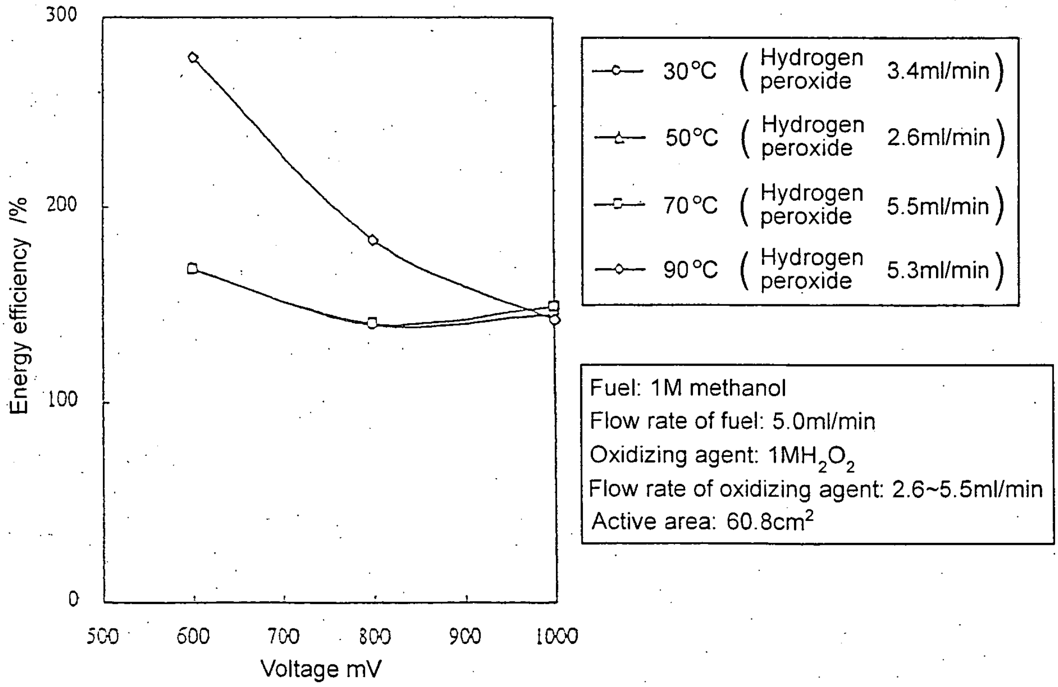
300
200
100
0
Energy efficiency /%
500
600
700
800
900
1000
Voltage mV
30°C (Hydrogen peroxide 3.4ml/min)
50°C (Hydrogen peroxide 2.6ml/min)
70°C (Hydrogen peroxide 5.5ml/min)
90°C (Hydrogen peroxide 5.3ml/min)
Fuel: 1M methanol
Flow rate of fuel: 5.0ml/min
Oxidizing agent: $1MH_2O_2$
Flow rate of oxidizing agent: 2.6~5.5ml/min
Active area: $60.8cm^2$

Fig. 71

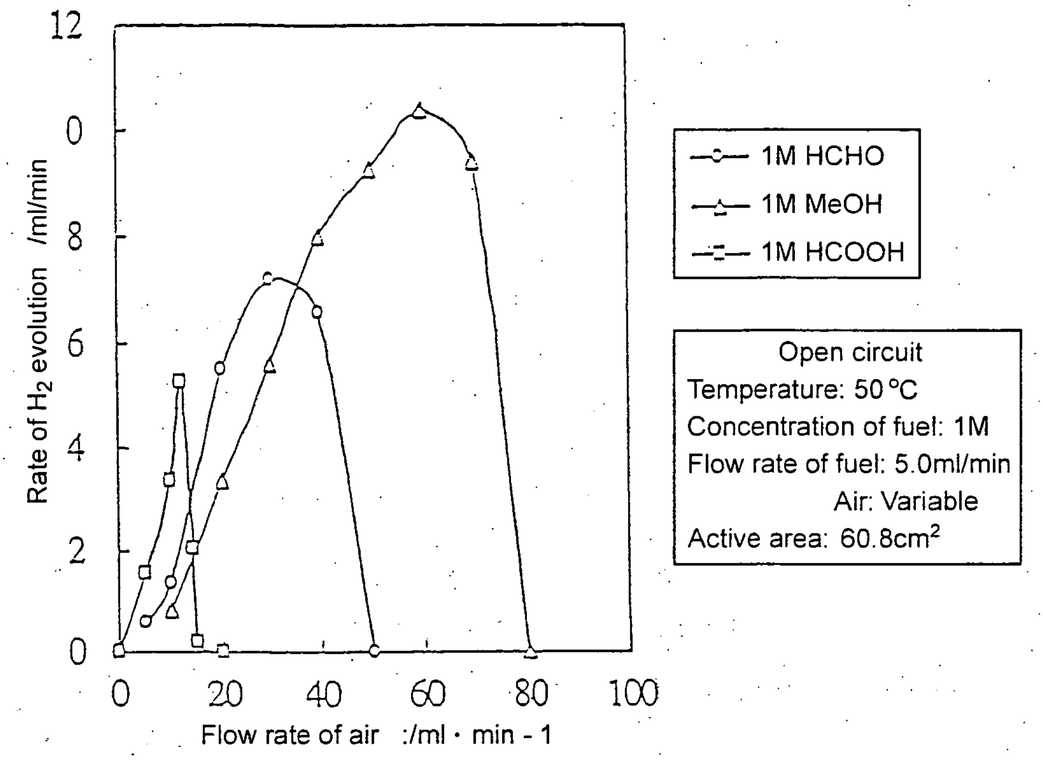
12
0
8
6
4
2
0
Rate of $H_2$ evolution /ml/min
0
20
40
60
80
100
Flow rate of air :/ml · min - 1
1M HCHO
1M MeOH
1M HCOOH
Open circuit
Temperature: 50 °C
Concentration of fuel: 1M
Flow rate of fuel: 5.0ml/min
Air: Variable
Active area: 60.8cm$^2$

Fig. 72

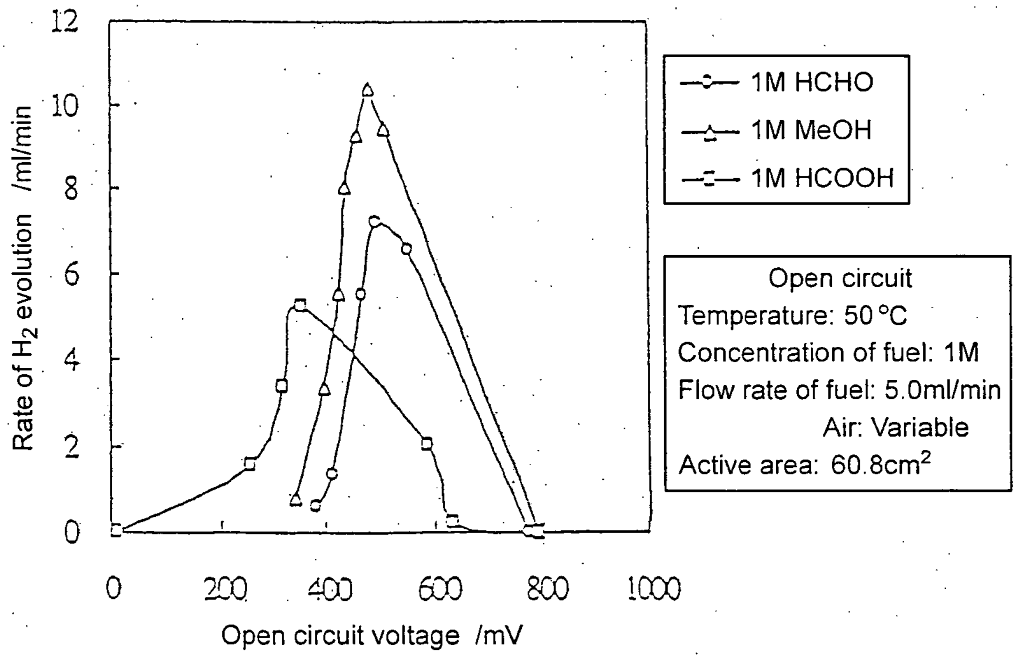
12
10
8
6
4
2
0
Rate of $H_2$ evolution /ml/min
0
200
400
600
800
1000
Open circuit voltage /mV
1M HCHO
1M MeOH
1M HCOOH
Open circuit
Temperature: 50 °C
Concentration of fuel: 1M
Flow rate of fuel: 5.0ml/min
Air: Variable
Active area: 60.8cm$^2$

Fig. 73

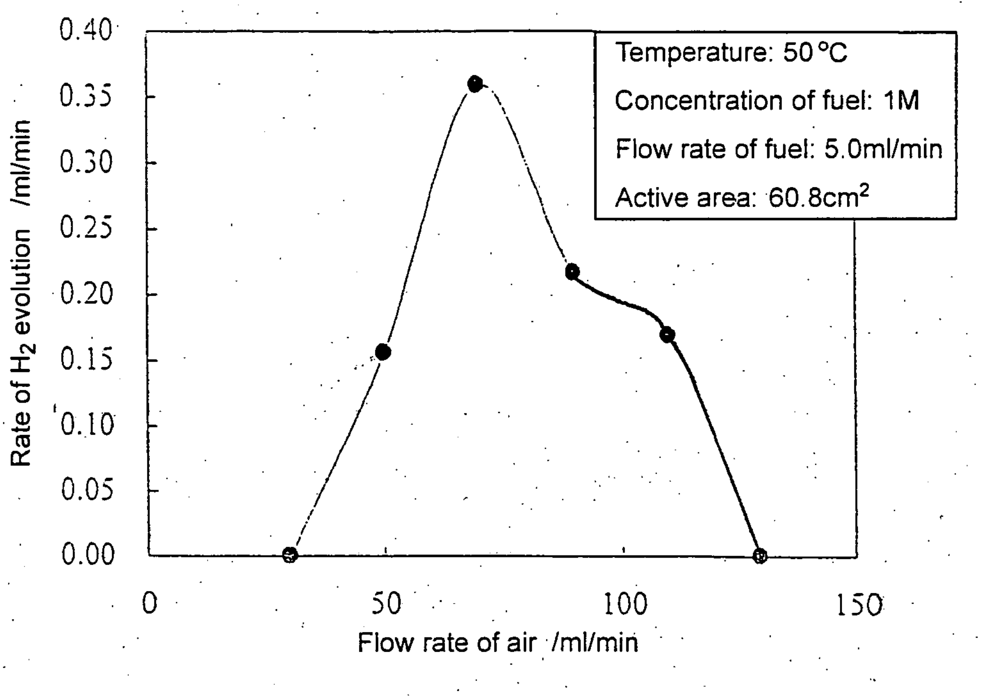
Temperature: 50 °C
Concentration of fuel: 1M
Flow rate of fuel: 5.0ml/min
Active area: 60.8cm²
Rate of H₂ evolution /ml/min
0.40
0.35
0.30
0.25
0.20
0.15
0.10
0.05
0.00
0
50
100
150
Flow rate of air /ml/min

Fig. 74

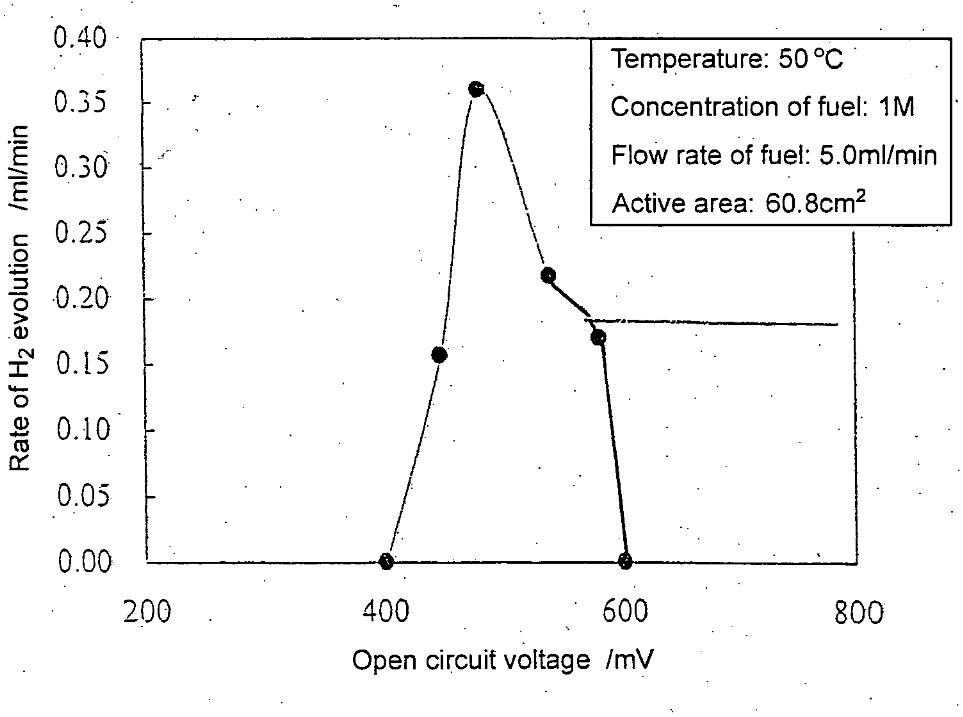
Temperature: 50 °C
Concentration of fuel: 1M
Flow rate of fuel: 5.0ml/min
Active area: 60.8cm²
Rate of H₂ evolution /ml/min
0.40
0.35
0.30
0.25
0.20
0.15
0.10
0.05
0.00
200
400
600
800
Open circuit voltage /mV

**INTERNATIONAL SEARCH REPORT**

International application No.
PCT/JP2006/313528

A. CLASSIFICATION OF SUBJECT MATTER
*C01B3/22*(2006.01)i, *H01M8/06*(2006.01)i

According to International Patent Classification (IPC) or to both national classification and IPC

B. FIELDS SEARCHED

Minimum documentation searched (classification system followed by classification symbols)
C01B3/00, H01M8/06

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)
JSTPlus(JDream2)

C. DOCUMENTS CONSIDERED TO BE RELEVANT

| Category* | Citation of document, with indication, where appropriate, of the relevant passages | Relevant to claim No. |
|---|---|---|
| X<br>A | Q. Ye, "Electrolytic hydrogen evolution in DMFCs induced by oxygen interruptions and its effect on cell performance", Electrochemical and Solid-State Letters, No.8, Vol.4, 2005, p.A211-A214 | 1-8,18-29<br>9-17 |
| P,X | JP 2006-151781 A (Kabushiki Kaisha Jiesu Yuasa Koporashon), 15 June, 2006 (15.06.06), Full descriptions (Family: none) | 1-29 |
| A | JP 3328993 B2 (Sumitomo Electric Industries, Ltd.), 19 July, 2002 (19.07.02), Full descriptions (Family: none) | 1-29 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 31 July, 2006 (31.07.06) | 15 August, 2006 (15.08.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.
PCT/JP2006/313528

C (Continuation). DOCUMENTS CONSIDERED TO BE RELEVANT

| Category* | Citation of document, with indication, where appropriate, of the relevant passages | Relevant to claim No. |
|---|---|---|
| A | JP 2001-297779 A (Matsushita Electric Industrial Co., Ltd.), 26 October, 2001 (26.10.01), Full descriptions & US 2001/33954 A1 | 1-29 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3473900 B
- JP 3328993 B
- JP 3360349 B
- US 6299744 B
- US 6368492 B
- US 6432284 B
- US 6533919 B
- US 20030226763 A
- JP 2001297779 A
- JP 6073582 A
- JP 6073583 A


### Non-patent literature cited in the description


- Development and Practical Applications of Proton Exchange Membrane Fuel cells. Technical Information Institute Co. Ltd, 28 May 1999, 141-166
- *Electrochemical and solid-state Letters,* 2005, vol. 8 (1), A52-A54
- *Electrochemical and Solid-State Letters,* 2005, vol. 8 (4), A211-A214